(19) Europäisches Patentamt / European Patent Office / Office européen des brevets

(11) **EP 1 486 979 B1**

(12) **EUROPEAN PATENT SPECIFICATION**

(45) Date of publication and mention
of the grant of the patent:
**13.06.2012 Bulletin 2012/24**

(21) Application number: **03710396.7**

(22) Date of filing: **17.03.2003**

(51) Int Cl.:
*G11B 27/00* (2006.01)     *G11B 27/034* (2006.01)
*G11B 27/10* (2006.01)     *G11B 20/12* (2006.01)
*G11B 20/10* (2006.01)     *H04N 5/85* (2006.01)
*H04N 5/91* (2006.01)

(86) International application number:
**PCT/JP2003/003210**

(87) International publication number:
**WO 2003/079359 (25.09.2003 Gazette 2003/39)**

(54) **DATA RECORDING METHOD AND DATA RECORDING DEVICE**

DATENAUFZEICHNUNGSVERFAHREN UND DATENAUFZEICHNUNGSEINRICHTUNG

PROCEDE ET DISPOSITIF D'ENREGISTREMENT DE DONNEES

(84) Designated Contracting States:
**DE FR GB**

(30) Priority: **18.03.2002 JP 2002073524**

(43) Date of publication of application:
**15.12.2004 Bulletin 2004/51**

(73) Proprietor: **Sharp Kabushiki Kaisha**
**Osaka-shi, Osaka 545-8522 (JP)**

(72) Inventors:
• **KIYAMA, Jiro**
**Funabashi-shi, Chiba 274-0825 (JP)**
• **SHIMURA, Tomoya**
**Yokohama-shi, Kanagawa 227-0046 (JP)**
• **IWANO, Yuri**
**Chiba-shi, Chiba 266-0005 (JP)**
• **KIZUKI, Hideaki**
**Chiba-shi, Chiba 263-0044 (JP)**
• **YAMAGUCHI, Takayoshi**
**Nagareyama-shi, Chiba 270-0121 (JP)**

(74) Representative: **Brown, Kenneth Richard et al**
**R.G.C. Jenkins & Co**
**26 Caxton Street**
**London SW1H 0RJ (GB)**

(56) References cited:
EP-A- 0 727 906     EP-A- 1 085 515
EP-A- 1 416 489     WO-A-01/10119
WO-A-96/08014     WO-A-99/44202
WO-A-02/077865     WO-A1-01/04893
CA-A1- 2 279 119     JP-A- 9 213 056
JP-A- 9 288 884     JP-A- 11 007 700
JP-A- 11 075 158     JP-A- 11 259 521
JP-A- 2000 021 136     JP-A- 2000 235 780
JP-A- 2000 306 362     JP-A- 2001 243 107
JP-A- 2002 050 131     US-A1- 2002 009 291

**Description**

TECHNICAL FIELD

The present invention relates to a data recording method, data recording device, data recording medium, data reproduction method, and data reproduction device, concerning recording video or audio data to a random-access storage medium such as a hard disk and an optical disk.

BACKGROUND ART

Digital video recording/reproducing devices (hereinafter, video disk recorder) adopting disks as media have become popular. A recording format for such devices is often the QuickTime® file format or the AVI (Audio Video Interleave) file format, in consideration of compatibility with PCs (personal computers).

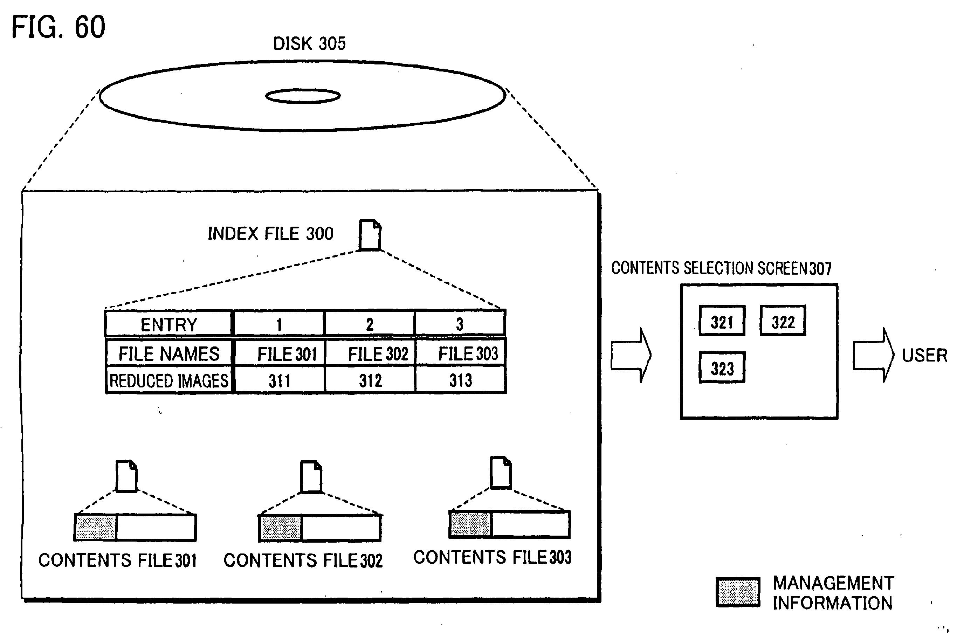

Japanese Laid-Open Patent Application No. 2001-84705 (Tokukai 2001-84705; published on March 30, 2001) discloses a method for managing contents in a disk when the above-mentioned file format for PCs is adopted. Referring to Fig. 60, an outline of this method is given. Files 301 through 303 of a disk 305 correspond to respective scenes or shots being recorded, and each of these files is one QuickTime file (hereinafter, QuickTime movie file).

An index file 300 stores a table of data in the disk 305. There are entries corresponding to the respective QuickTime movie files. Each entry stores sets of reduced image data 311 through 313 representing respective scenes, and the names of files including these scenes.

To display an index to the user, miniature images 321 through 323 produced by decoding the sets of miniature image data 311 through 313 in the entry are caused to appear on a contents selection screen 307. The user then selects a file that he/she wants to reproduce or edit, from these miniature images on the contents selection screen 307. When, for instance, the user selects the miniature image 323 and instructs the reproduction of the same, a file 303 including the contents corresponding to the miniature image 323 is acquired and the reproduction of the contents in the file 303 starts.

The index file 300 includes (i) pointers to respective files storing the contents of the disk 305 and (ii) sets of miniature image data. Thus, the contents selection screen 307 can be shown only by reading out the index file 300 from the disk 305, so that the time required for causing the index display (contents selection screen) to appear on the screen is short. As the contents selection screen 307 is frequently called, this reduction of the time greatly lighten the frustration of the user.

In recent years, the use of write-once optical disks has increased at a faster rate. A typical example of the write-once optical disks is CD-R. Also, DVD-R has dropped in price and become increasingly common. In the situation where the foregoing index file is applied to these write-once optical disk, the following problem arises.

The index file is a file having a property of increasing its size with use. In write-once disks, additional recording to a once-recorded field is impossible. In dealing with a file increasing its size with use, like index file, it is difficult to use the file without a wasted storage space. For example, if a new index file is additionally written each time addition, deletion, change, or the other of an entry occurs with respect to the index file, a large amount of wasted storage space is caused.

The present invention has been attained in view of the above problem, and an object of the present invention is to provide a data recording method which can reduce a wasted storage space in a write-once storage medium.

WO 02/077865 describes a recording device for recording an index file on a recording medium hierarchically containing index data on a file recorded on the recording medium, a recording method, a recording medium, and an electronic camera. The recording device comprises creation means for creating an index film composed of a plurality of regions to which unique identifiers are assigned and recording means for recording the index file.

EP 1 085 515 describes a digital recording apparatus using a disc shaped record medium, that comprises a means for extracting outlined information of each of a plurality of files recorded on the disc shaped record medium, a means for correlating the extracted outlined information and the plurality of files and generating an index file, and a means for recording the index file to a predetermined position of the disc shaped record medium.

DISCLOSURE OF INVENTION

A data recording method of the present invention is set out in claim 1.

A data recording device of the present invention is set out in claim 12.

Preferred features of the invention are set out in the dependent claims.

According to the present invention, at the time of recording of additionally written data, information which manages availability/invalidity of an existing data is recorded, whereby the reuse of the existing data is possible, thus reducing wasted recording space.

Further, according to the present invention, at the time of recording of additionally written data, the same data as the existing data is recorded depending on the attribute of the existing data, whereby it is possible to read out data having a particular attribute at a high speed, thus improving responses to the user.

For a fuller understanding of the nature and advantages of the invention, reference should be made to the ensuing detailed description taken in conjunction with the accompanying drawings.

BRIEF DESCRIPTION OF DRAWINGS

Figure 1 is a block diagram illustrating a schematic configuration of a video disk recorder in an embodiment of the present invention.

Figures 2(a)-2(c) are diagrams illustrating relationships between management information and an AV stream in a QuickTime file format.

Figure 3 is a diagram illustrating an outline of Movie atom in the QuickTime file format.

Figure 4 is a diagram illustrating an outline of Track atom in the QuickTime file format.

Figure 5 is a diagram illustrating a structure of Track header atom in the QuickTime file format.

Figure 6 is a diagram illustrating a structure of Media atom in the QuickTime file format.

Figure 7 is a diagram illustrating a structure of Media information atom in the QuickTime file format.

Figure 8 is a diagram illustrating an example of data management by Sample table atom.

Figure 9 is a diagram illustrating a structure of Sample table atom in the QuickTime file format.

Figure 10 is a diagram illustrating a structure of Edit atom in the QuickTime file format.

Figures 11(a)-(c) are diagrams illustrating an example of reproduction range specification by Edit atom.

Figure 12 is a diagram illustrating a structure of User data atom in the QuickTime file format.

Figure 13 is a diagram illustrating an entire structure of Fragmented movie in the QuickTime file format.

Figure 14 is a diagram illustrating a structure of Movie extends atom in the QuickTime file format.

Figure 15 is a diagram illustrating a structure of Track extends atom in the QuickTime file format.

Figure 16 is a diagram illustrating a structure of Movie fragment atom in the QuickTime file format.

Figure 17 is a diagram illustrating a structure of Movie fragment header atom in the QuickTime file format.

Figure 18 is a diagram illustrating a structure of Track fragment atom in the QuickTime file format.

Figure 19 is a diagram illustrating a structure of Track fragment header atom in the QuickTime file format.

Figure 20 is a diagram illustrating a structure of Track fragment run atom in the QuickTime file format.

Figure 21 is a diagram illustrating a structure of an AV stream in an embodiment of the present invention.

Figure 22 is a diagram illustrating a structure of VU in an embodiment of the present invention.

Figure 23 is a diagram illustrating AV stream management structure by QuickTime in an embodiment of the present invention.

Figure 24 is a block diagram illustrating reference device model in an embodiment of the present invention.

Figures 25(a) and 25(b) are diagrams illustrating a relationship of management information in a UDF.

Figure 26 is a diagram illustrating a relationship of management information in the UDF in a write-once storage medium.

Figure 27 is a diagram illustrating a structure of an AV Index file in First Embodiment of the present invention.

Figure 28 is a diagram illustrating a structure of attribute information in First Embodiment of the present invention.

Figure 29 is a diagram illustrating a structure of flags in First Embodiment of the present invention.

Figure 30 is a flowchart illustrating a flow of entire process in First Embodiment of the present invention.

Figure 31 is a flowchart illustrating a flow of various processes by user instructions in First Embodiment of the present invention.

Figures 32(a) and 32(b) are diagrams illustrating a directory/file structure before update of an AV Index file and a recorded state on a storage medium, respectively, in First Embodiment of the present invention.

Figure 33 is a diagram illustrating an example of an AV Index management table immediately after disk insertion, in First Embodiment of the present invention.

Figures 34(a) and 34(b) are diagrams illustrating an example of a recorded state on the storage medium immediately after recording process is performed, in First Embodiment of the present invention.

Figure 35 is a diagram illustrating an example of an AV Index management table immediately after recording, in First Embodiment of the present invention.

Figure 36 is a diagram illustrating an example of an AV Index management table immediately after entry deletion, in First Embodiment of the present invention.

Figure 37 is a diagram illustrating an example of an AV Index management table immediately after change of entry data, in First Embodiment of the present invention.

Figure 38 is a flowchart illustrating AV Index file update process in First Embodiment of the present invention.

Figure 39 is a diagram illustrating an example of a recorded state on the storage medium after update of the AV Index file in First Embodiment of the present invention.

Figure 40 is a flowchart illustrating AV Index file reading process in First Embodiment of the present invention.

Figure 41 is a diagram illustrating a second structure of attribute information in First Embodiment of the present invention.

Figure 42 is a diagram illustrating a structure of additional management information in Second Embodiment of the present invention.

Figure 43 is a flowchart illustrating AV Index file update process in Second Embodiment of the present invention.

Figure 44 is a diagram illustrating an example of a recorded state on the storage medium after update of the AV Index file in Second Embodiment of the present invention.

Figures 45(a) and 45(b) are diagrams illustrating an example of a recorded state on the storage medium before and after merge of the AV Index file in Second Embodiment of the present invention.

Figure 46 is a flowchart illustrating AV Index file reading process in Second Embodiment of the present invention.

Figure 47 is a diagram illustrating a second structure of flags in Second Embodiment of the present invention.

Figure 48 is a diagram illustrating a structure of the AV Index file in Third Embodiment of the present invention.

Figure 49 is a diagram illustrating an example of a recorded state on the storage medium before update of the AV Index file in Third Embodiment of the present invention.

Figure 50 is a flowchart illustrating AV Index file update process in Third Embodiment of the present invention.

Figures 51 (a) and 51(b) are diagrams illustrating an example of a recorded state on the storage medium after update of the AV Index file in Third Embodiment of the present invention.

Figure 52 is a flowchart illustrating AV Index file reading process in Third Embodiment of the present invention.

Figures 53(a) and 53(b) are diagrams illustrating AV Index file update process (in the case when the variation in the amount of data of Movie atom is an integer multiple of sector) in Fourth Embodiment of the present invention.

Figure 54 is a diagram illustrating a recorded state on the storage medium after update of the AV Index file (in the case when the variation in the amount of data of Movie atom is an integer multiple of sector) in Fourth Embodiment of the present invention.

Figures 55(a) and 55(b) are diagrams illustrating AV Index file update process (in the case when the variation in the amount of data of Movie atom is not an integer multiple of sector) in Fourth Embodiment of the present invention.

Figure 56 is a diagram illustrating a recorded state on the storage medium after update of the AV Index file (in the case when the variation in the amount of data in Movie atom is not an integer multiple of sector) in Fourth Embodiment of the present invention.

Figures 57(a) and 57(b) are diagrams illustrating an example of a relationship between the AV Index file and fields in Fourth Embodiment of the present invention.

Figure 58 is a diagram illustrating an example of a recorded state on the storage medium after update of the AV Index file by a second update method in Fourth Embodiment of the present invention.

Figures 59(a) and 59(b) are diagrams illustrating an example of a recorded state on the storage medium after update of the AV Index file by a third update method in Fourth Embodiment of the present invention.

Figure 60 is a diagram illustrating an index file of a conventional art.

## BEST MODE FOR CARRYING OUT THE INVENTION

The following will describe in detail embodiments of the present invention with reference to the attached drawings. Arrangements shared by all embodiments will be described first, and then descriptions specific to respective embodiments will be given.

<System Configuration>

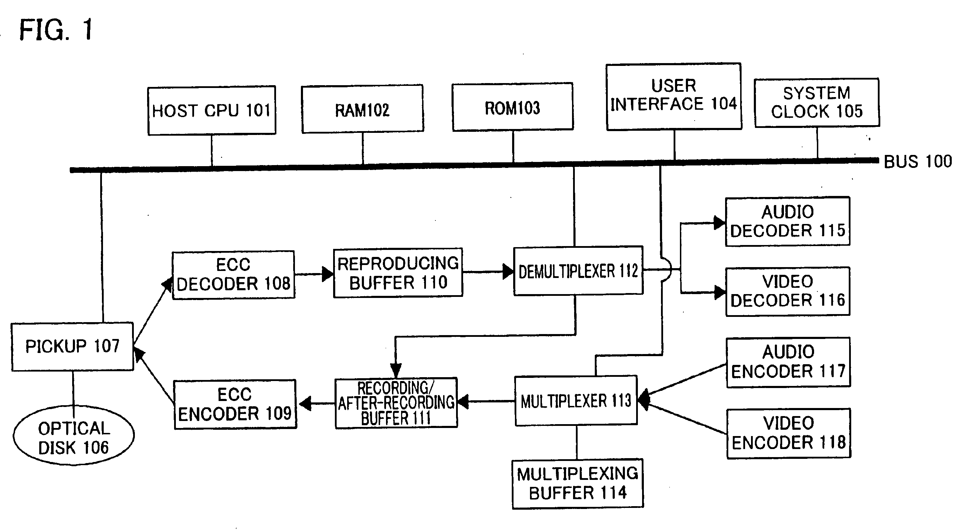

Figure 1 is a schematic diagram of a vide disk recorder shared by all embodiments of the present invention. This device, as illustrated in Figure 1, includes a bus 100, host CPU 101, RAM 102, ROM 103, user interface 104, system clock 105, optical disk 106, pickup 107, ECC (Error Correcting Coding) decoder 108, ECC encoder 109, reproducing buffer 110, recording/after-recording buffer 111, demultiplexer 112, multiplexer 113, multiplexing buffer 114, audio decoder 115, video decoder 116, audio encoder 117, and video encoder 118, and other members which are not illustrated in the figure, such as a camera, microphone, speaker, and display.

Note that, the video disk recorder in Figure 1 is equivalent to "data recording device (recording device)" or "data reproduction device (reproducing device)" recited in the claims.

The host CPU 101 controls, through the bus 100, the demultiplexer 112, the multiplexer 113, and the pickup 107, the audio decoder 115, the video decoder 116, the audio encoder 117, and the video encoder 118 (despite the members 115 through 118 are not connected to the bus 100 in Figure 1).

On the occasion of reproduction, data being read out from the optical disk 106 through the pickup 107 are error-corrected by the ECC decoder 108 and then temporarily held in the reproducing buffer 110. In response to a data transmission request from the audio decoder 115 and the video decoder 116, the host CPU 101 instructs the demultiplexer 112 to distribute sets of data in the reproducing buffer 110 to decoders appropriate to the respective types of data, with reference to management information regarding the data being reproduced.

Note that, the pickup 107, the ECC decoder 108, the reproducing buffer 110, the demultiplexer 112, the audio decoder 115, the video decoder 116, the host CPU 101, and the RAM 102 constitutes "reproducing means" recited in the claims.

In the meantime, on the occasion of recording, data having been compressed and encoded by the audio encoder 117 and the video encoder 118 is supplied to the multiplexing buffer 114, AV-multiplexed by the multiplexer 113, and then supplied to the recording/after-recording buffer 111. The ECC encoder 109 adds an error-correction code to the data held in the recording/after-recording buffer 111, and then the data is recorded on the optical disk 106 by the pickup 107.

Note that, the pickup 107, the ECC encoder 109, the recording/after-recording buffer 111, the multiplexer 113, the multiplexing buffer 114, the audio encoder 117, the video encoder 118, the host CPU 101, and the RAM 102 constitutes "recording means" recited in the claims.

Audio data is encoded with the MPEG-1 Layer-II, while video data is encoded with the MPEG-2. The optical disk 106 is a DVD-R that is a write-once optical disk. One sector is made up of 2048 bytes, and an ECC block is made up of 16 sectors for the sake of error-correction.

<File Format>

The following will describe QuickTime file format used as a format for AV stream management in the present invention. The QuickTime file format is a format for multimedia data management which has been developed by Apple Computer Inc., and has been widely used in the PC world.

The QuickTime file format is made up of data including video data and audio data (also collectively referred to as "media data") and management information. In the present case, the media data and management information are paired up and referred to as QuickTime movie ("movie" for short). The data and management information being paired up may be stored in one file or in different files.

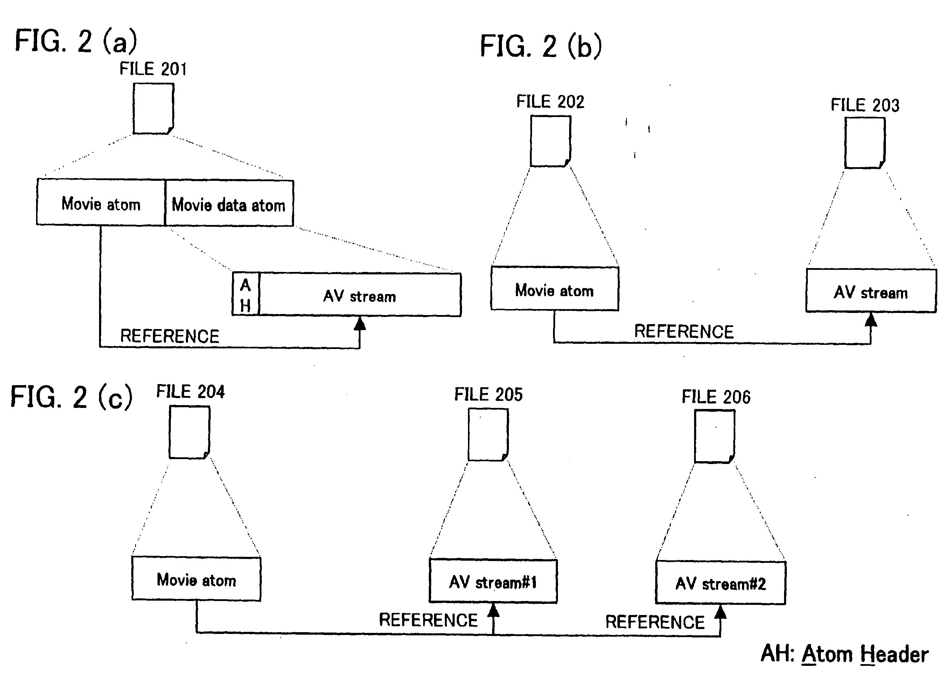

When being stored in one file, the media data and management information are arranged as illustrated in Figure 2(a). Different types of information are stored in respective "atoms" which are based on a common structure. The management information is stored in "Movie atom", while the media data is stored in "Movie data atom". Note that, the management information in the Movie atom includes: a table for identifying a relative location of the media data in the file at a certain time; attribute information of the media data; below-mentioned external reference information; and so on.

When being stored in different files, the management information and media data are arranged as shown in Figure 2(b). In this case, while the management information is stored in the Movie atom, the media data is not necessarily stored in an atom. This condition is described as the Movie atom "externally refers to" the file storing the media data.

As illustrated in Figure 2(c), it is possible to externally refer to a plurality of AV stream files. This makes it possible to realize "nonlinear editing", i.e. "nondestructive editing" which enables the user to apparently carry out editing without changing the locations of AV streams.

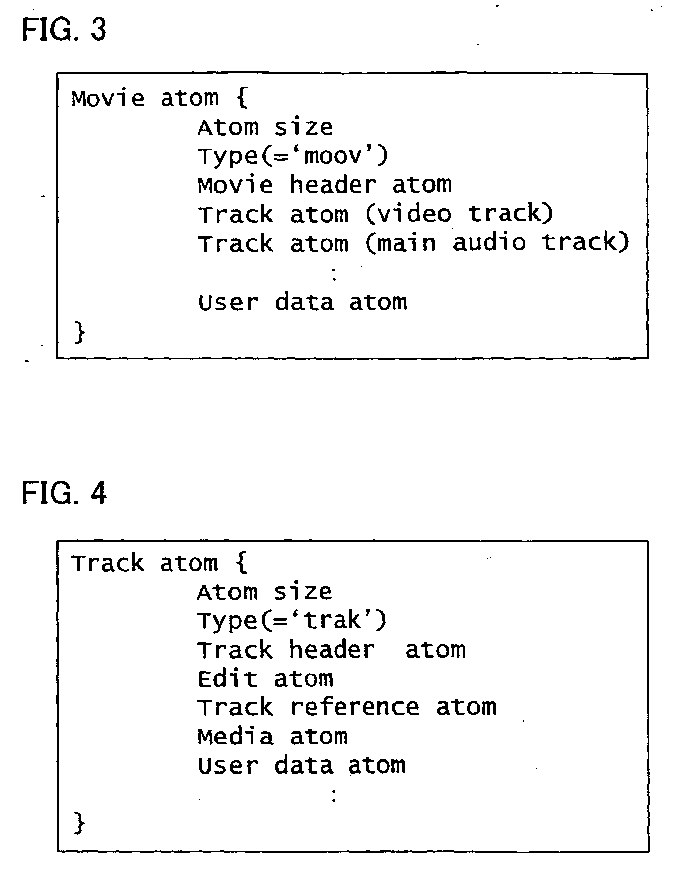

Now, a format of management information in QuickTime will be described with reference to Figures 3 through 12. First, "atom", which is a common information storing format, is described. At the head of an atom, "Atom size" indicating the size of the atom and "Type" indicating the type of the atom always exist. Four characters are given to each Type, e.g. 'moov' for the Movie atom and 'mdat' for the Movie data atom. The Atom size and Type at the top of the atom are collectively referred to as "atom header".

Each atom can include another atom. That is, atoms are arranged hierarchically. Figure 3 illustrates a structure of the Movie atom. "Movie header atom" manages overall attribute of the movie managed by the Movie atom. "Track atom" stores therein information concerning tracks such as a video track and an audio track in the movie. "User data atom" is a user-defined atom.

Figure 4 illustrates a structure of the Track atom. "Track header atom" manages overall attribute of the track. "Edit atom" manages which part of the media data is reproduced at which timing of the movie. "Track reference atom" manages the relationship between the own track and another track. "Media atom" manages data such as actual video data and audio data.

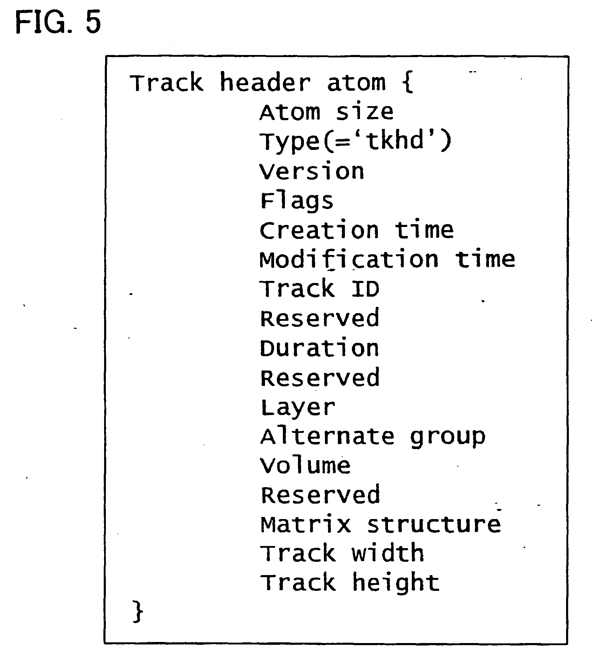

Figure 5 illustrates a structure of Track header atom. Note that, descriptions are given only to those required for the discussion below. "Flags" is a collection of flags that indicate attributes. A major example of such flag include "Track enabled flag". When this flag is 1, the track having the flag is reproduced. On the other hand, when the flag is 0, the track is not reproduced. "Layer" indicates a spatial priority of the track having the Layer. When there are a plurality of tracks for displaying an image, a track having a Layer with smaller value comes in front.

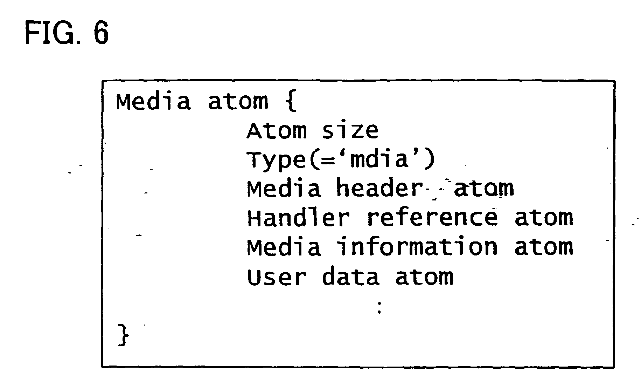

Figure 6 illustrates a structure of Media atom. "Media header atom" manages overall attribute and the like concerning media data managed by the Media atom. "Handler reference atom" stores therein information indicating which decoder decodes media data. "Media information atom" manages attribute information peculiar to each video/audio media data.

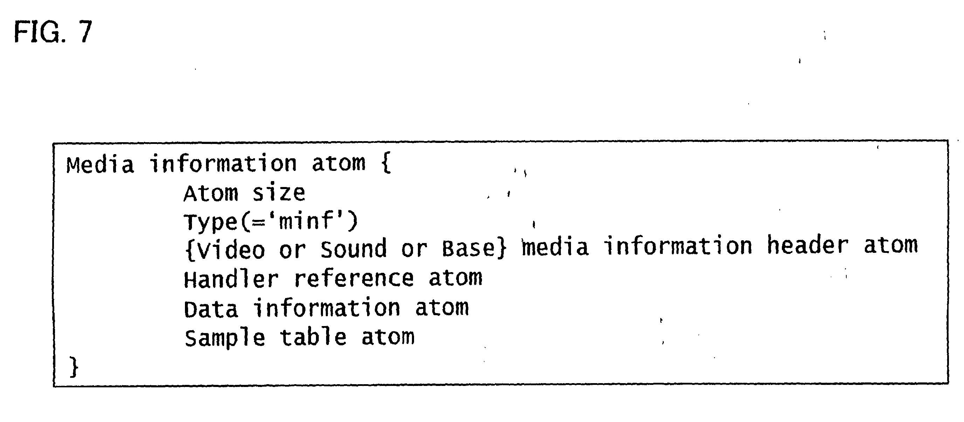

Figure 7 illustrates a structure of Media information atom. "Media information header atom" manages attribute information peculiar to each video/audio media data. "Handler reference atom" has already been described in association with the Media atom. "Data information atom" includes "Data reference atom" which manages the name of a file including media data to which the QuickTime movie refers. "Sample table atom" manages the size of data, reproduction time, and others.

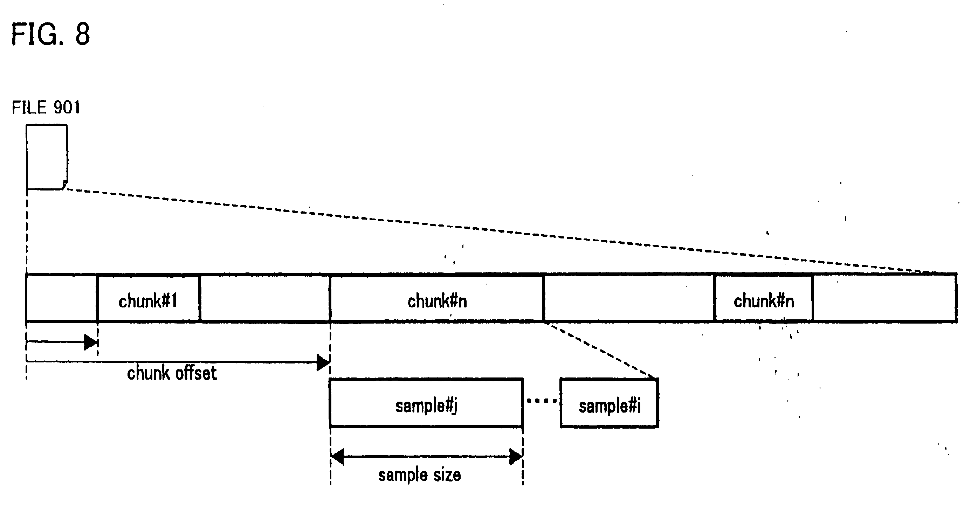

Next, how the Sample table atom is structured will be described. Before the description, a method of managing data in QuickTime will be described with reference to Figure 8. In QuickTime, a minimum unit of data (e.g. video frame) is termed "sample". For each track, samples are assigned numbers (sample numbers) beginning from 1, which indicate the order of reproduction.

Also, in the QuickTime format, the reproduction time and data size of each sample are in control. A field in a file, in which samples belonging to one track are successively provided in the order of reproduction, is termed "chunk". Chunks are also assigned numbers beginning from 1, which indicate the order of reproduction.

In the QuickTime format, moreover, the address of each chunk, the address being counted from the head of the file, and the number of samples in each chunk are in control. In accordance with such information, the location of a sample corresponding to a particular time can be figured out.

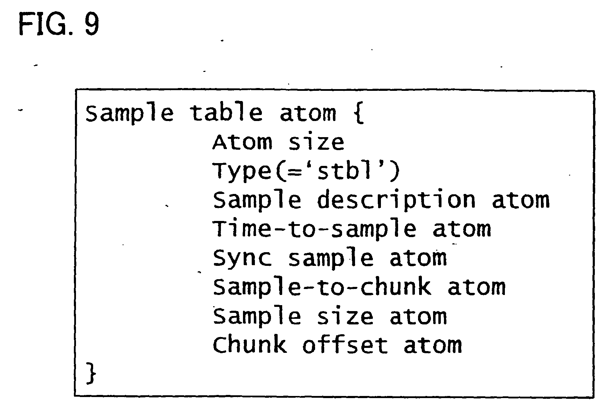

Figure 9 illustrates a structure of the Sample table atom. A Sample description atom manages a Data format of each chunk, an Index of the chunk of the file in which the sample is stored, and others. A Time-to-sample atom manages reproduction time of each sample.

"Sync sample atom" manages samples that are ready for being decoded in all the samples. "Sample-to-chunk atom" manages the number of samples included in each chunk. "Sample size atom" manages the size of each sample. "Chunk offset atom" manages the address of each chunk, the address being counted from the head of the file.

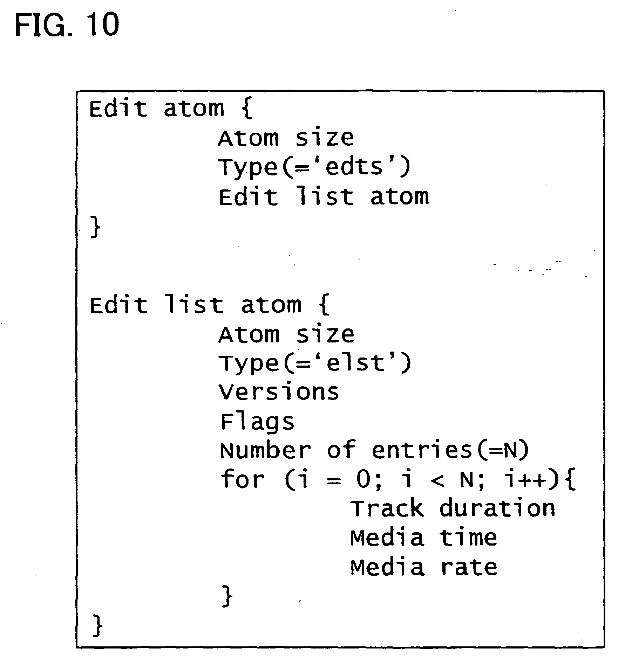

"Edit atom", as illustrated in Figure 10, includes one "Edit list atom". This Edit list atom has entries in each of which values of "Track duration", "Media time", and "Media rate" are provided. The number of entries is specified by "Number of entries". The entries correspond to fields which are successively reproduced on the track, and the order of entries correspond to the order of reproduction of the fields.

The Track duration indicates reproduction time of a field on the track, the field being managed by the entry. The Media time indicates the location of the head of the filed on the media data. The Media rate indicates the speed of reproducing the field. Note that, when the Media time is -1, the reproduction of samples on the track is paused for the Track duration of the entry. This field is termed "empty edit".

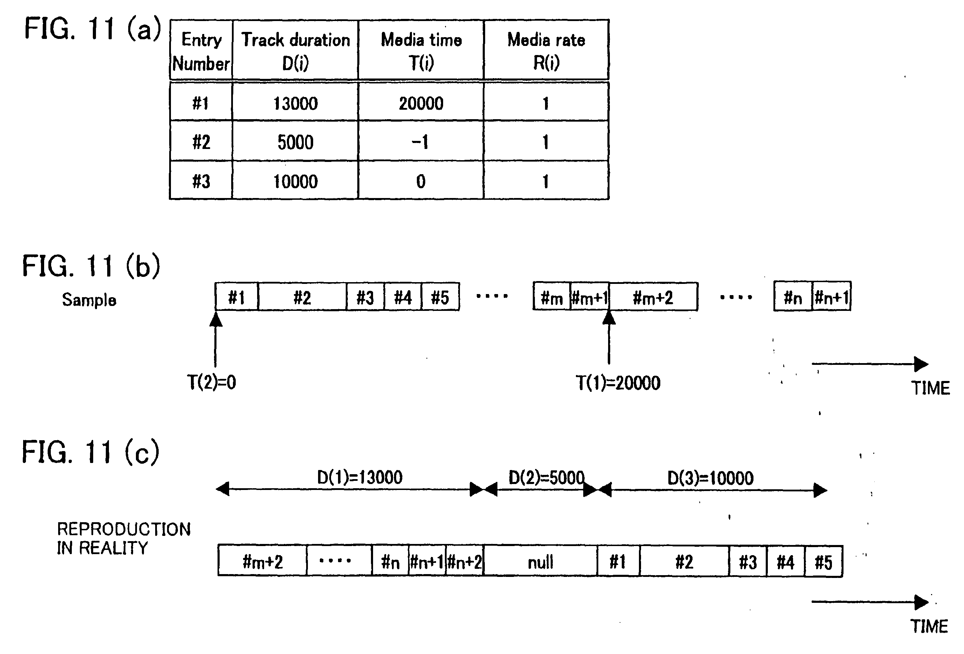

Figure 11(a)-(c) illustrates an example illustrating how the Edit list is used. In the present case, it is assumed that the contents of the Edit list atom are as illustrated in Figure 11(a), and the structure of a sample is as illustrated in Figure 11(b). Also, it is assumed that the Track duration of the i-th entry is D(i), the Media time of the i-th entry is T(i), and the Media rate of the i-th entry is R(i). The reproduction of samples is in reality carried out in the order illustrated in Figure 11(c). These assumptions are now briefly described.

First, in the entry #1, the Track duration is 13000, the Media time is 20000, and the Media rate is 1. Thus, in the field from the head of the track to 13000, the field from the time 20000 to the time 33000 in the sample is reproduced. Next, in the entry #2, the Track duration is 5000 and the Media time is -1. Thus, in the field from the time 13000 to the time 18000 in the track, no reproduction is carried out.

At the end, in the entry #3, the Track duration is 10000, the Media time is 0, and the Media rate is 1. Thus, from the time 18000 to the time 28000 of the track, the field from the time 0 to the time 10000 in the sample is reproduced.

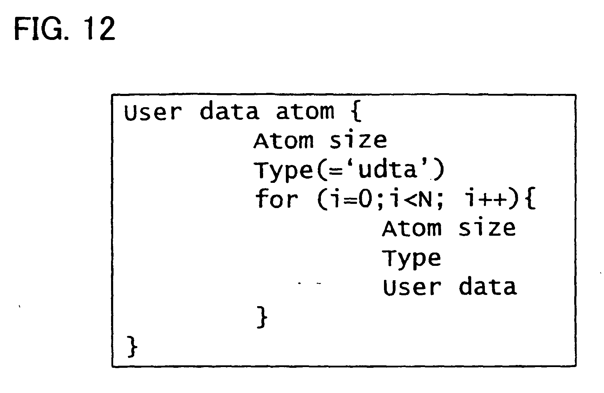

Figure 12 illustrates a structure of User data atom. This atom can store therein an arbitrary number of sets of original information which are not defined by the QuickTime format. One set of original information is managed by one entry, and one entry is made up of "Size", "Type", and "User data". The Size indicates the sizes of the entry itself, the Type indicates identification information for distinguishing between the sets of original information, and the User data indicates actual data.

Next, the following will describe "Fragmented Movie" that is a concept introduced to respond to power shutdown or others caused during recording. The Fragmented movie is a concept introduced in Motion JPEG2000 that is one application of the QuickTime format, and the Fragmented movie can manage information equivalent to the foregoing Sample table atom for each fragment AV stream. The Motion JPEG2000 normally uses the term "box", instead of "atom". However, the following description will use the term "atom" for uniformity.

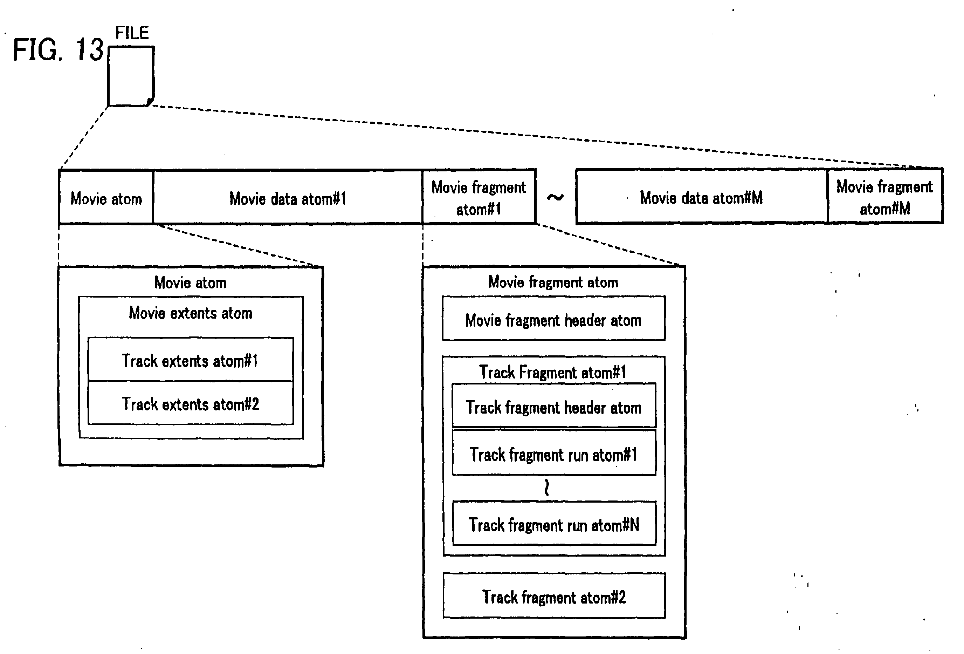

Figure 13 illustrates overall structure of a QuickTime file in which the Fragmented movie is introduced. At the head of the QuickTime file, provided is "Movie atom" that manages information common to the entire file. Following the Movie atom, "Movie data atom" that stores therein a fragment AV stream and "Movie fragment atom" that manages an address, size, reproduction time, and others of each sample making up the fragment AV stream data are provided in an alternating manner. Note that, the AV stream data may exist in other file, as with a normal QuickTime file.

Recording in this order can minimize damage caused by power shutdown during recording. The Movie atom includes "Movie extends atom" for indicating that the QuickTime movie is a Fragmented movie. The Movie extends atom stores therein a default value for each track included in the QuickTime movie.

Further, the Movie fragment atom includes management information regarding the fragment AV stream managed by the Movie fragment atom. The management information includes: "Movie fragment header atom" which stores therein information regarding the entire fragment AV stream managed by the Movie fragment atom; and "Track fragment atom" which stores therein information regarding each track in the fragment AV stream.

The Track fragment atom includes: "Track fragment header atom" that stores therein information regarding fragment AV stream belonging to the track managed by the Track fragment atom; and "Track fragment run atom" that manages logical successive fields (Track run) making up the fragment AV stream belonging to the track. The following will describe each of the atoms in detail.

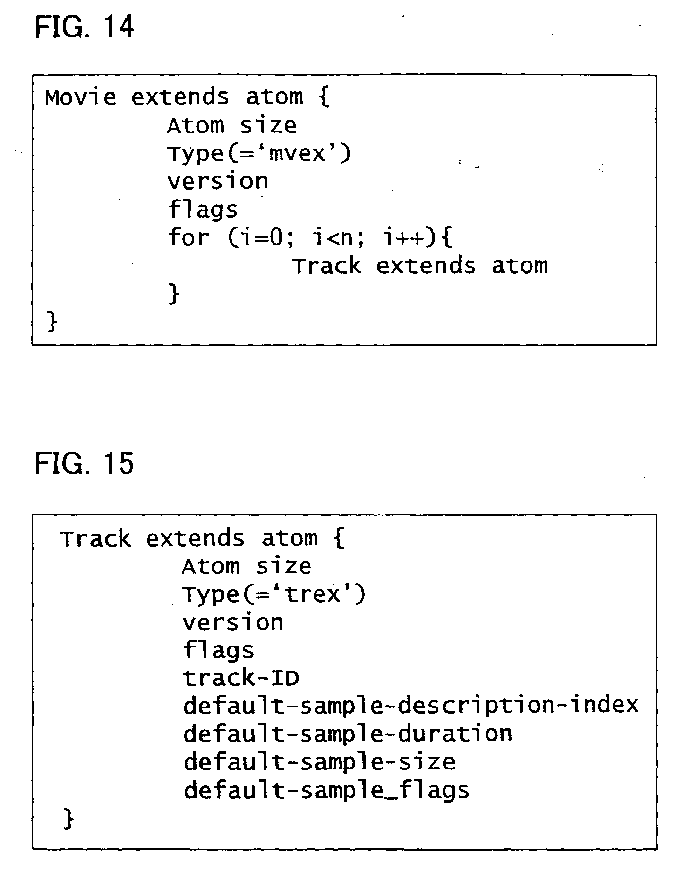

Figure 14 illustrates a structure of the Movie extends atom. The Movie extends atom, as described previously, has a function of indicating that the QuickTime movie including this atom is a Fragmented movie.

Figure 15 illustrates a structure of "Track extends atom". The Track extends atom exists to determine a default value of a sample in each track included in this QuickTime movie. "Track ID" refers to track ID in a track defined in the Movie atom. A field that begins with "default-sample-" determines a default value of "track fragment" managed by this atom.

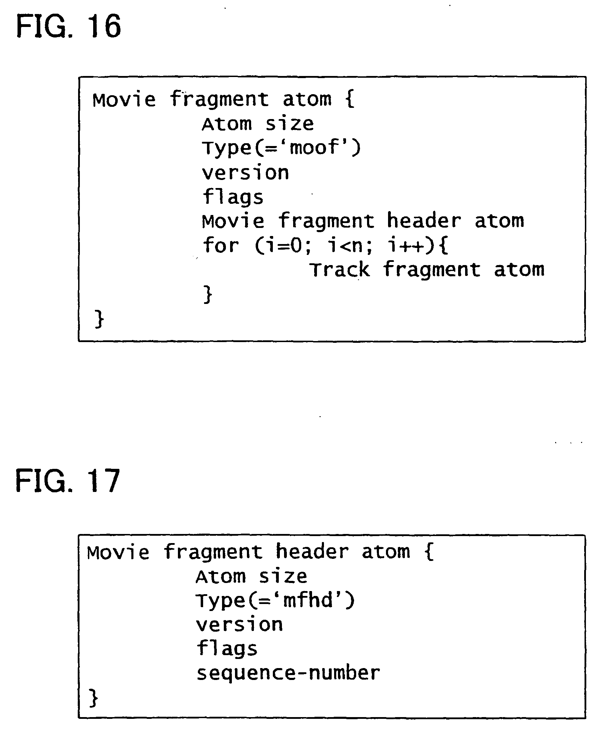

Figure 16 illustrates a structure of the Movie fragment atom. The Movie fragment atom is management information sequentially recorded during recording. This atom, as described previously, includes the Movie fragment header atom and the Track fragment atom that are atoms which store sets of actual information regarding the Movie fragment managed by the Movie fragment atom.

Figure 17 illustrates a structure of the Movie fragment header atom. What information the Movie fragment header atom mainly stores therein is "sequence-number". The sequence-number indicates the sequence from the head of the Movie fragment managed by the Movie fragment atom including the Movie fragment header atom.

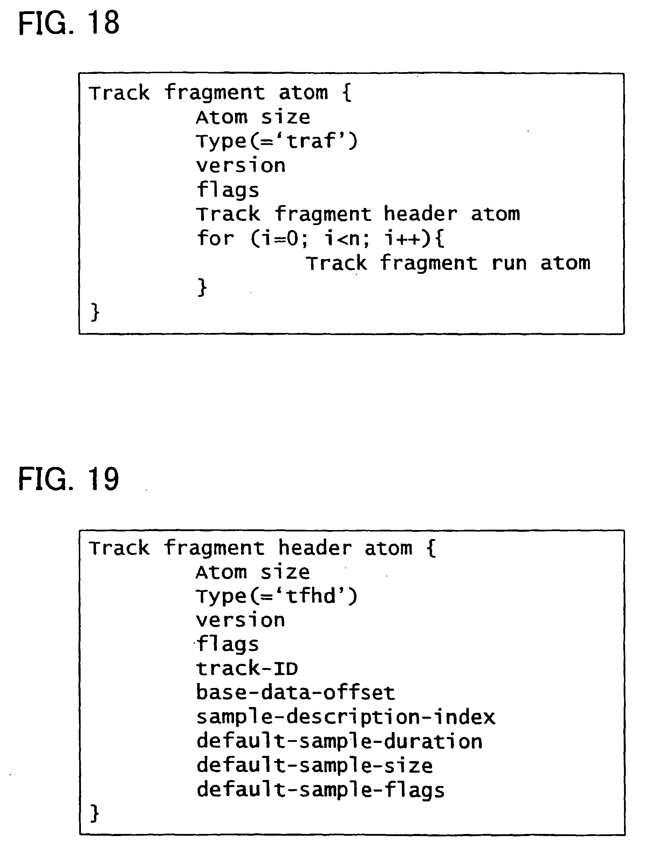

Figure 18 illustrates a structure of the Track fragment atom. The Track fragment atom stores therein: the Track fragment header atom and the Track fragment run atom that are sets of management information regarding samples of a particular track included in the Movie fragment.

Figure 19 illustrates a structure of the Track fragment header atom. This atom stores therein a default value and others for a sample of a particular track included in the Movie fragment. "Track-ID" indicates correspondence to track ID of a track defined in the Movie atom. "Sample-description-index" is an index number of a sample description table referenced by a sample managed by this atom. Each field that begins with "default-sample" is a default value of a sample managed by this atom.

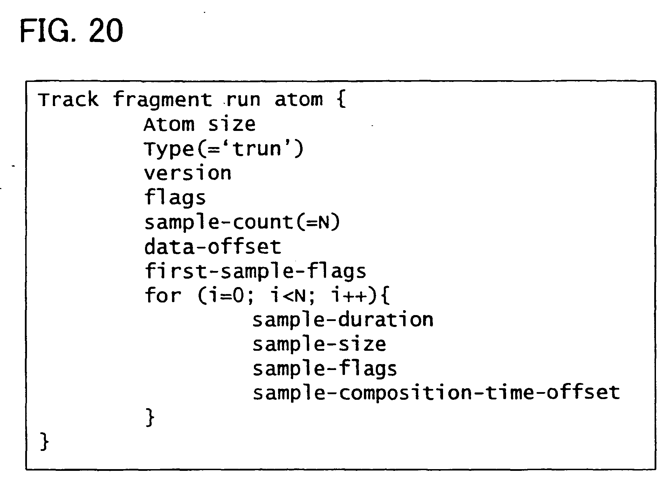

Figure 20 illustrates a structure of the Track fragment run atom. This atom stores therein sets of management information of respective samples and successive fields, termed Track run, managed by the Track fragment run atom. "Sample-count" indicates the number of samples included in the Track run. "Data-offset" indicates an offset value of the Track run from "base-data-offset". A field that begins with "sample-" stores therein a value such as reproduction time of a sample managed by the Track fragment run atom. Note that, when the value is equal to the foregoing default value, this filed is omitted, which enables data size reduction.

<Structure of AV Stream>

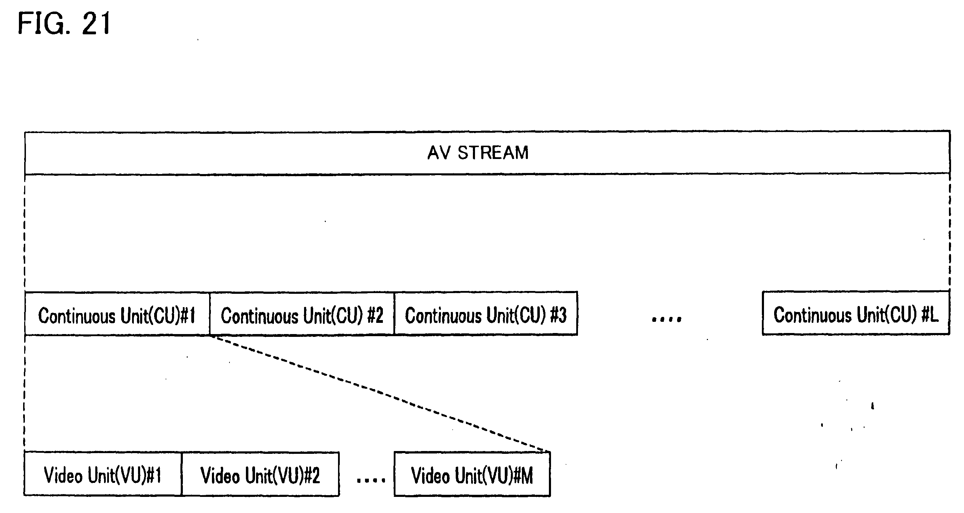

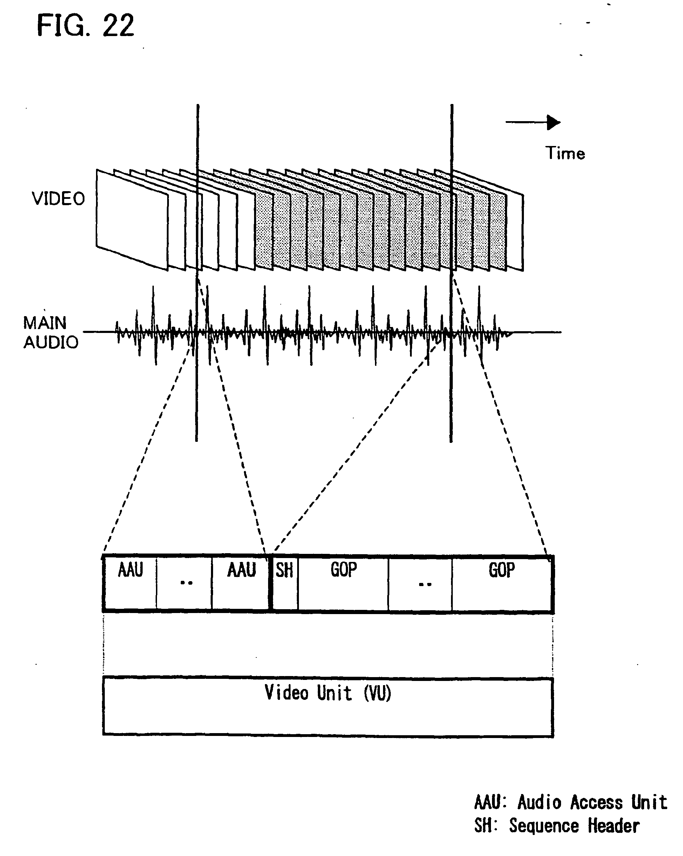

The following will describe a structure of an AV stream which is common to all embodiments of the present invention with reference to Figures 21 and 22. One AV stream is made up of an integer number of Continuous Units (CU). The CU is a unit for sequential recording on the disk. The length of the CU is determined in such a manner as to assure seamless reproduction (images and sounds are reproduced without interruption) and real-time after-recording (sounds are recorded while the images to which the sounds are after-recorded are seamlessly reproduced) in whatever manner the CUs constituting the AV stream are provided on the disk. This determination of the length will be described later.

One CU is made up of integer number of Video Units (VU). The VU is a minimum unit that can be reproduced by itself. This allows the VU to be an entry point of the reproduction.

Figure 22 illustrates a structure of the VU. One VU is made up of: integer number of GOPs (Group Of Pictures) each storing video data for about one second; and integer number of AAUs (Audio Access Units) each storing main audio data reproduced concurrently with the corresponding video data.

Note that, the GOP is a unit of video compression under the MPEG-2 video standard and is made up of a plurality of video frames (typically, about 15 frames). The AAU is a unit of audio compression under the MPEG-1 Layer-II standard, and is made up of 1152 audio wave sample points. When a sampling frequency is 48kHz, a reproduction time per AAU is 0.024 second. In the VU, the AAU and the GOP are provided in this order in order to reduce the delay required for carrying out audio/video synchronous reproduction.

To realize the reproduction of each VU by itself, "Sequence Header" (SH) is provided at the head of each set of video data in the VU. The reproduction time of the VU is defined by the multiplication of the number of video frames included in the VU by the cycle of the video frames.

<Method of Management AV Stream>

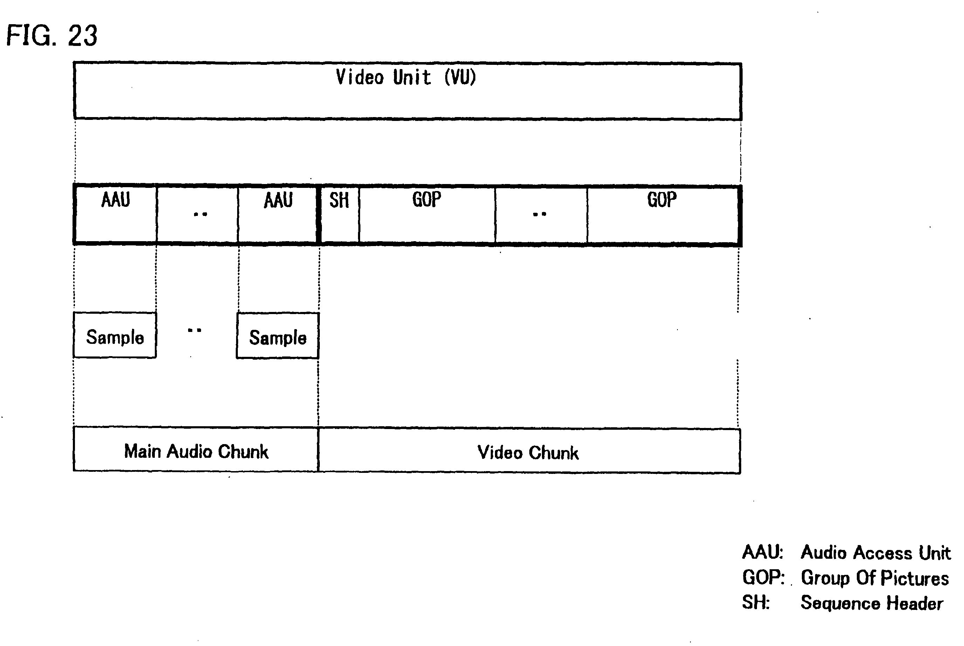

A method of managing the AV stream is based on the foregoing QuickTime file format. Figure 23 illustrates how the AV stream is managed. In the video track, the management is carried out in such a manner that one video frame is dealt with as one sample, and a series of GOPs in the VU is dealt with as one chunk. In the main audio track, meanwhile, the management is carried out in such a manner that one AAU is dealt with as one sample and a series of AAUs in the VU is dealt with as one chunk.

<Method of Determining CU>

Next, how the CU is determined is described. According to this method, one device (reference device model) is assumed as a reference, and keeping this assumption in mind, a unit for sequential recording is determined in such a manner as not to interrupt the seamless reproduction.

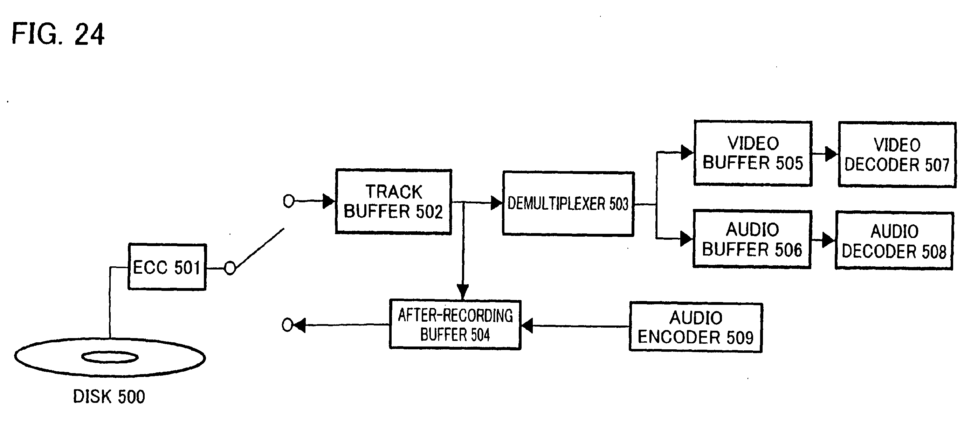

First, the reference device model will be described with reference to Figure 24. The reference device model is made up of: one pickup; ECC encoder/decoder 501 connected to the pickup; a track buffer 502, a demultiplexer 503, an after-recording buffer 504, an audio encoder 509, a video buffer 505, an audio buffer 506, a video decoder 507, and an audio decoder 508.

It is assumed here that seamless reproduction in the present model is assured on the condition that, at the start of decoding the VU, at least one VU exists on the track buffer 502. The speed of inputting audio frame data to the ECC encoder 501 and the speed of outputting the data from the ECC decoder 501 are both determined as Rs.

Moreover, the maximum period for pausing the reading and recording carried out by accessing is determined as Ta. Further, a period required for a short access (about 100 tracks) is determined as Tk. Note that, each of these periods includes a period for seeking, a period for waiting for the rotation, and a period from the access to the output of data which is initially read out from the disk, the data being outputted from the ECC. In the present embodiment, In the present embodiment, Rs = 20Mbps, Ta = 1 second, and Tk = 0.2 second.

When the reproduction is carried out using the above-described reference device model, it is possible to assure that there is no underflow of the track buffer 502, if the following condition is met.

Before describing the condition, the definitions of symbols are given as follows: The i-th successive field constituting the AV stream is C#i, and the reproduction time included in the C#i is Tc(i). Tc(i) is an aggregate of the reproduction times of the VUs whose heads are included in the C#i. Also, a period of time for accessing from the C#i to the C#i+1 is Ta.

Furthermore, a period of time of reading out VUs corresponding to the reproduction time Tc(i) is Tr(i). With these symbols in mind, the condition with which the underflow of the track buffer 502 does not occur is represented by the following formula for an arbitrary C#i, provided that the maximum reading time including the jumping between discrete sets of data is Tr(i).

$$\mathrm{Tc(i) \geqq Tr(i)+Ta \quad <Formula\ 1>}$$

This is because, this formula is a sufficient condition to meet the following sufficient condition for seamless reproduction.

$$\Sigma_i \mathrm{Tc(i)} \geq \Sigma_i (\mathrm{Tr(i)+Ta})$$

Substituting Tr(i)=Tc(i)x(Rv+Ra)/Rs for Tr(i) in Formula 1 and solving the formula for Tc(i), the following condition of Tc(i), which can assure the seamless reproduction, is obtained.

$$\mathrm{Tc(i) \geq (Ta \times Rs)/(Rs-Rv-Ra) \quad <Formula\ 2>}$$

In other words, the seamless reproduction is assured if the aggregate of the VUs whose headers are included in the respective successive fields meets the formula above. On this occasion, it is possible to set a limitation in such a manner as to cause the respective successive fields include complete groups of VUs in which the total reproduction times meet the formula above.

In the automatically-divided movie file, it is also necessary to meet Formula 2. However, the first CU of the first automatically-divided movie and the last CU of the last automatically-divided movie do not necessarily meet Formula 2, because of the following reasons: The first CU can be compensated by causing the start of the reproduction to be later than the start of reading out data from the storage medium. Meanwhile, regarding the last CU, it is unnecessary to care about the successive reproduction as no data follows this CU. Loosening the conditions with regard to the first and last CUs, it is possible to effectively utilize free areas which are short.

<File System>

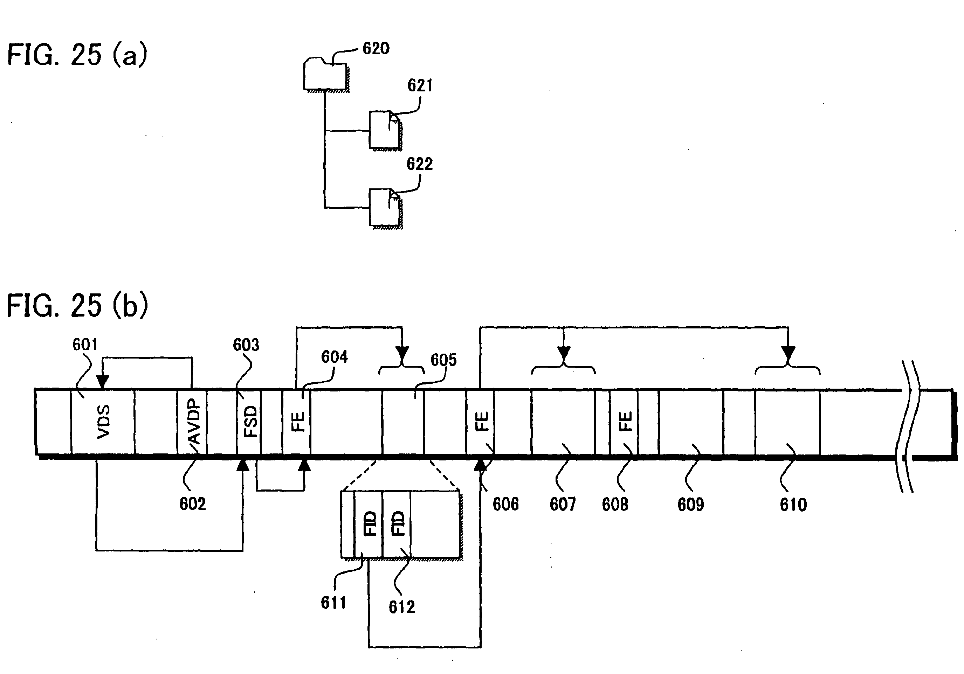

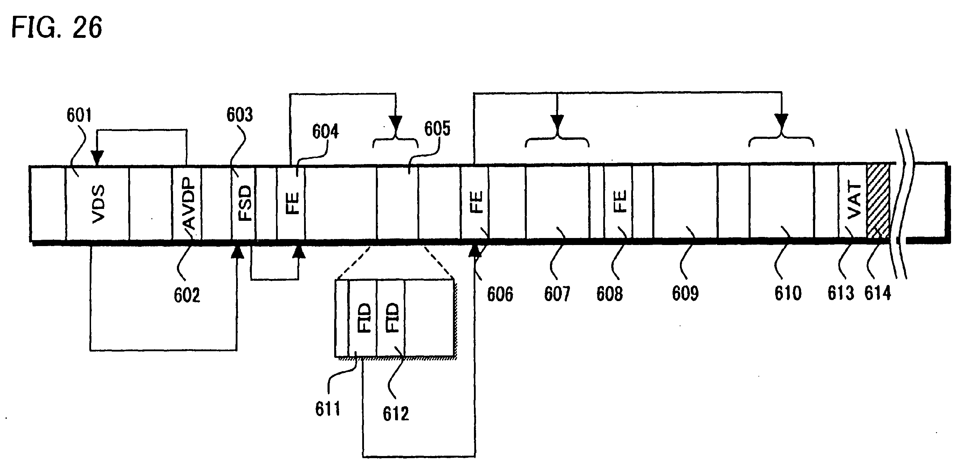

The following will describe a UDF (Universal Disk Format) which is a format of a file system adopted in the descriptions of the present invention with reference to Figures 25(a)-(b) and Figure 26. Figure 25(b) illustrates an example of recording a directory/file structure illustrated in Figure 25(a) using the UDF. An AVDP 602 in Figures 25(b) and Figure 26 is short for Anchor Volume Descriptor Pointer, is equivalent to an entry point for looking for management information of the UDF, and is normally recorded at the 256th sector, the N-th sector, or the N-256th sector (N is maximum logical sector number). A VDS 601 is short for Volume Descriptor Sequence and stores therein management information on a volume which is an area managed by the UDF. Typically, one volume exists in one disk and includes one partition therein. A FSD 603 is short for File Set Descriptor, and one FSD exists in the partition. Positional information in the partition is represented by a logical block number corresponding to a sector number from the head of the partition. Note that, one logical block corresponds to one sector.

The FSD 603 includes positional information (composed of a logical block number and the number of logical blocks and termed "extent") of a FE 604 that is a File Entry (FE) of a root directory. The FE manages a group of extents, and the FE rewrites, adds, and deletes the extents so that the sequence of actual sets of data making up a file can be changed, and data can be inserted and deleted. The FE 604 manages a field 605 which stores therein a collection of File Identifier Descriptors (FIDs). The File Identifier Descriptor (FID) stores therein names of files and directories under the root director, and others. A FID 611 and a FID612 in the field 605 includes sets of positional information of a FE 606 and a FE 608, respectively. The FE 606 and the FE 608 manage file names of a file 621 and a file 622, respectively, and further manages a collection of extents. The FE 606 manages, as extents, a field 607 and a field 610 both of which are fields making up actual data of the file 621. In the present case, for access to actual data of the file 621, links may be followed in the following order: the AVDP 602, the VDS 601, the FSD 603, the FE 604, the FID 611, the FE 606, the field 607 and the field 610.

Next, the following will describe the UDF supporting for a write-once disk with reference to Figure 26. Figure 26 is different from Figure 25(b) in that a VAT (Virtual Allocation Table) 613 and a last additional writing end field 614 are added. The VAT is a translation table of addresses indicating respective FEs, and the use of this table allows a write-once disk incapable of rewriting to realize apparent rewriting. The last additional writing end field 614 is a field for indicating where the previous additional writing has ended, and is termed "Border out" for DVD-R. In the case of DVD-R, the VAT is recorded immediately in front of the Border out. On the occasion of reproduction, the Border out is first detected, and the VAT immediately in front of the Border out is read out, so that a translation table of addresses indicating respective FEs is established on memory, and thus access to an actual FE on the disk is carried out via the translation table. Therefore, apparent rewriting of a file can be realized in the following manner: data for update is additionally written, an extent of the data is added to a FE for a file to be rewritten so that a new FE is generated, the new FE is additionally written into the disk, and such a mapping that the FE of the file is replaced by the new FE is registered in the VAT. Similarly, addition and deletion of a file can be realized in such a manner that a new FE which manages an extent of collection of FIDs is additionally written, and such a mapping that a previous FE is replaced by the new FE is registered in the VAT.

[First Embodiment]

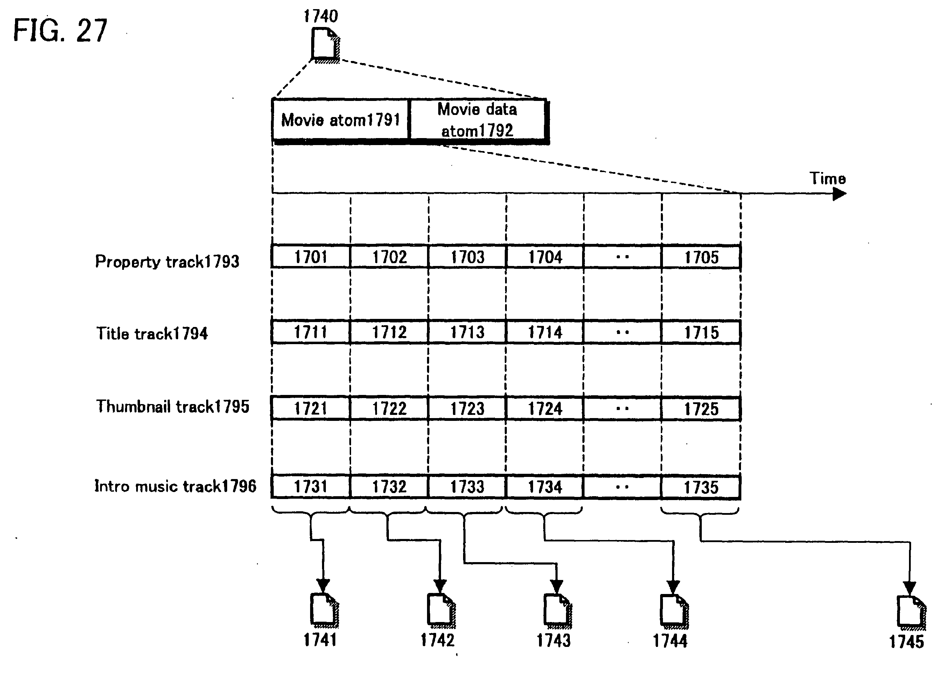

The following will describe first embodiment of the present invention with reference to Figures 27 through 41.

<Management Information Format>

As described above, to manage various types of files (hereinafter referred to as "AV files") in a disk, e.g. QuickTime movies and still image data, a special QuickTime movie file termed an AV Index file 1740 is provided in the disk. Figure 27 illustrates a structure of the AV Index file 1740 in the present embodiment. As with a usual QuickTime movie file, the AV Index file 1740 is made up of Movie atom 1791 that is management information and Movie data atom 1792 that is actual data.

Note that, the AV file is equivalent to "main data" recited in the claims, the AV Index file is equivalent to "index data" recited in the claims.

The AV Index file 1740 manages a plurality of entries, and each AV file in the disk is managed by a corresponding entry.

The Movie atom 1791 is made up of the following four tracks: a Property track 1793 for managing sets of attribute information (attribute data) of the respective entries; a Title track 1794 for managing sets of title character string data of the respective entries; a Thumbnail track 1795 for managing sets of representative image data of the respective entries; and an Intro music track 1796 for managing sets of representative audio data of the respective entries.

The sets of attribute information, title character string data, representative image data, and representative audio data regarding the respective entries are managed as samples in the respective tracks 1793 through 1796. Taking the AV file 1741 as an example, the attribute information is managed by the sample 1701 on the Property track 1793, the title character string data is managed by the sample 1711 on the Title track 1794, the representative image data is managed by the sample 1721 on the Thumbnail track 1795, and the representative audio data is managed by the sample 1731 on the Intro music track 1796. The samples are coordinated with each other in accordance with the reproduction start times of the respective samples. That is, it is determined that samples which are on different tracks but reproduced in an identical period correspond to the same entry.

The Movie data atom 1792 stores therein the attribute information, title character string data, representative image data, and representative audio data concerning each AV file.

Note that, the attribute information, title character string data, representative image data, and representative audio data are equivalent to "index information" recited in the claims.

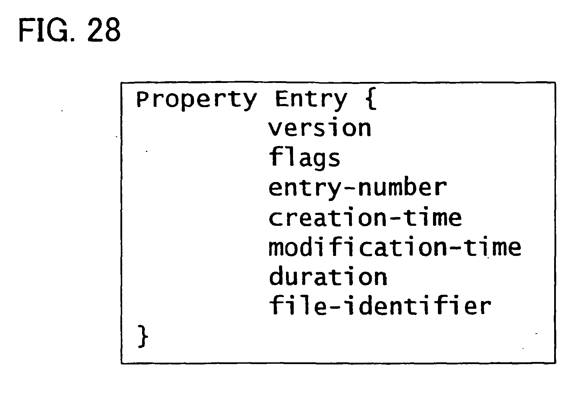

A set of the attribute information is structured as illustrated in Figure 28. The fields are arranged as follows. "Version" indicates a version of the file format. "Flags" is a collection of different types of flags. "Entry-number" stores an ID of the entry corresponding to the attribute information.

"Creation-time" indicates when the entry corresponding to the attribute information is generated, while "modification-time" indicates when the entry corresponding to the attribute information is modified. "Duration" indicates a reproduction time of the entry corresponding to the attribute information. "File-identifier" stores, when the entry corresponding to the attribute information corresponds to a file, a file name of the file therein.

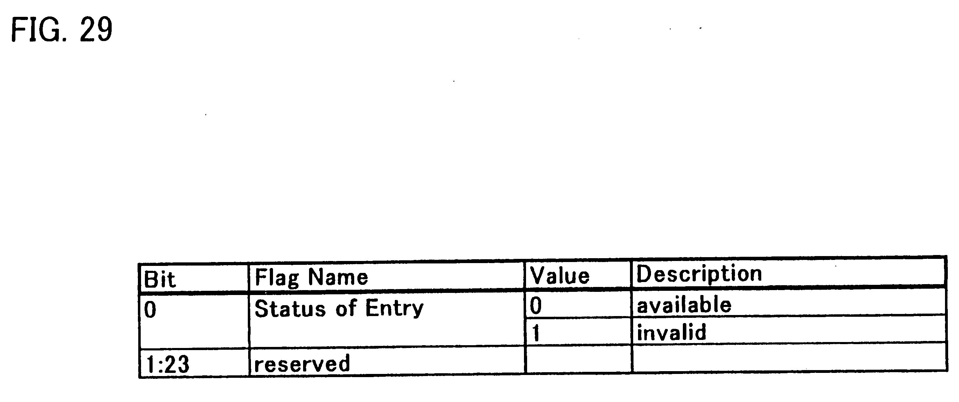

The "flags" is now described with reference to Figure 29. "Status of Entry" is flags for recognizing whether the corresponding entry is available or invalid.

Other types of data stored in the Movie data atom 1792 are now described. The representative image data is JPEG-reduced images each having the size of 160 × 120 pixels, the title character string data is text data, and the representative audio data is data compressed under MPEG-1 Audio Layer-II.

<Flow of Entire Process>

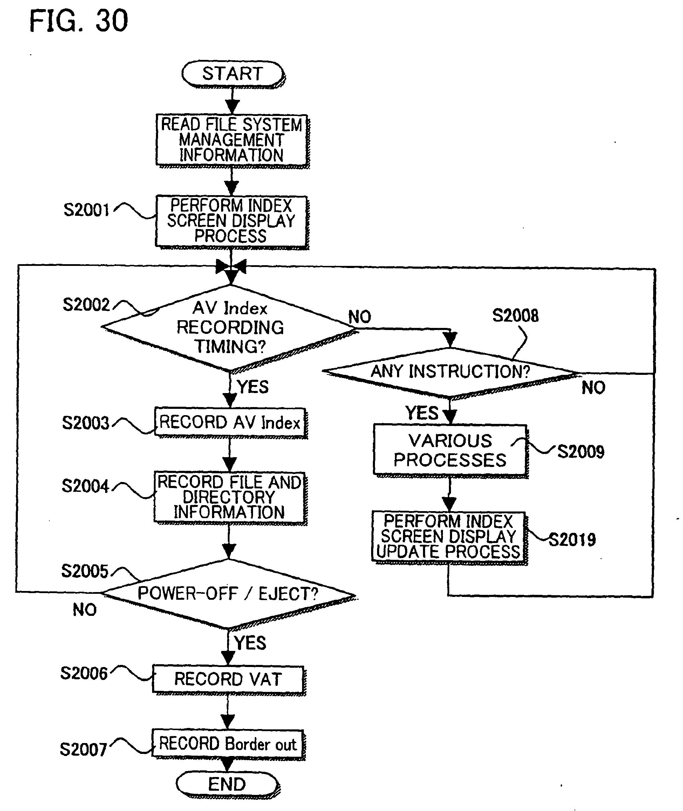

Figure 30 illustrates a flow from disk insertion to disk eject or power-off.

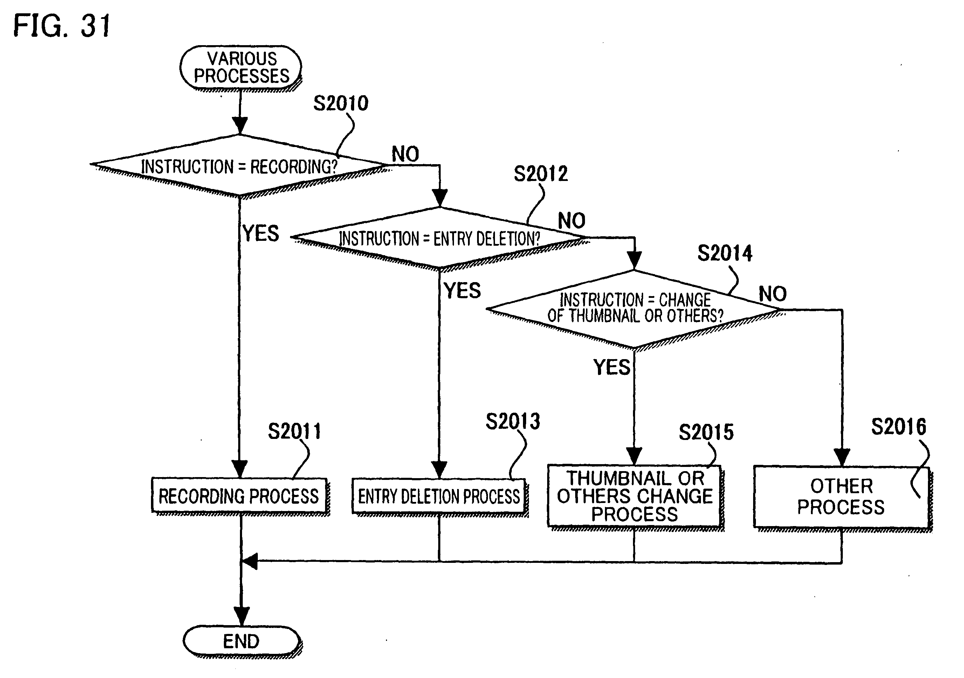

When the optical disk 106 is inserted, management information of a file system is first read according to the foregoing sequence (Step 2000). Then, an AV Index file is read from the optical disk 106 to display an index screen (Step 2001). Next, it is checked whether or not the AV Index should be recorded on the disk at this timing. The recording timing is a timing when the necessity for temporarily recording information regarding the AV Index file on the optical disk 106 of the RAM 102 arises for the disk eject instruction, power-off, or reading of new information into the RAM 102 from the optical disk 106. If now is the recording timing, AV Index recording process in Steps 2003 and 2004 is performed. On the other hand, if it is not the recording timing, it is checked whether or not any instruction from the user have been received (Step 2008). If any instruction has been received, various processes (see Figure 31) are carried out according to the instruction. Upon completion of the processes, index screen display update process is performed with the foregoing processes taken effect (Step 2019).

Next, steps shown in Steps 2003 through 2007 will be described. First, recording of the AV Index file is carried out based on information on the RAM 102 (Step 2003), and file and directory information is recorded (Step 2004). Then, it is checked whether or not a trigger of AV Index recording is power-off or disk eject (Step 2005). If the trigger is power-off or disk eject, the VAT is recorded (Step 2006), and the "Border out" that is a field for indicating an additional writing end position is recorded (Step 2007). In the case of reproduction of this optical disk 106, the VAT must be first read out, the "Border out" is information for looking for the position of the VAT. Therefore, before file reading, a reproduction device always moves its pickup to a radial direction of an optical disk, finds the last "Border out", and reads out a VAT immediately in front of the "Border out". An arrangement of the present embodiment in which a field where the content of the latest AV Index file is recorded is placed close to the "VAT" and "Border out" enables reduction of a period for seeking until the AV Index file is read out. This enables quick views of representative image, title, and others to the user, resulting in improvement in responses to the user.

Next, the various processes in Step 2009 will be described with reference to Figure 31. First, it is checked whether or not the instruction is an instruction for recording (Step 2010), and if it is the instruction for recording, recording process as will be described later is performed (Step 2011). If it is not an instruction for recording, it is checked whether or not it is an instruction for entry deletion, i.e. deletion of an already-existing AV file (Step 2012). If it is an instruction for entry deletion, an entry deletion process (Step 2013) as will be described later is performed. If the instruction is neither the instruction for recording nor the instruction for entry deletion, it is checked whether or not it is an instruction for change of any of the representative image data, title character string data, representative audio data, attribute information concerning an already-existing AV file (Step 2014). If so, thumbnail and others change process (Step 2015) as will be described later is performed. If the thumbnail and others change process is not instructed, other process (Step 2016) is performed.

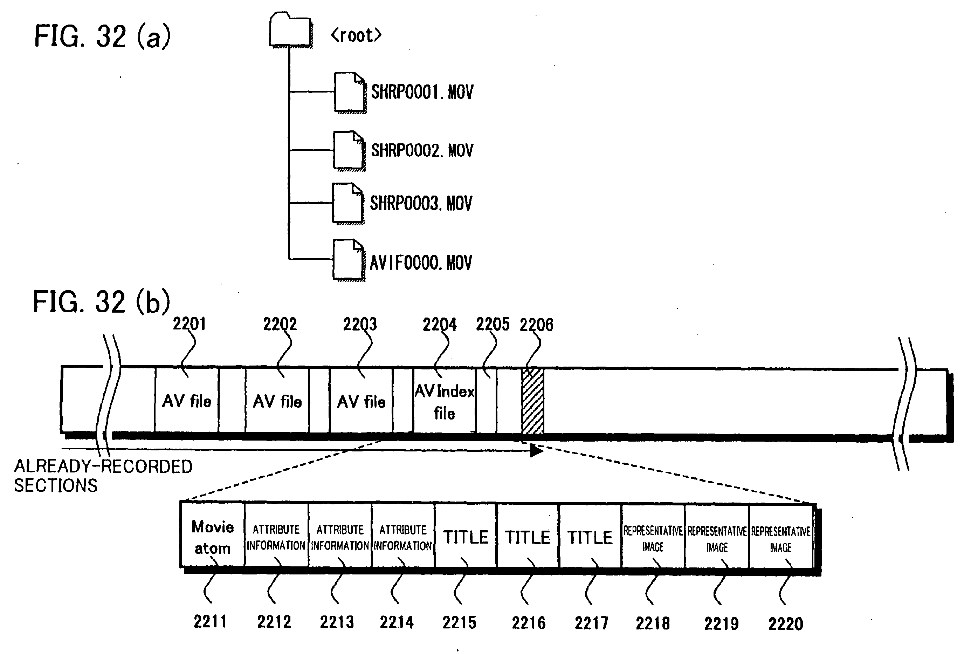

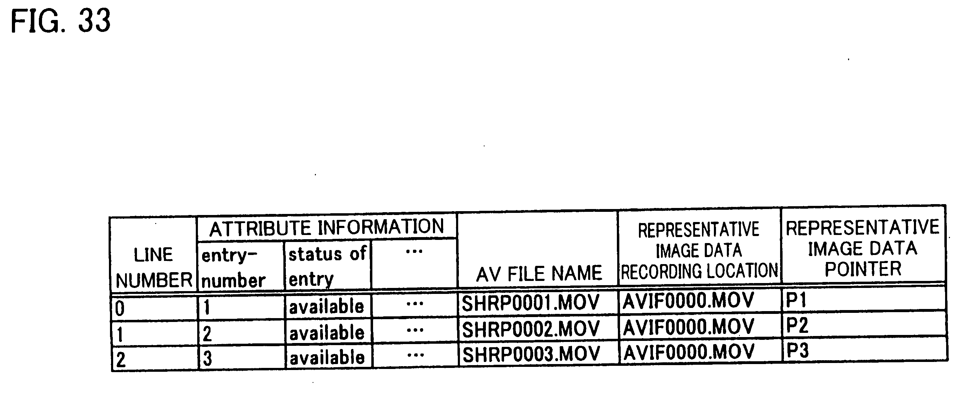

The following is a detailed description of each process. Here, it is assumed that an initial state before the process is started is such that on the optical disk 106, files have been recorded with a directory structure illustrated in Figure 32(a), and the files are arranged on the optical disk 106, as illustrated in Figure 32(b). That is, AV files, SHRPOOO1.MOV, SHRP0002.MOV, and SHRP0003.MOV, are recorded in locations, AV file 2201, AV file 2202, and AV file 2203, respectively. Further, an AV Index file, AVIF0000.MOV, is recorded in a field of an AV Index file 2204 in Figure 32(b), at the head of the AV Index file 2204, Movie atom of the AV Index file is recorded in a field 2211. Further, as to SHRPOOO1.MOV, attribute information, title character string data, and representative image data are recorded in a field 2212, a field 2215, and a field 2218, respectively. As to SHRPOOO2.MOV, attribute information, title character string data, and representative image data are recorded in a field 2213, a field 2216, and a field 2219, respectively. As to SHRPOOO3.MOV, attribute information, title character string data, and representative image data are recorded in a filed 2214, a field 2217, and a filed 2220, respectively. As a result of the index screen display process described later, a table, illustrated in Figure 33, for managing information regarding the AV Index file is constructed in the RAM 102. Here, this table is referred to as "AV Index management table". Each line in this table manages a state of the AV Index which has been read out at the time of disk insertion, and update of each entry after disk insertion. Each line has attribute information, a name of an AV file managed by each entry, representative image data recording location (name of the AV Index file and address information), and pointer information to representative image data held in another area of the RAM 102. Note that, the representative audio data and title character string data are not shown for simplification of illustration. However, they are also treated in the same way as the representative image data and attribute information. Names of the files are substantially managed based on full pathnames from the root directory. However, directory names are omitted here for simplification of illustration.

<Recording Process>

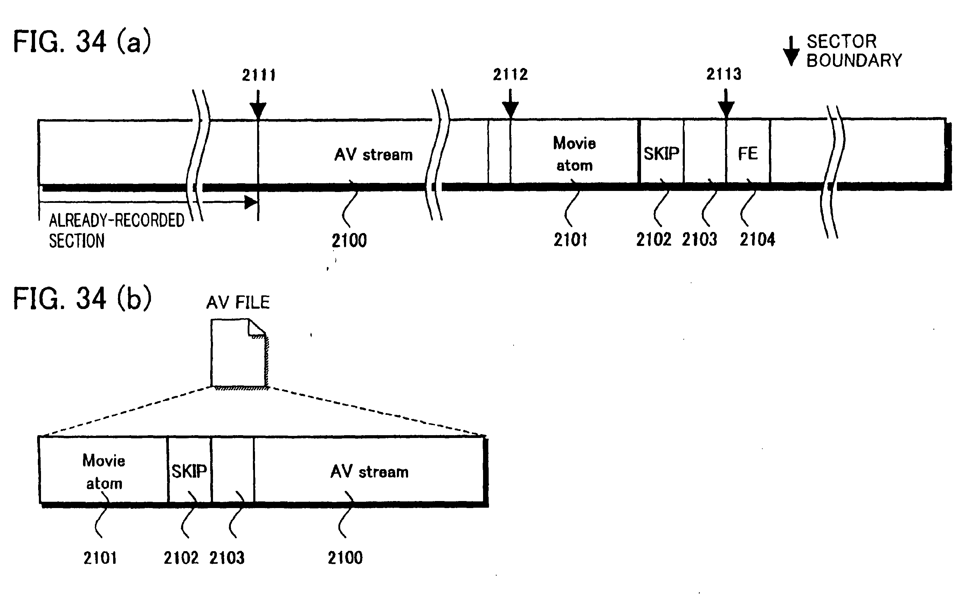

Recording process in the present embodiment is now described with reference to Figures 34(a) and 34(b). When the user instructs recording, the audio encoder 117 and the video encoder 118 are activated to start encoding input data from a camera and microphone not shown in the foregoing encoding scheme. Encoded audio data and video data are multiplexed by the multiplexer 113 in accordance with the foregoing AV stream format. At the time, a size and reproduction time of GOP, which will be necessary for recording Movie atom later, are stored in the RAM 102. Further, head image, which has been extracted as representative image from input video and has been reduced, is JPEG-encoded to generate representative image data, and the representative image data is held in the RAM 102. An AV stream, as a result of multiplexing, is recorded on the optical disk 106 by the pickup 107 by way of the recording/after-recording buffer 111 and the ECC encoder 109. Recording of the AV stream on the optical disk 106 is performed in the right direction from location of 2100 in Figure 34(a).

In response to an instruction for stopping recording from the user, when an AV stream which remains in the recording/after-recording buffer 111 is completely recorded on the optical disk 106, the number of bytes of the recorded AV stream is stored in the RAM 102, and then Movie atom is recorded. Recording is started from a sector boundary 2112 as illustrated in Figure 34(a). Upon completion of recording the Movie atom, Skip atom of suitable size is inserted into a field 2102 so that a rear end of atom header of Movie data atom is located immediately in front of a next sector boundary 2113. Note that the Skip atom is an atom mainly used for padding in the QuickTime file format. Then, the atom header of the Movie data atom is recorded in a field 2103. To the atom header, a sum of the number of bytes of the AV stream stored in the RAM 102 and the number of bytes of the atom header of the Movie data atom is recorded, and "mdat" that means Movie data atom is recorded. A the end, an FE is recorded at location of 2104. To the FE, recorded is information such that this AV file is read from the head thereof in the order illustrated in Figure 34(b).

The following will describe the reason for taking such a recording structure. In the QuickTime file format, size in the Movie data atom and content of the Movie atom are sets of information having a property of not being determined before completion of recording. A usual size of the AV stream is larger than that of the recording/after-recording buffer 111, so that the AV stream must be recorded before recording of the Movie atom. At this time, in the case of a rewritable disk, it is possible to return toward the front location (to the left of the AV stream 2100 in Figure 34(a)) and record the Movie atom therein. On the other hand, in the case of a write-once disk, recording just to the rearward location (to the location right of the AV stream 2100 in Figure 34(a)) is permitted. Therefore, in recording on the optical disk, recording is carried out in the order illustrated in Figure 34(a), and the FE, management information of the file system, is recorded in such a manner that the file is read in the order illustrated in Figure 34(b). In the present case, for sequential reading of a plurality of successive fields using information of the FE, the size of each successive fields, except for the last successive field, must be an integer multiple of sector (recording unit). Therefore, the Skip atom 2102 is inserted, and the size of fields where the Movie atom 2101 and the atom header 2103 of the Movie data atom are recorded is adjusted so as to be an integer multiple of a sector. Skip atom can be inserted anywhere to the boundary of higher-order atoms (e.g. the Movie atom and the Movie data atom), so that, for example, the Skip atom may be inserted immediately in front of the Movie atom, in addition to the boundary between the Movie atom 2101 and the Movie data atom 2103. Further, in the present embodiment, the Movie atom and the AV stream are stored in one file. However, needless to say, they may be recorded in different files as illustrated in Figure 2(b). In this case, an AV stream file and a Movie atom-specific file are recorded in this order.

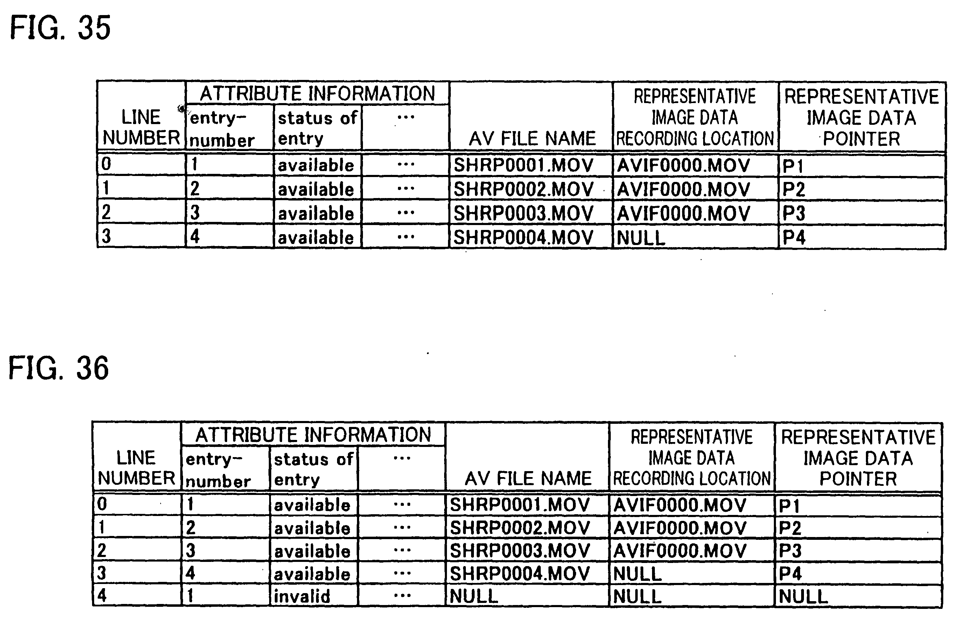

At the time when recording is completed, a line given line number 3 in Figure 35 is added to the AV Index management table on the RAM 102. The following will describe contents of the line. As to the attribute information, "entry-number" stores therein a number which is different from the already-existing numbers. Also, as to AV file name, such a file name whose fifth through eighth numbers are different from those of the already-existing AV file names in the file system is generated and stored in the AV Index management table. As to the representative image data recording location, since nothing is recorded on the optical disk 106, "NULL" indicating that nothing is recorded is stored therein. As to the representative image data pointer, an address, on the RAM 102, of the foregoing representative image data generated at the time of recording is stored therein.

<Entry Deletion Process>

Entry deletion process in the present embodiment will be now described. Here, it is assumed that a state of the AV Index management table before being deleted is in the state illustrated in Figure 35. When the user instructs entry deletion, a line given line number 4 in Figure 36 is added to the AV Index management table on the RAM 102. That is, the added line is such a line having the same entry-number as that of an entry to be deleted and having "invalid" in status of entry.

<Entry Data Change Process>

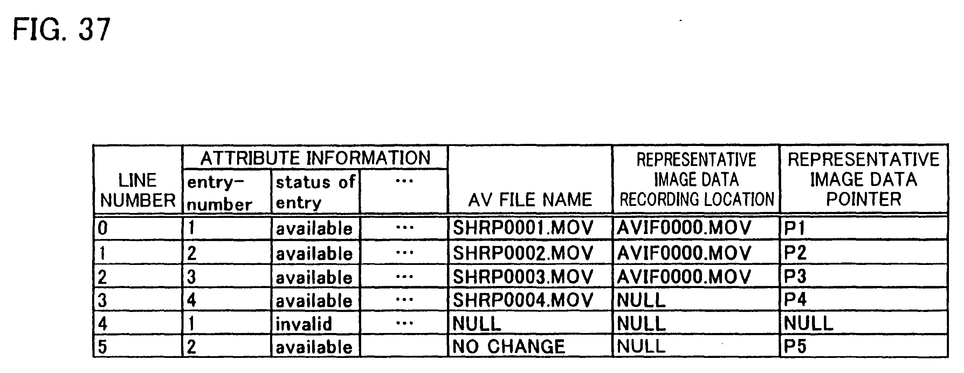

Entry data change process in the present embodiment will be now described. Here, it is assumed that a state of the AV Index management table before entry data is changed is in the state illustrated in Figure 36. When the user instructs change of the representative image, a post-change image is obtained and stored in the form of JPEG-encoded data on the RAM 102. Next, a line given line number 5 in Figure 37 is added to the AV Index management table on the RAM 102. That is, the added line is such a line having the same entry-number as that of an entry to be changed representative image and having head address on the RAM 102 storing the foregoing JPEG-encoded data therein, in the representative image data pointer. In the present case, to indicate that what is changed is only representative image data, "NO CHANGE" indicating that there occurs no change is stored in the other items. Further, as in the recording process, since nothing is recorded on the optical disk 106, "NULL" is stored in the representative image data recording location. Note that, although change of representative image has been here described, change of other entry data such as representative audio, title, and attribute information is performed in the same manner.

<AV Index Recording Process>

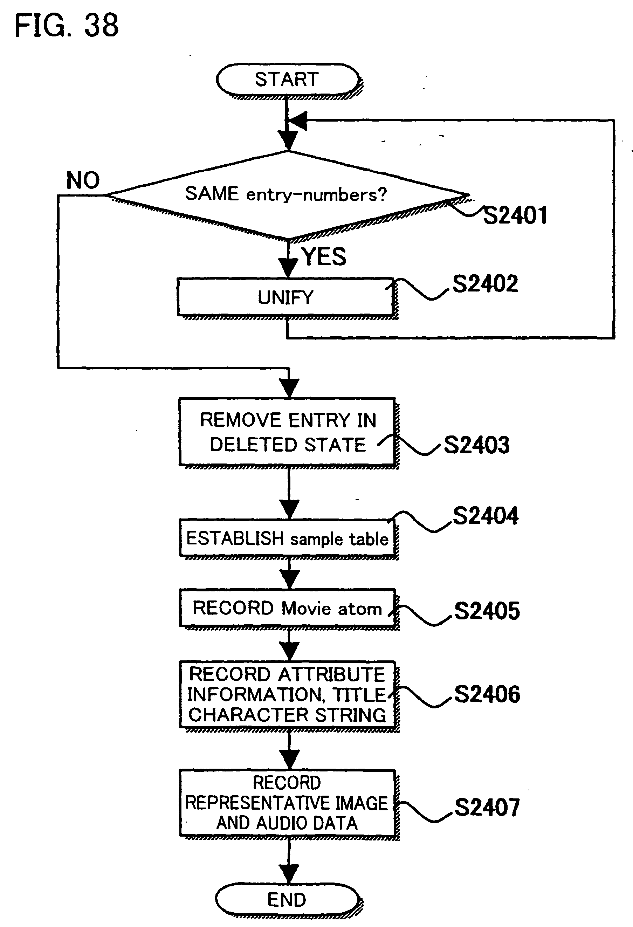

An AV Index file recording process in the present embodiment will be described with reference to Figure 38. First, on the AV Index management table, lines having the same entry-number are unified into a single line (Steps 2401 and 2402). Specifically, if there are lines having the same entry-number, contents of the line having a lower line number are overwritten by contents of the line having a higher line number, and then the line having a higher line number is deleted. In overwriting, as to the item which stores therein "NO CHANGE" that means no change, overwriting of the line having a lower number is not performed. Then, a deleted entry is removed. Specifically, a line having entry-number, in which status of entry is "invalid", is deleted from the AV Index management table (Step 2403).

Next, Sample table of a newly recorded AV Index file is established on the RAM 102 (Step 2404). Specifically, the Sample table is established in such a manner that data having a small amount and desired to be quickly accessed from the user and device because of its importance for them, such as attribute information and title character string data, is recorded in the newly recorded AV Index file, and data less important, such as representative image data and representative audio data (e.g. representative image is ineffective in a device just having display means which displays a character string of one line thereon), except for newly added data, is made reference to the existing AV Index file.

Whether recording in the newly recorded AV Index file or making reference to the existing AV Index file is determined in accordance with attribute of each of the sets of data: attribute information, title character string data, representative image data, and representative audio data. As the attribute of this data considered is the amount of data, as described above. In addition to the amount of data, hierarchical information of the data, priority of the data, a time when the AV file corresponding to the data has been reproduced are also considered. Such a data attribute may be recorded on the optical disk 106.

The above process is performed by the host CPU 101 and the RAM 102 as "index data generation means" recited in the claims.

With this arrangement, it is possible to prevent decrease in access performance to highly important information while reducing wasted recording space. Next, Movie atom of the newly recorded AV Index file is recorded (Step 2405), sets of attribute information and title character string of all entries in the AV Index management table are recorded (Step 2406), and at the end, representative image data and representative audio data, which are added newly, are recorded. What data is newly added is judged from whether or not the representative image data recording location in the AV Index management table is "NULL".

Note that, the name of the newly recorded AV Index file is a name obtained by addition of 1 to a maximum value of values taken fifth through eighth numbers from the names of the existing AV Index files on the optical disk 106. For example, in the case where the names of the existing AV Index files are AVIF0000.MOV through AVIFO100.MOV, the name of the newly recorded AV Index file is SHRPO101.MOV. With this arrangement, which is the latest AV Index file can be judged from its name, and reference to the AV Index files except for the latest AV Index file can easily reproduce a previous snapshot (state) in the optical disk 106.

Thus, the name of the AV Index file is recorded, as relevant information among the AV Index files, on the optical disk 106, whereby it is possible to easily access to a history of changes made to contents of recording on the optical disk 106. Further, serial numbers are partially put on the names of the AV Index files, whereby the order of histories can be grasped easily.

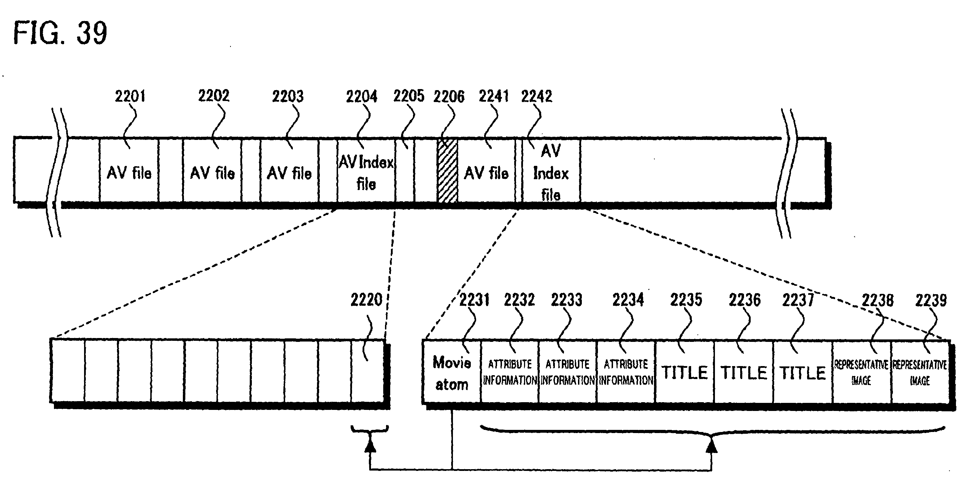

The following will specifically describe a recorded state on the optical disk 106 immediately after the above process is performed. Here, it is assumed that before the AV Index file recording process is started, there exists an AV Index management table having contents of Figure 37 on the RAM 102. As a result of the AV Index file recording process, a new AV Index file 2242 is generated on the optical disk 106 as illustrated in Figure 39. In the new AV Index file 2242, as to SHRP0002.MOV 2202 of which representative image data has been changed, attribute information, title character string data, and representative image data are recorded in a field 2232, a field 2235, and a field 2238, respectively. As to SHRPOO03.MOV 2203 with nothing changed, attribute information and title character string data are recorded in a field 2233 and a field 2236, respectively. As to newly registered SHRP0004.MOV 2241, attribute information, title character string data, and representative image data are recorded in a field 2234, a field 2237, and a field 2239, respectively. As to representative image data of SHRP0003.MOV 2203, new recording is not performed since the representative image data of SHRP0003.MOV 2203 is referred to the field 2220 in the existing AV Index file.

Note that, the AV Index file 2204 is equivalent to "old index data" or "first data" recited in the claims. The AV Index file 2242 is equivalent to "new index data (new index data)" or "second data" recited in the claims.

Therefore, the first data is already-recorded data, and the second data is newly-recorded data. Recording timing is different between the first data and the second data, and they are recorded at a distance from each other on the storage medium. On the occasion of reproduction, the first data is read out in preference to the second data. Also, it can be said that the second data is additional data of the first data.

Further, in a comparative example, the Movie atom 2231 is equivalent to "third data" recited in the claims, and entry data included in the AV Index file 2204, such as attribute information, title character string data, representative image data, and representative audio data (see Figure 32), is equivalent to "fourth data".

Further, "reference information" or "information regarding fourth data" in the claims are equivalent to any of samples (see Figure 27) included in the Movie atom 2231 that is management information.

Further, the AV file is equivalent to "fifth data" in the claims. Therefore, it can be said that the fourth data, such as attribute information, title character string data, representative image data, and representative audio data, is data having information regarding the fifth data.

<Index File Screen Display Process>

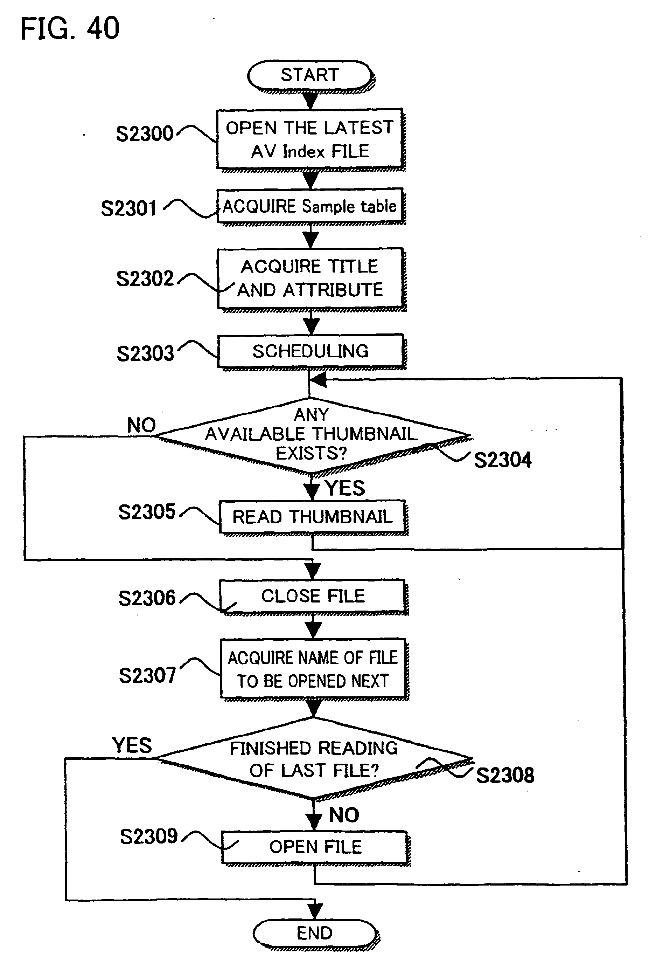

The following will describe the index file screen display process in the present embodiment with reference to Figure 40. First, a latest AV Index file is opened (Step 2300), Movie atom is read, and the foregoing AV Index management table is generated on the RAM 102. Incidentally, at this point, only sets of positional information of various types of data such as representative image data have been merely acquired, and the various types of data have not been read on the RAM 102 yet (Step 2301). Note that, which AV Index file is the latest one can be judged from the file name, as described previously. Then, sets of title character string data and attribute information of the respective entries are read out and stored in the AV Index management table (Step 2302). Next, scheduling of reading of representative image data and representative audio data is performed (Step 2303). That is, a user-specified current index display order and the file names of the AV Index files including sets of data are considered to determine a file opening order such that a time elapsed until the file is displayed is the shortest. Specifically, the file opening order is based on an index screen display order and is determined such that the number of times the file is opened is decreased. Next, representative image data and representative audio data are read out from the currently opened AV Index file (Steps 2304 and 2305). After reading of available data, the file is closed (Step 2306), the name of the AV Index file to be opened next, having been determined in Step 2303, is acquired (Step 2308), the determined AV Index file is opened if the last file has not read yet (Step 2309), and Step 2304 and subsequent steps are performed.

As described earlier, in the Step 2301, reference to the AV Index files except for the latest AV Index file makes it possible to easily reproduce a past snapshot (state) in the optical disk 106.

<Variations>

In the present embodiment, deleted entry and pre-change entry data are not managed by the latest AV Index file. However, they may be managed by the latest AV Index file. Specifically, it can be considered that an entry having attribute such as deletion of the existing entry or change of the existing entry data is defined and added. Alternatively, a table which manages availability/invalidity for each sample may be added and recorded to the Sample table.

Further, in the present embodiment, for reference to the existing data, external reference function of the Quick-Time file format is used; however, the same function can be realized by using a function of a file system. For example, a sector including data externally referred in the present embodiment is determined as an extent of the latest AV Index file, and is referred to from the Movie atom, whereby the same function can be realized without using the external reference function of the QuickTime file format. Taking Figure 39 as an example, the latest AV Index file is made up of two extents: (1) a successive sector including fields 2231 through 2239; and a successive sector including a field 2220. With this arrangement, the AV Index file 2204 and the AV Index file 2242 can be managed as one file. In the present case, the Movie atom includes positional information of the field 2220 inside the one file. Further, when the file name of the latest AV Index file is identical with the file name of the previous latest AV Index file, the existing data can be reused without increase in the number of the AV Index files.

Moreover, on the occasion of recording entry data such as representative image data, when the head position of the entry data is recorded in such a manner so as to be aligned with a boundary of the sector, the head of the entry data is the head of the extent. This simplifies the foregoing process and decreases a rate of including redundant data in the AV Index file.

In the present embodiment, sets of entry data such as representative image data are stored in the AV Index file. However, only the sets of entry data may be managed collectively, or the sets of entry data may be managed as one file for each type of the entry data. Alternatively, the sets of entry data may be recorded in the AV file so as to be referred to by the AV Index file. With this arrangement, in the AV Index file update process, the entry data can be always referred to a common data file. This eliminates the need for a process of changing a location referred for the entry data.

Furthermore, in the present embodiment, in the latest AV Index file, representative image data or representative audio data included in the existing AV Index file are not recorded, but is referred to the latest AV Index file. However, even the representative image data or representative audio data included in the existing AV Index file may be recorded in the latest AV Index file so that particular data can be read out from the optical disk 106 at a high speed and the responses to the user can be improved. As the particular data considered is, for example, representative image data regarding a recorded AV file in a hierarchical directory at the lower level. Also, it can be naturally considered that at a timing of recording the latest AV Index file (at the time of disk eject or power-off), representative image data and representative audio data regarding a file viewed to the user are recorded in the latest AV Index file. With this arrangement, at the time of disk eject or power-off, it is possible to reproduce the previous state (e.g. screen display) in a short time.

Whether the representative image data and representative audio data are recorded in the newly recorded AV Index file or are referred to the existing AV Index file is determined in accordance with attributes of these representative image data and representative audio data. As this attribute considered is, as described above, hierarchical information of the data and a time at which an AV file corresponding to the data has been reproduced.

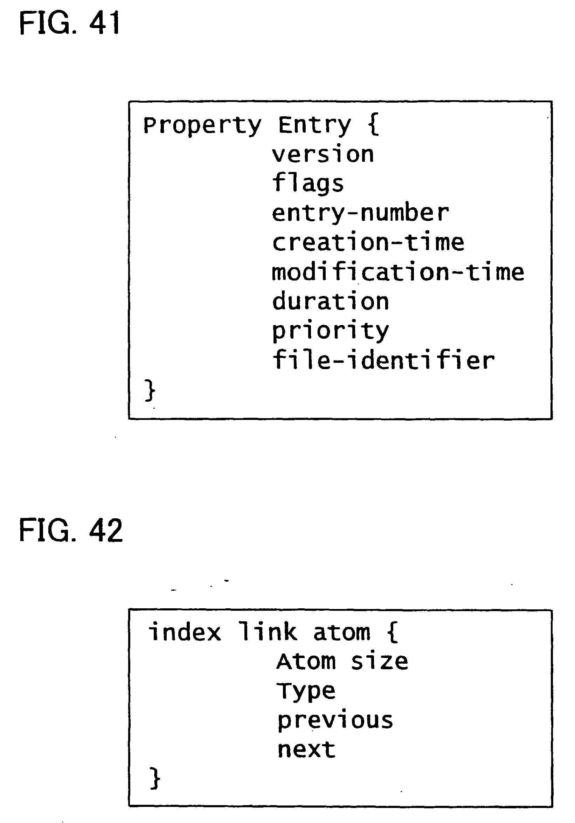

As illustrated in Figure 41, it can be considered that in the attribute information, "priority" that is a field storing a priority for displaying and/or reading is provided, and even when data of a higher priority is included in the existing AV Index file, the representative image data or representative audio data are recorded in the latest AV Index file, whereby an index display at the disk insertion is called at a high speed and the responses to the user is improved.

[Second Embodiment]

Second embodiment of the present invention will be described with reference to Figures 42 through 47. Second Embodiment is different from First Embodiment in that the latest AV Index file does not include management information regarding data in the existing AV Index file and wasted space caused by duplicate recording of management information is decreased. The following descriptions focus upon differences from First Embodiment since the present embodiment has a lot in common with First Embodiment.

<Management Information Format>

A structure of an AV Index file in the present embodiment is the same as that of the AV Index file in First Embodiment, except that "User data atom" in "Movie atom" includes "index link atom" illustrated in Figure 42. The index link atom is information indicating a positional relationship between files when a plurality of AV Index files exist on the disk. In this atom, a field "previous" and a field "next" exist. In the present invention, only the field previous is used. How to use the field previous will be described later.

<Flow of Entire Process>

Since the flow from disk insertion to disk eject or power-off in the present embodiment is the same as that in
First Embodiment, description thereof is omitted.

<Recording Process>

Since the recording process in the present embodiment is the same as that in First Embodiment, description thereof is omitted.

<Entry Deletion Process>

Since the entry deletion process in the present embodiment is the same as that in First Embodiment, description thereof is omitted.

<Entry Data Change Process>

Since the entry data change process in the present embodiment is the same as that in First Embodiment, description thereof is omitted.

<AV Index Recording Process>

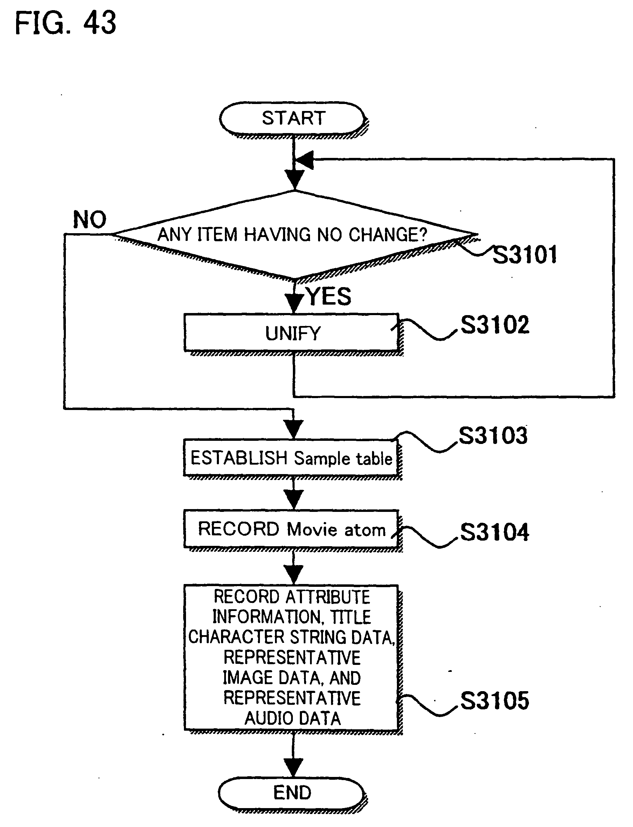

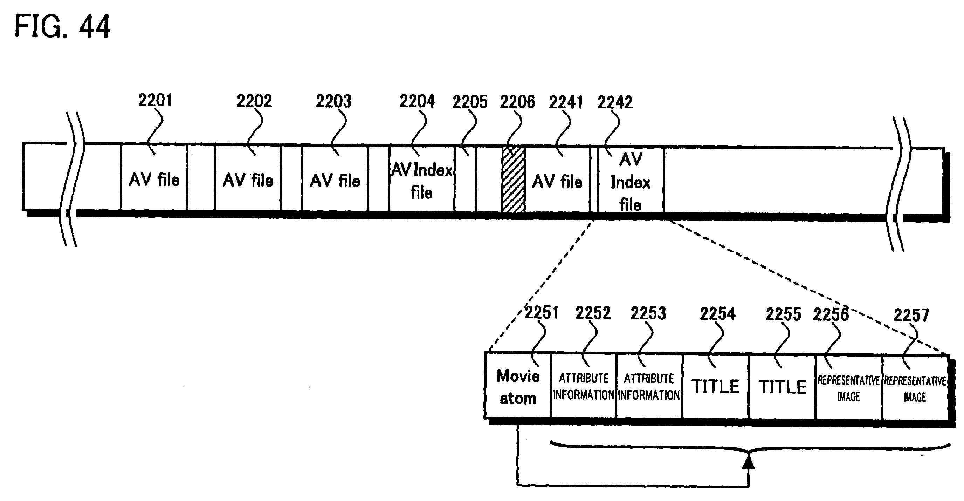

The AV Index recording process in the present embodiment will be described with reference to Figure 43. First, a process of unifying AV Index management table on the RAM 102 is performed (Steps 3101 and 3102). Specifically, NO CHANGE in any item of a line added after insertion of the optical disk 106 shows that the location of real data is recorded in an entry having a line number lower than that of the line added after insertion of the optical disk 106, so that a line having the same entry-number is searched for, and the item of no change is complemented by contents of the corresponding item in the searched line. If a line from which the contents are acquired is a line added after insertion of the optical disk 106, the line is deleted.
Next, in accordance with information in the AV Index management table, Sample table is established (Step 3103). Specifically, each line added after insertion of the optical disk 106 is first determined as one entry, and for each entry, a sample which manages attribute information, representative image data, representative audio data, and title character string data is generated.
Then, information is stored in the sample depending on type of the line. As to a line indicating entry deletion, "invalid" is set in "status of entry" of the attribute information, and size information of the sample which manages representative image data, representative audio data, and title character string data is set to 0. As to the other lines, a sample is made up in such a manner that the latest attribute information, representative data, representative audio data, and title character string data are recorded in the latest AV Index file. Note that, "invalid" set in the status of entry is information which makes invalid the entry corresponding to that line. The status of entry is equivalent to "third data" recited in the claims.
Next, Movie atom is recorded (Step 3104), and at the end, attribute information, representative data, representative audio data, and title character string data are recorded. Note that, in the field "previous" in the index link atom of the Movie atom, the file name of the previous latest AV Index file is stored.
Note that, the name of the newly recorded AV Index file is a name obtained by addition of 1 to a maximum value of values taken fifth through eighth numbers from the names of the existing AV Index files on the optical disk 106.
The following will specifically describe a recorded state of the optical disk 106 immediately after the foregoing process. Here, it is assumed that before the AV Index file recording process is started, there exists an AV Index management table having the contents of Figure 37 on the RAM 102. As a result of the AV Index file recording process, a new AV Index file 2242 is generated on the optical disk 106 as illustrated in Figure 44. In the new AV Index file 2242, as to SHRP0002.MOV, attribute information, title character string data, and representative image data are recorded in a filed 2252, a field 2254, and a filed 2256, respectively. As to SHRP0004.MOV, attribute information, title character string data, and representative image data are recorded in a field 2253, a field 2255, and a field 2257, respectively.

In First Embodiment, the Movie atom in the latest AV Index file manages information regarding all entries existing in the optical disk 106. Therefore, the Movie atom in the latest AV Index file includes duplicate information of the Movie atom in the previous AV Index file, and the duplicate information causes wasted storage space by the amount thereof. On the contrary, in the present embodiment, the Movie atom of the latest AV Index file manages only the differences (addition and deletion of entries, and change of entry data) from the previous AV Index file, so that the present embodiment has the advantage of less duplicate recording of management information, as compared to First Embodiment.

<AV Index Merge Process>

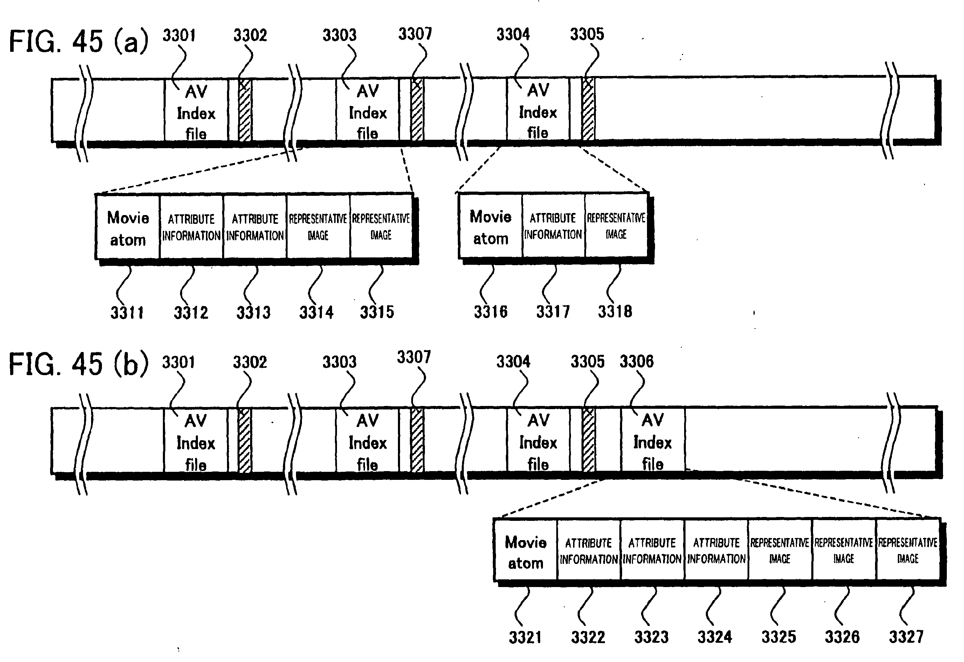

When the foregoing AV Index recording is repeated, a plurality of AV Index files are recorded in a dispersed manner on the optical disk 106, as illustrated in Figure 45(a). In the optical disk, it takes time to move to a reading position, so that increase in the number of times the reading position is changed results in increase of a total reading time. Therefore, repeating the AV Index recording increases a reading time, which could affect responses, such as display of Index screen, and others. As a method for solving this problem, considered is a method of making close the contents of the plurality of AV Index files being recorded in a dispersed manner and recording them. Here, the process of this method is referred to as merge process.

The merge process is described using an example. Figure 45(b) illustrates an example in which the merge process has been carried out, and sets of entry data, such as attribute information and representative image, included in an AV Index file 3303 and an AV Index file 3304 are collectively recorded in an AV Index file 3306. Naturally, Movie atom stores therein Sample table for managing those sets of entry data. The file name of the AV Index file 3306, as described earlier, is one obtained by addition of 1 to the fifth through eighth numbers in the name of the previous AV Index file, the AV Index file 3304. In the present case, what is stored in the field "previous" of the index link atom in the User data atom of the Movie atom is the file name of an AV Index file 3302 that is the immediately preceding AV Index file of an AV Index file from which the entry data are merged. With this arrangement, during reading of the AV Index files from the latest one to the previous ones, reference to the field previous makes it possible to prevent sets of data having been merged from being read again. In addition, the AV Index file from which the entry data are merged remains, so that a function of easily reproducing the previous state is not impaired. Note that, in the present embodiment, the merge process is performed independently from a normal AV Index recording process. However, needless to say, the merge process may be performed simultaneously with the normal AV Index recording process. Further, as in First Embodiment, needless to say, entries and entry data to be merged may be selected in accordance with attributes of entries and entry data.

Thus, information stored in the field "previous" of the index link atom in the User data atom of the Movie atom is information for controlling reading of files, and this information is equivalent to "reading control information" recited in the claims.

<Edit-Process Redoing Process>

As described above, the AV Index file is recorded at the time of disk eject or power-off, or at an arbitrary timing, so that a previous snapshot (state) by the recorded AV Index file can be easily reproduced.

Edit operation or other operations performed during a period from reading of the existing AV Index from the disk to writing of the changed AV Index into the disk can be easily cancelled since the AV Index management table is on the RAM. Meanwhile, a lower number in the AV Index file name shows that the AV Index file was generated earlier, so that it is easy to return to a previous state by the AV Index. It is possible to identify when the AV Index file was generated, in accordance with date and time information set in the AV Index file.

In the present case, it is considered to return the latest AV Index file to a three previous AV Index file, for example. Here, "return" means that the contents of the present AV Index management table on the RAM and edit operation managed on the first and second previous AV Index files are all abandoned to return to the three previous AV Index file. This is realized by going, three times, steps back to the previous AV Index file managed in the field "previous" of the index link atom. The three previous AV Index file grasped by the index link atom is read out from the disk, and edit operation or other operations is continued with respect to the three previous AV Index file. On the occasion of actual recording of the latest AV Index file to the disk, the file name of the three previous AV Index file is stored in the field "previous" of the index link atom in the User data atom of the Movie atom.

With this arrangement, on the occasion of reading the AV Index file by returning from the latest AV Index file to a previous AV Index file, reference to the field "previous" makes it possible to prevent data for which edit operation has been cancelled from being read again. Further, the AV Index file for which edit operation has been cancelled still remains, so that a function of easily reproducing a previous state including the cancelled edit operation is not impaired. Furthermore, what are recorded to cause the three previous AV Index file to be the latest AV Index file are, as an AV Index file having a file number that is not used and having the highest file number among AV index files in the disk, (1) a special AV Index file storing one attribute information in which 0 (no entry is managed) for the number of samples is recorded to indicate that no available entry is managed or (2) a special AV Index file storing one attribute information in which "NULL" is recorded to all fields to indicate that no available entry is managed, and (3) a special AV Index file storing the file name of the three previous AV Index file in the index link atom. This makes it possible to go back to the three previous AV Index file from the first read AV Index file having the highest file number among the AV Index files in the disk.

<Index File Screen Display Process>

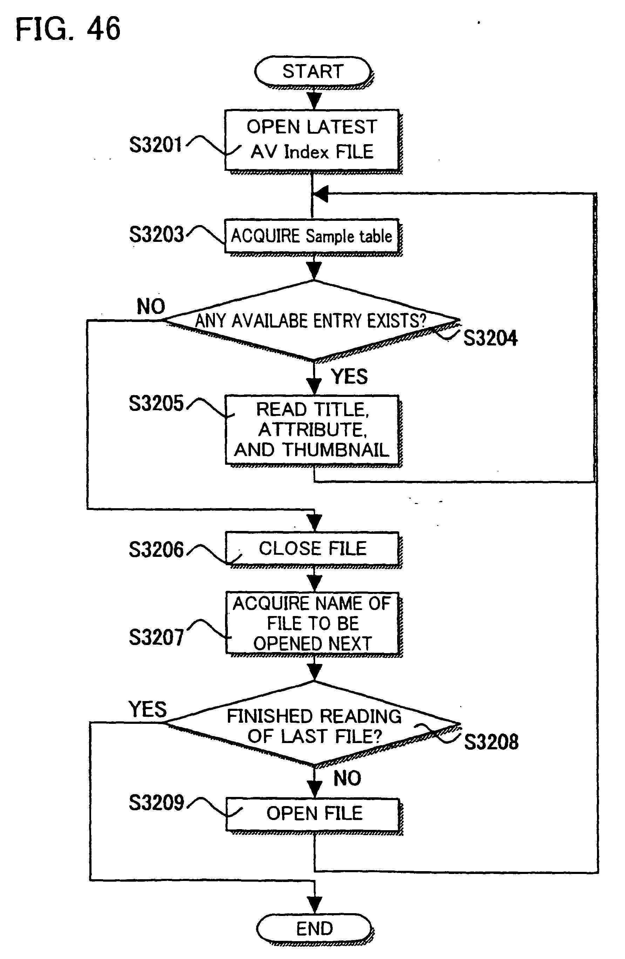

The following will describe the index file screen display process in the present embodiment with reference to Figure 46. First, the latest AV Index file is opened (Step 3201), Movie atom is read, and the foregoing AV Index management table is generated on the RAM 102. Incidentally, at this point, only sets of positional information of various types of data such as representative image data are merely acquired, and the various types of data have not been read on the RAM 102 yet (Step 3203). Note that, which AV Index file is the latest one can be judged from the file name. Then, sets of title character string data, attribute information, representative image data, and representative audio data of the respective entries are read out and stored in the AV Index management table (Step 3204).

Note that, when attribute information of a line having the same entry-number as that of the line already existing in the AV Index management table is read out, the information is discarded. Upon completion of reading of available entry data, the file is closed (Step 2306). Then, the field "previous" of the index link atom in the previously opened AV Index file is referred to in order to acquire the name of an AV Index file to be read next (Step 3207). Next, it is determined whether or not the previously opened AV Index file is an AV Index to be last read (Step 3208). Specifically, if "NULL" indicating that there is no reference is specified to the name of the AV Index file to be read next in the index link atom, it is determined that the previously opened AV Index file is the last AV Index. If that AV Index is not the AV Index to be read last, a file having the name of the AV Index file to be read next is opened (Step 3209), and Step 3203 and the subsequent steps are performed.

As described above, in the Step 3201, reference to the AV Index file except for the latest AV Index file makes it possible to easily reproduce a previous snapshot (state) in the optical disk 106.

<Variations>

In the present embodiment, in updating entry data such as representative image data, all sets of entry data in an entry including the entry data to be updated are re-recorded. Taking Figure 44 as an example, title character string data of SHRP0002.MOV recorded in a field 2255 is primarily data which need not to be recorded since what is changed is only representative image data. However, in the foregoing data format, the type of entry data to be changed cannot be specified, so that changing a certain type of entry data requires overwriting all types of sets of entry data. As a method for solving this problem considered is to add the type of entry data to be changed, to attribute information. For example, for change of representative image data, "Status of Thumbnail" is set to "available", and "Status of Intro music", "Status of Title" and others are set to "invalid". On the occasion of reading, when the Status of Thumbnail is "available", data is read out. When the Status of Thumbnail is "invalid", the existing data is used. Such an arrangement enables recording of only the entry data of the type to be changed, and it is possible to reduce wasted recording space.

Further, in the present embodiment, entry deletion is carried out by addition of an entry having the same entry-number and "invalid" status of entry. Alternatively, entry deletion may be carried out by deletion of an AV Index file which manages an entry to be deleted. In this case, the number of entry managed in each AV Index file is limited to one. Further, entry deletion may be carried out by changing the file name of the AV Index file which manages an entry to be deleted, so as to make it ineffective.

[Third Embodiment]

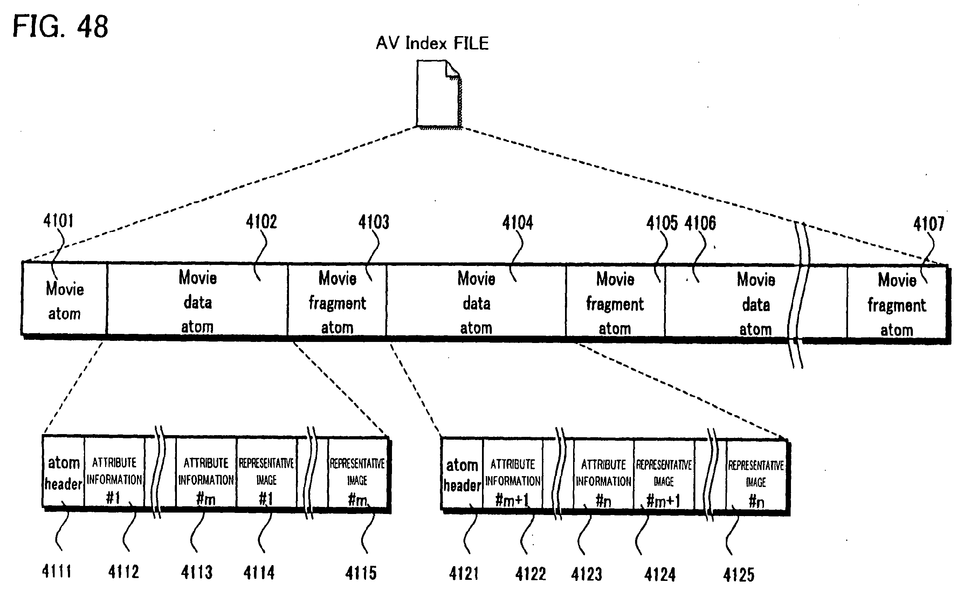

The following will describe third embodiment of the present invention with reference to Figures 48 through 52. The present embodiment and Second Embodiment are common in that duplicate recording of management information is avoided, but the present embodiment is different from Second Embodiment in that management information and sets of entry data are additionally written into one AV Index file.

<Management Information Format>

Figure 48 illustrates a structure of an AV Index file in the present embodiment with reference to Figure 48. The AV Index file is realized by the foregoing Fragmented movie. That is, at the head of the AV Index file, "Movie atom" that is management information of the entire file is provided, and "Movie data atom" and "Movie fragment atom" are arranged in an alternating manner. The Movie fragment atom has "Property track", "Intro music track", "Thumbnail track", and "Title track" to manage attribute information, representative audio data, representative image data, and title character string data, respectively. Each Movie fragment atom manages samples identical in number and time length for each track, to indicate that adjacent samples between tracks correspond to a common entry.

For example, when Movie fragment atom 4103 manages m-number of entries, m-number of samples are managed respectively for attribute information, representative audio data, representative image data, and title character string data. The data corresponding to the sample is stored in Movie data atom 4102 that is Movie data atom which corresponds to the Movie fragment atom 4103.

Note that, formats of attribute information, representative audio data, representative image data, and title character string data are the same as those in First Embodiment, so that descriptions thereof are omitted.

<<Flow of Entire Process>

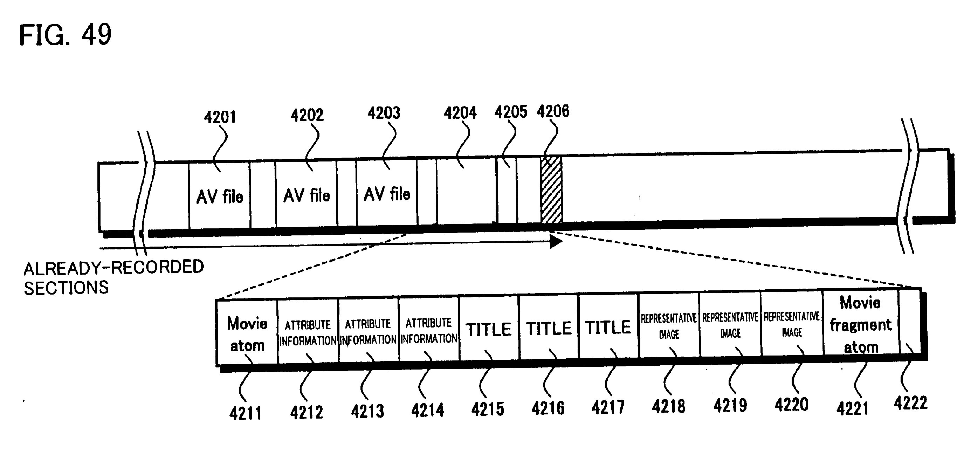

A flow from disk insertion to disk eject or power-off in the present embodiment is the same as that in First Embodiment, so that descriptions thereof are omitted. Here, it is assumed that an initial state before the process is started is such that on the optical disk 106, files have been recorded with a directory structure which is the same as that in First Embodiment, illustrated in Figure 32(a), and directories on the optical disk 106 are arranged as illustrated in Figure 49. That is, AV files, SHRP0001.MOV, SHRP0002.MOV, and SHRP0003.MOV, are recorded in a field 4201, a field 4202, a field 4203, respectively. Further, an AV Index file, AVIF0000.MOV, is recorded in a field 4204 in Figure 49, at the head of the field 4204, Movie atom of the AV Index file is recorded in a field 4211.

Further, as to SHRPOOO1.MOV, attribute information, title character string data, and representative image data are recorded in a field 4212, a field 4215, and a field 4218, respectively. As to SHRP0002.MOV, attribute information, title character string data, and representative image data are recorded in a field 4213, a field 4216, and a field 4219, respectively. As to SHRP0003.MOV, attribute information, title character string data, and representative image data are recorded in a field 4214, a field 4217, and a field 4220, respectively, and at the end, Movie fragment atom which manages the foregoing sets of entry data and Skip atom which will be described later are recorded in a field 4221 and a field 4222, respectively. Further, it is assumed that as a result of the index screen display process described later, a table, illustrated in Figure 37, for managing information regarding the AV Index file is structured in the RAM 102.

<Recording Process>

Since recording process in the present embodiment is the same as that in First Embodiment, description thereof is omitted.

<Entry Deletion Process>

Since an entry deletion process in the present embodiment is the same as that in First Embodiment, description thereof is omitted.

<Entry Data Change Process>

Since entry data change process in the present embodiment is the same as that in First Embodiment, description thereof is omitted.

<AV Index Recording Process>

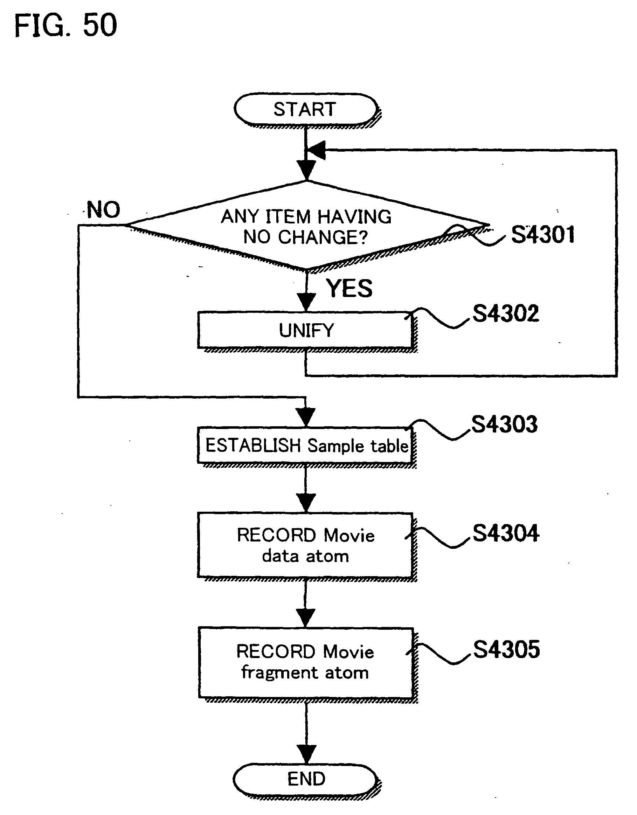

AV Index recording process in the present embodiment will be described with reference to Figure 50. First, a process of unifying an AV Index management table on the RAM 102 is performed (Steps 4301 and 4302). In accordance with a result of the unifying process, Sample table is established (Step 4303). A specific procedure is the same as that in Second Embodiment, so that description thereof is omitted. Next, Movie data atom is recorded (Step 4304). Specifically, atom header is recorded, and sets of attribute information, representative data, representative audio data, and title character string data of the respective entries are recorded. At the end, Movie fragment atom is recorded based on contents of the foregoing Sample table (Step 4305). Upon completion of recording of the Movie fragment atom, the foregoing Skip atom is inserted for adjustment so that the bottom end of the file is aligned with a boundary of the sectors. With this arrangement, the AV Index file is made up of integer number of sectors. Note that, the Movie fragment atom and the Movie data atom may be recorded in the reverse order. Further, for size adjustment, instead of the Skip atom, a set of ineffective data may be inserted immediately in front of the Movie fragment atom. In such a case, a field "size" in the atom header of the Movie data atom includes the amount of the ineffective data.

Thereafter, to cause the field subjected to recording at this time to be included in the existing AV Index file, this field is added as new extent to the FE which manages the AV Index file, and the FE is additionally written into the disk. The size adjustment using the Skip atom is carried out to be consistent as QuickTime file even when the extent adding process is carried out.

Thus, the FE which is added the extent thereto and is additionally written into the disk is equivalent to "third data" recited in the claims.

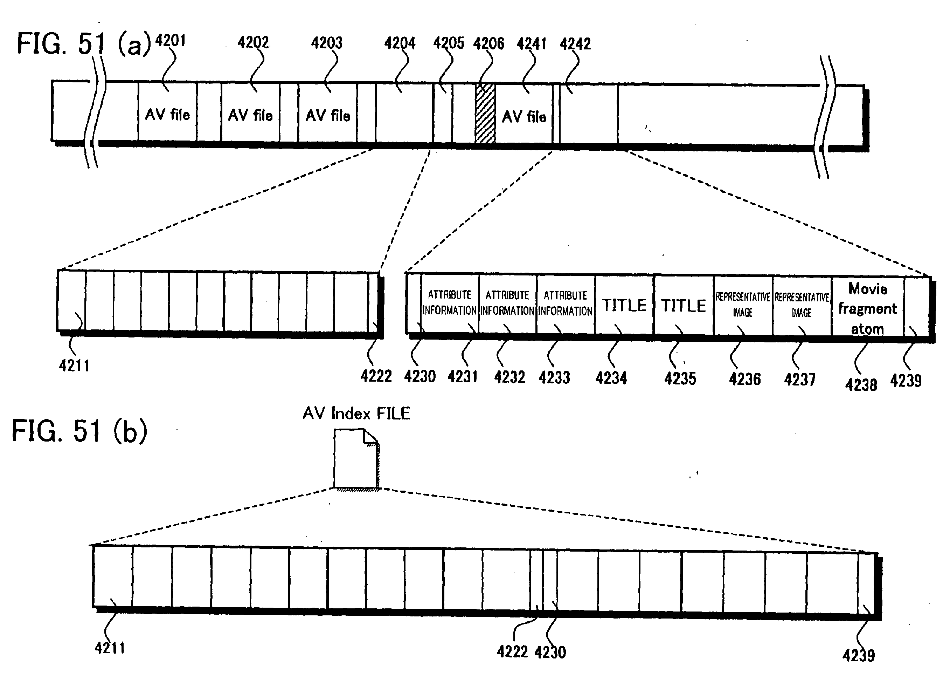

The following will specifically describe a recorded state on the optical disk 106 immediately after the above process is performed. It is assumed that before the AV Index file recording process is started, there exists an AV Index management table having contents of Figure 37 on the RAM 102. As a result of the AV Index file recording process, in the optical disk 106, sets of data in fields 4230 through 4239 are additionally written to the field 4242, as illustrated in Figure 51(a). First, in a field 4230 at the head of the field 4242, atom header of Movie data atom is recorded. Sets of attribute information are recorded in fields 4231 through 4233 and are respectively attribute information for nullifying SHRPOOO1.MOV 4201, attribute information for replacing representative image data of SHRP0002.MOV 4202, and attribute information for newly registering SHRP0004.MOV 4241. To fields 4234 and 4235 respectively recorded are sets of title character string data of SHRP0002.MOV 4202 subjected to change of representative image and the newly registered SHRP0004.MOV 4241.

To fields 4236 and 4237 respectively recorded are sets of representative image data of SHRP0002.MOV 4202 and SHRP0004.MOV 4241. To fields 4238 and 4239 respectively recorded are Movie fragment atom and skip atom for aligning the bottom end of the file with a sector boundary. In the situation that existing information and latest information regarding the AV Index file are recorded in fields 4204 and 4242, respectively, and the field 4242 is added, as a subsequent extent, to the FE of the AV Index file, fields of the AV Index file are read sequentially in the direction from left to right in Figure 51(b).

<Index File Screen Display Process>

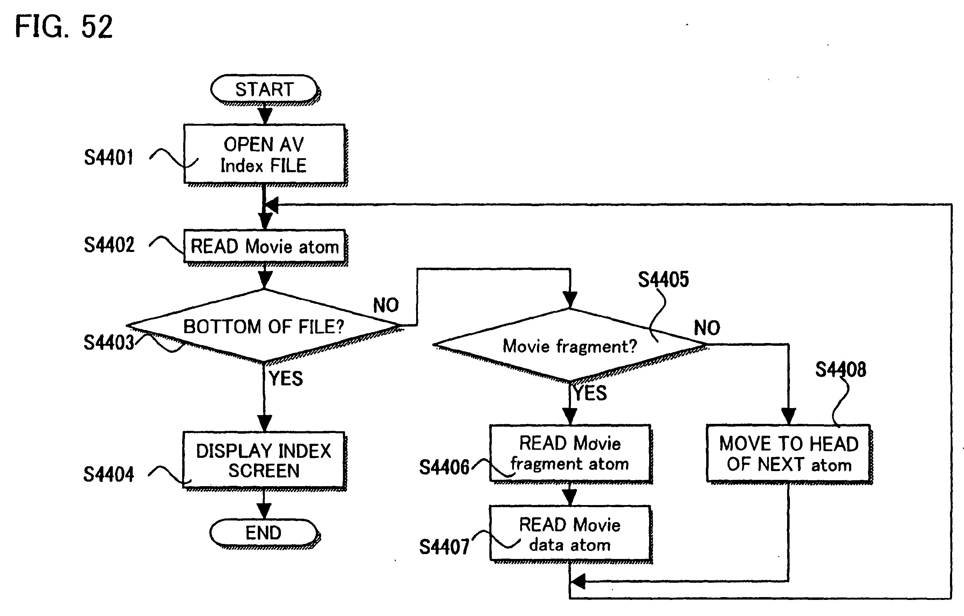

The following will describe Index file screen display process in the present embodiment with reference to Figure 52. First, the AV Index file is opened (Step 4401), and Movie atom is read (Step 4402). Next, fields following the Movie atom are read, and if the read field is the bottom of the file (Step 4403), the index screen is displayed (Step 4404) to complete the process. If the read field is not the bottom of the file, it is judged whether or not the read field is the Movie fragment atom (Step 4405). If the read field is the Movie fragment atom, the Movie fragment atom is read (Step 4406). In accordance with information obtained from the Movie fragment atom, Movie data atom, i.e. entry data such as attribute information, is read (Step 4407). In the Step 4405, when the read field is atom except for the Movie fragment atom, fields are skipped until the Movie fragment atom is read (Step 4408).

<Variations>

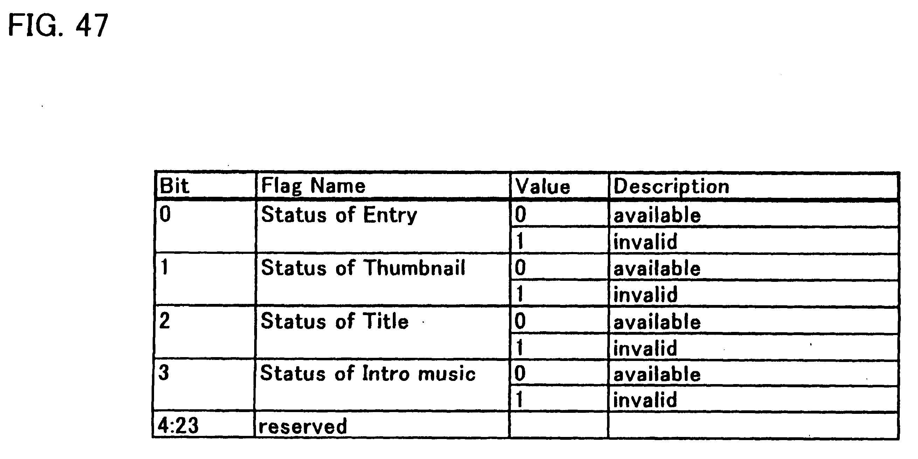

The present embodiment, as with Second Embodiment, makes it possible to reduce wasted recording space by recording type information of entry data to be changed illustrated in Figure 47.

Further, in the present embodiment, entry deletion is carried out by additionally writing an entry having the same entry-number. Alternatively, entry deletion may be carried out by deleting, from the FE of the AV Index file, an extent corresponding to Fragmented Movie which manages an entry to be deleted. Note that, it is necessary to ignore discontinuous sequence-numbers.

Still further, in the present embodiment, reading of the file starts from the head of the file, so that a time to access to recently recorded sets of entry data tends to be longer. In order to avoid this problem, the FE of the AV Index file may be set so that sets of entry data are arranged in an order such that a newly recorded entry data comes first. In this case, needless to say, as has been described in the First and Second Embodiments, duplicate recording of only entry data having a particular attribute may be carried out for high-speed access to entry data.

[Fourth Embodiment]

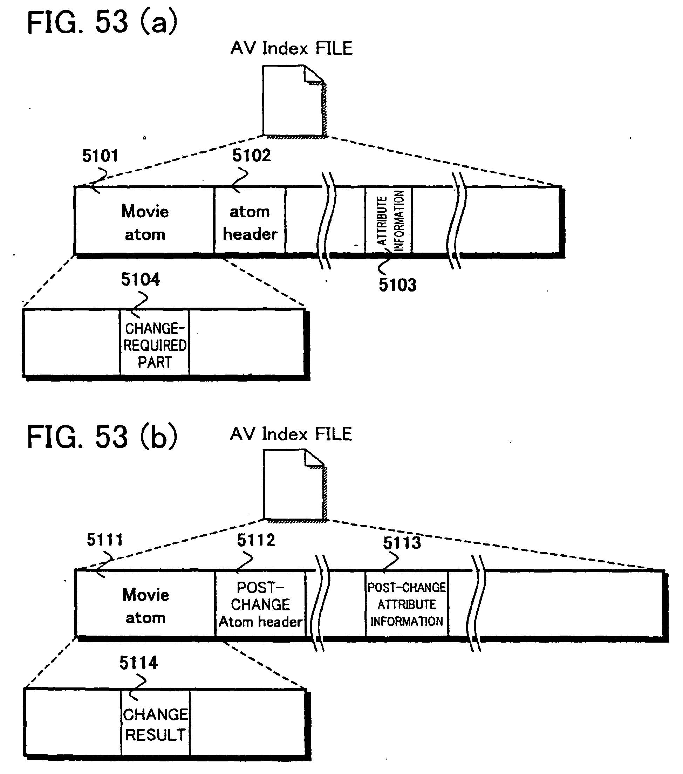

The following will describe fourth embodiment of the present invention with reference to Figures 53(a) through 59(b). The present embodiment is similar to First Embodiment; however, the present embodiment is different from First Embodiment in that recorded data including Movie atom is reused wherever possible by manipulation of the FE regarding the AV Index file. The following description focuses on AV Index file update process.

A management information format of the present embodiment is the same as that of First Embodiment, so that description thereof is omitted.

<AV Index File Update Process (in the case when the variation in the amount of data in Movie atom is an integer multiple of sector)>

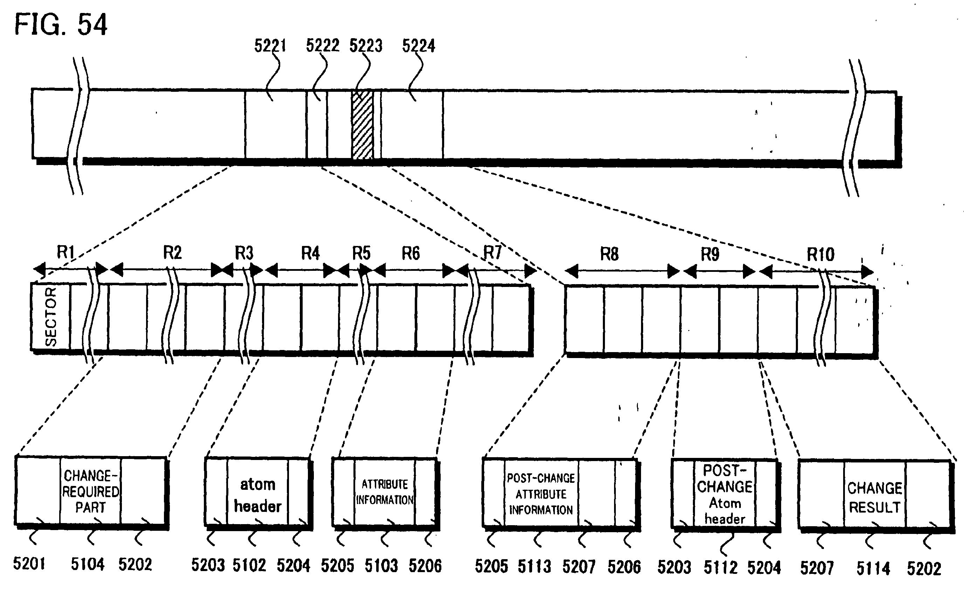

First, referring to Figures 53(a), 53(b), and 54, the following will describe AV Index file update process in the case when the variation in size of the Movie atom is only an integer multiple of sector (including the case when the size of the Movie atom does not change by update of the AV Index file).

First, the following will describe Figure 53(a) illustrating a data structure of an AV Index file before being updated. The AV Index file is made up of Movie atom 5101, atom header 5102, and Movie data atom including attribute information 5103 and others. Here, it is considered to change the contents of the attribute information 5103 and the amount of data thereof in the Movie data atom. In the present case, the size of the Movie data atom changes, so that the need for rewriting of a field "size" of the atom header 5102 arises. Further, the size of the attribute information 5103 changes, so that there arises the need for rewriting of amount-of-data information (Sample size atom) of the attribute information 5103 and sample positional information (Chunk offset atom) corresponding to data following the amount-of-data information. That is, there arises the need for partial rewriting of the Movie atom 5101. In the present case, a part which requires to be rewritten is termed "change-required part 5104". Note that, this rewriting causes no change in the number of samples, which generally causes no increase or decrease in the amount of data of Sample table atom.

It is assumed that the AV Index file illustrated in Figure 53(a) is recorded in a field 5221 on the optical disk 106 as illustrated in Figure 54, and the attribute information 5103, the atom header 5102, and the change-required part 5104 are provided on the corresponding sectors on the disk. Note that, data 5201 and data 5202 are data on the left side and data on the right side of the change-required part 5104, respectively, in a sector string storing the change-required part. Similarly, data 5203 and data 5204 are data on the left side and data on the right side of the atom header 5102, respectively. Further, data 5205 and data 5206 are data on the left side and data on the right side of the attribute information 5103, respectively.

According to change process, post-change attribute information 5113, post-change atom header 5112, and change result 5114 of the change-required part 5104 are recorded in the following manner: First, as to the post-change attribute information 5113, the data 5205, the attribute information 5113, padding 5207, and the data 5206 are recorded in this order. The padding 5207 is invalid data for making the amount of aggregate data of the data 5205, the attribute information 5113, the padding 5207, and the data 5206, equal to an integer multiple of a sector size.

Note that, the padding 5207 is equivalent to "ineffective data" recited in the claims.

Next, as to the post-change atom header 5112, the data 5203, the atom header 5112, and the data 5204 are recorded in this order. For the atom header 5112, there occurs no change in the amount of data, so that there is no need to use such a padding that has been described in association with recording of the attribute information.

Next, as to the change result 5114, the data 5207, the change result 5114, and the data 5202 are recorded in this order. As mentioned above, there occurs no change in the amount of data, so that there is no need to use the padding.

At the end, the FE of the AV Index file is structured and additionally written so that R1, R10, R3, R9, R5, R6, and R8 in Figure 54 are read in this order.

Such a FE restructured and additionally written is equivalent to "third data" recited in the claims.

According to the above-mentioned process, the AV Index file is rewritten as illustrated in Figure 53(b). Note that, here, the attribute information is to be changed. However, in the case of changing other entry data such as thumbnail, the AV Index file is rewritten in the same manner.

The foregoing AV Index file update process minimizes wasted recording space caused by the change.

<AV Index File Update Process (in the case when the variation in the amount of data in the Movie atom is not an integer multiple of sector)>

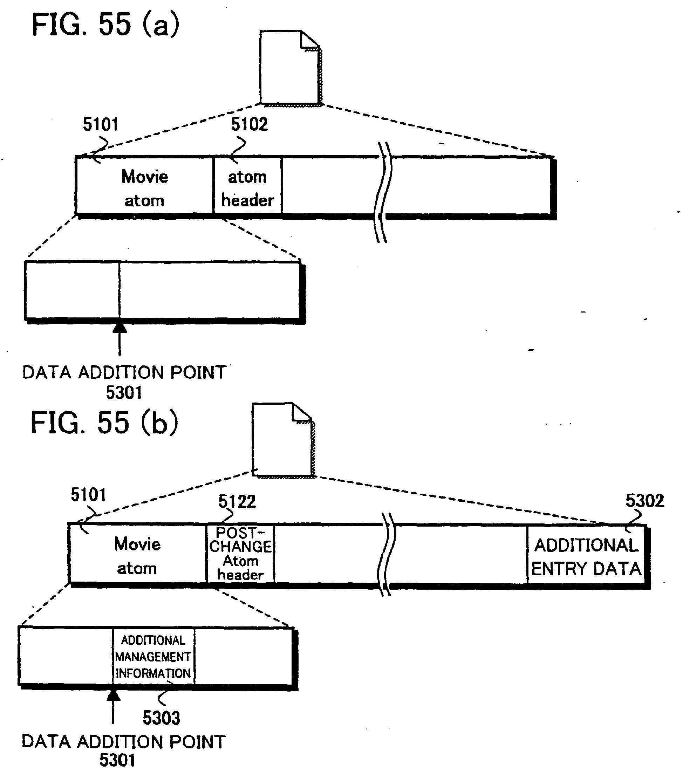

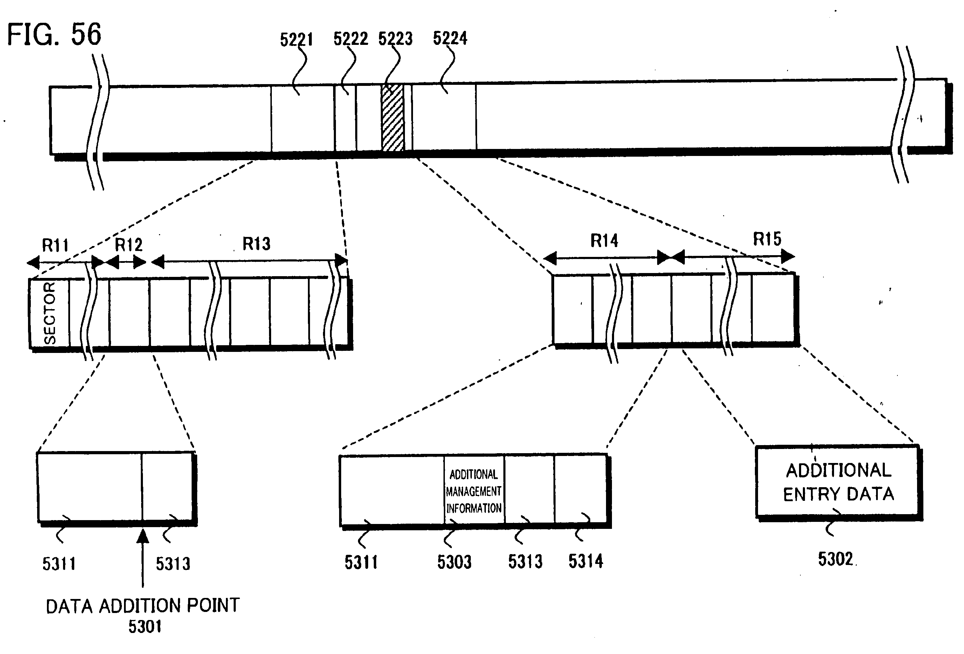

Next, referring to Figures 55(a), 55(b), and 56, the following will describe AV Index file update process in the case when the variation in size of the Movie atom is variation except for an integer multiple of sector.

Figure 55(a) illustrates a data structure of the AV Index file before being updated. This data structure is the same as that in Figure 53(a), so that description thereof is omitted. Now, it is considered that entry data such as attribute information is added to the AV Index file. The addition increases the number of samples managed by the Movie atom 5101 and increases the number of entries in Chunk offset atom, i.e. causes additional management information. With this, there arises the need for updating the field "size" in the atom header of the high-order atom. Further, addition of entry data increases the amount of data in the Movie data atom, so that there arises the need for updating the field "size" of the atom header in the Movie data atom.

It is assumed that the AV Index file illustrated in Figure 55(a) is recorded in a field 5221 on the optical disk 106 as illustrated in Figure 56, and an insertion position of the additional management information 5303, caused by increase in the number of entries in the Chunk offset atom, is a data addition point 5301. Note that, the atom header of the Movie data atom and others in which there occurs no change in the amount of data are the same as those in Figure 54, so that descriptions thereof are omitted. Note that, data 5311 and data 5313 are data on the left side and data on the right side of the data addition point 5301, respectively, in a sector including the data addition point 5301.

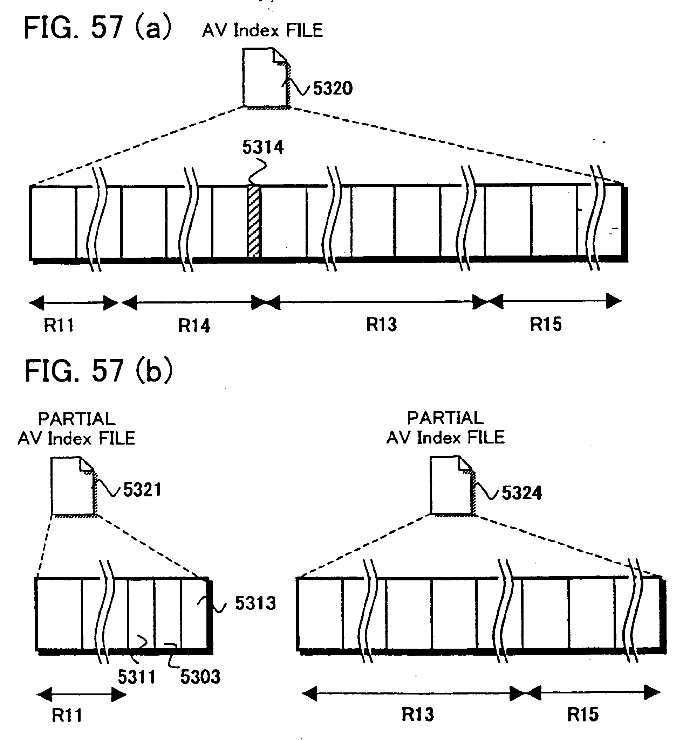

According to change process, the data 5311, the data 5313, the additional management information 5303, and the additional entry data 5302 are recorded in the following manner: First, the data 5311, the additional management information 5303, the data 5313, and data 5314 are recorded in this order from the top sector of the sectors. Also, the additional entry data 5302 is recorded in another sector string. Note that, the data 5314 is ineffective data that exists from the end of the data 5313 to the end of the sector. At the end, as illustrated in Figure 57(a), the FE of the AV Index file is structured and additionally written in the order of R11, R14, R13, and R15. In this case, the data 5314 is ineffective data, so that when this AV Index file is interpreted from the top thereof, the AV Index file cannot be interpreted correctly. In order to avoid the incorrect interpretation, information for nullifying such ineffective data is recorded on the optical disk 106. Specifically, a file "SKIP0000.DAT" is generated to record therein the address and the number of bytes of the ineffective data in the AV Index file.

On the occasion of reading the AV Index, the SKIP0000.DAT is read out immediately before the reading, and in accordance with information of the SKIP0000.DAT, the AV Index file is interpreted.

The above-mentioned update process minimizes duplicate recording of data in the Movie atom, caused by update of the AV Index file.

<Variations>

In the present embodiment, sets of data including ineffective data are combined into one file. Alternatively, the sets of data may be managed by a plurality of files, i.e. one partial AV Index file 5321 and one partial AV Index file 5324. The partial AV Index file 5321 manages R11, the data 5311, the additional management information 5303, and the data 5313. The partial AV Index file 5324 manages R13 and the additional entry data 5302. Successive reading of the partial AV Index file 5321 and the partial AV Index file 5324 realizes reconstruction of the AV Index file on the RAM 102. As a method of managing the order of reading a plurality of files considered is the following method. For example, it can be considered that as for files making up the latest AV Index file, the files are assigned file names, like AVIFOOO1.MOS and AVIF0002.MOS, indicating the order in which the files are read. Here, the extension "MOS" indicates a divided file. Also, it can be considered that a file recording the order in which the files are read is generated and the generated file is always referred to when the AV Index is read.

Further, it can be considered that additional data including the additional management information 5303 is recorded, in another file, together with information which manages an addition position and the generated file is always referred to when the AV Index is read.

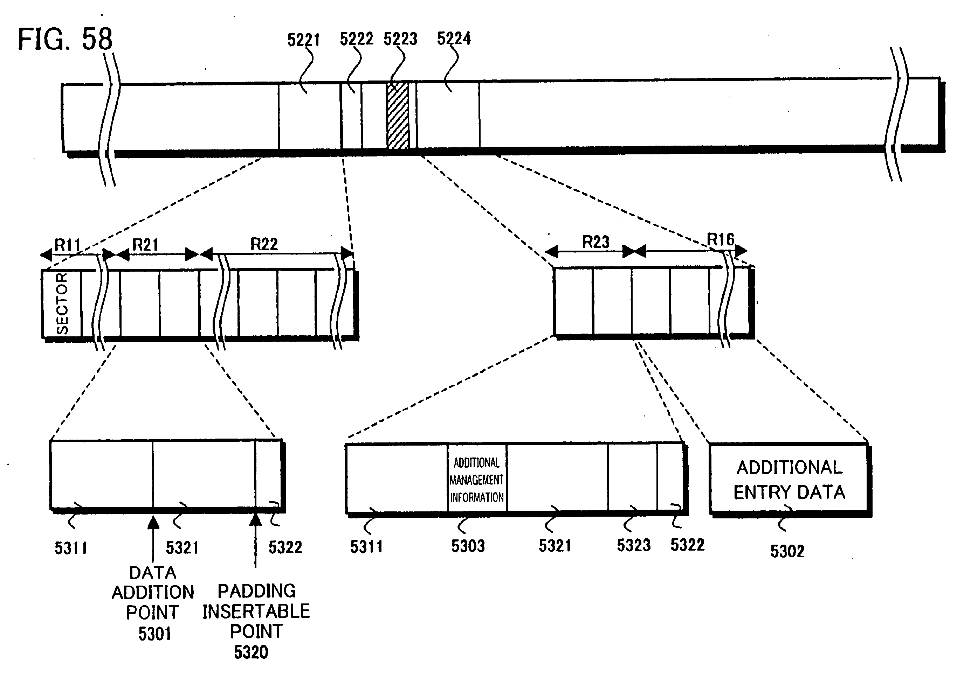

Further, in the present embodiment, in the case where the data size of the additional management information is less than an integer multiple of sector, padding is inserted. For the padding, an atom in the QuickTime file format may be used. This is described with reference to Figure 58. Note that, components having the same functions as those described above are given the same reference numerals and explanations thereof are omitted here. On the occasion of update process, first, a padding insertable point, specifically, a boundary between atoms is searched on the right side of he data addition point 5301. The point that is found first is a padding insertable point 5320. Further, it is defined that data from the data addition point 5301 to the padding insertable point 5320 is data 5321, and data from the padding insertable point 5320 to the first sector boundary is data 5322.

From the foregoing sets of data, the data 5311, the additional management information 5303, the data 5321, padding 5323, and the data 5322 are recorded in this order. Here, the padding 5323 is inserted so that the foregoing sets of data becomes the amount of data that is an integer multiple of sector, and what is used for the padding 5323 is an ineffective atom ignored in reproduction, like the foregoing skip atom. At the end, the FE of the AV Index file is structured and additionally written so that R11, R23, R22, R16 are read in this order from the AV Index file. Thus, to add data that is not an integer multiple of sector, insertion of an atom for size adjustment into the boundary between atoms reduces additional writing of data, and in addition, enables interpretation of the AV Index file without reference to other files.

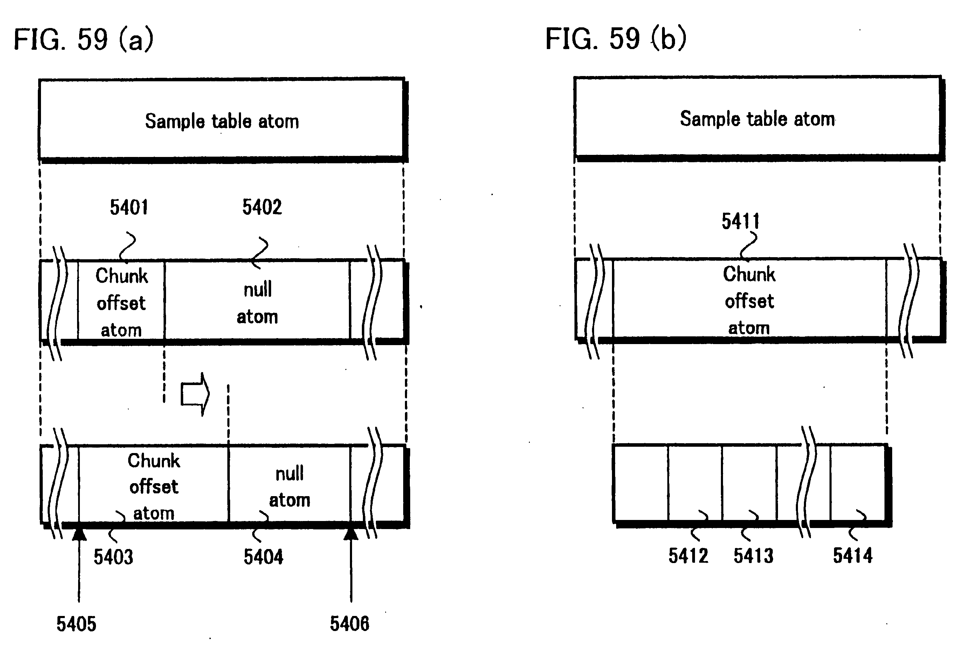

Still further, the present embodiment assumes that the update process causes increase or decrease in atom size of the Movie atom. Alternatively, it can be considered that for an atom which increases or decreases its size (e.g. edit atom and sample atom), a space of sufficient size is held at the initial recording of the AV Index file, and to an unassigned field, as illustrated in Figure 59(a), an ineffective atom (here termed "null atom") which is ignored at the time of reproduction is recorded. For example, when addition of sample information increases the amount of data of Chunk offset atom from chunk offset atom 5401 to chunk offset atom 5403 in Figure 59(a), the head of the null atom following the Chunk offset atom is shifted backward of the file for reduction of null atom size, which makes it possible to prevent change of the atom header of the high-order atom and change of Chunk offset caused by movement of the Movie data atom, i.e. increase of additionally rewritten data. Such an arrangement eliminates the need for division of the AV Index file and additional information for interpreting the contents of the AV Index file. Further, a head 5405 of an atom whose size increases or decreases and an end 5406 of null atom are aligned with sector boundaries, whereby it is possible to simplify the process.

Further, instead of insertion of ineffective atom into an unassigned field at the time of initial recording of the AV Index file, a sufficient number of empty samples may be registered, as illustrated in Figure 59(b). In the case of Figure 59(b), "1000" is recorded to number of entries 5412, a field managing the number of entries in chunk offset atom 5411, and 1000 entries are registered between entry data 5413 and entry data 5414. In the present case, in association with entry addition to the AV Index file, information regarding actual data is registered to the empty sample. As a method for indicating that the sample is empty, it can be considered to set codec information of the sample to invalid information. Alternatively, field may be reserved by managing an atom size in the atom header so as to be larger than an atom size corresponding to the number of entries actually managed. Further, head and bottom ends of the chunk offset atom are aligned with sector boundaries, whereby it is possible to simplify the process. Such an arrangement eliminates the need for division of the AV Index file and additional information for interpreting the contents of the AV Index file. Needless to say, these methods are also applicable to edit list atom, for example.

Also, needless to say, the update process described in the present embodiment is applicable to not only the AV Index file but also the AV file.

[Supplemental Descriptions Through All Of The Embodiments]

Note that, in the foregoing embodiments, DVD-R is used as a recording medium. However, needless to say, the present invention is applicable to a recording medium except for DVD-R, provided that the recording medium is a write-once recording medium. In addition, apart from the write-once recording medium, the present invention is also applicable to a recording medium which is put limitations on the number of times it is rewritten, e.g. flash ROM. Therefore, in the present embodiments, a unit for data management is sector. However, in the case where the present invention is applied to different recording media, the sector is replaced by data management/recording units of the respective recording media.

Note that, in the foregoing embodiments, UDF is used for a file system. However, a file system of the present invention is not limited to the UDF.

Further, in the foregoing embodiments, AV data such as audio data and video data is used as data. However, data of the present invention is not limited to the AV data.

Note that, in the foregoing embodiments, QuickTime file format is used as a file format. However, a file format of the present invention is not limited to the QuickTime file format.

As described above, according to the present invention, at the time of recording of additionally written data, information which manages availability/invalidity of an existing data is recorded, whereby the reuse of the existing data is possible, thus reducing wasted recording space.

Further, according to the present invention, at the time of recording of additionally written data, the same data as the existing data is recorded depending on the attribute of the existing data, whereby it is possible to read data having a particular attribute at a high speed, thus improving responses to the user.

Note that, specific manners or embodiments implemented in the best mode for carrying out the invention only show technical features of the present invention and are not intended to limit the scope of the invention which is defined in the appended claims.

INDUSTRIAL APPLICABILITY

The present invention relates to a data recording method, data recording device, data recording medium, data reproduction method, and data reproduction device, concerning recording video or audio data to a random-access storage medium such as a hard disk and an optical disk. In write-once media, there occurs wasted recording space at the time of update of an index file for AV file management. In view of this, a new index file is generated at the time of update, and thumbnail image data in an existing index file is referred to, whereby the wasted space is reduced, At the same time, attribute information is stored in the new index file, whereby access to minimum information required can be faster.

**Claims**

1. A data recording method, by means of a data recording device, the data recording method comprising the steps of:

changing records in a write-once data recording medium (106) including (a) sets of main data (2201, 2202, 2203) and (b) sets of index data (2204) each of which includes sets of index information (2212-2220) regarding the respective sets of main data, recorded thereon, wherein the sets of main data and the sets of index data are already-recorded data on the write-once recording medium, and changing records includes selection by a user of deletion and change of at least a part of the sets of main data;
generating new index data (2242) reflecting records changed;
determining whether or not the new index data (2242) includes the same index information as the set of index information (2212-2220) included in the index data (2204), in accordance with attributes of the set of index information (2212-2220), wherein the attributes comprise any of:

a) data amount of the index information,
b) hierarchical information of the index information,
c) priority of the index information, and
d) a time when the main data corresponding to the index information was reproduced; and

recording the generated new index data (2242) on the data recording medium (106),
the new index data (2242) including:

index information (2238) of which changes, due to changes of at least a part of the sets of main data, are needed;
among the sets of index information (2212-2220) of which changes, due to changes of at least a part of the sets of main data, are not needed, sets of index information (2232, 2235, 2233, 2236, 2234, 2237, 2239) which have been determined should be included in the new index data (2242), and
reference information for referring to, among the sets of index information (2212-2220) of which changes, due to changes of at least a part of the main data, are not needed, index information (2220) included in the index data (2204) which has been determined should not be included in the new index data (2242).

2. The data recording method according to claim 1, wherein:

whether or not the new index data (2242) includes the same data as the set of the index data (2204) is determined in accordance with hierarchical information of the index data ( 2204).

3. The data recording method according to claim 1, wherein:

whether or not the new index data (2242) includes the same data as the set of the index data (2204) is determined in accordance with priority of the index data (2204).

4. The data recording method according to claim 1, wherein:

whether or not the new index data (2242) includes the same data as the set of the index data (2204) is determined in accordance with a time at which data associated with the index data (2204) has been reproduced.

5. The data recording method according to claim 1, wherein:

the attributes of the index data (2204) is recorded on the recording medium (106).

6. The data recording method according to claim 1, wherein:

the set of main data (2201-2203) and the set of index data (2204) are managed as one file.

7. The data recording method according to claim 6, wherein:

the set of reference information is positional information of the set of the index data (2204) being available, inside the file.

**8.** The data recording method according to claim 6, wherein:

the set of reference information data is information which nullifies the set of the index data (2204).

**9.** The data recording method according to claims 1 to 8, wherein:

the set of reference information is recorded close to an additional writing end position on the recording medium (106).

**10.** The data recording method according to claims 1 to 9, wherein:

sets of further main data (2241) are recorded on the recording medium, and
each of the sets of the index data (2234, 2237, 2239) is information regarding the set of the further main data (2241).

**11.** The data recording method according to claim 10, wherein:

the information regarding the set of further main data (2241) is at least one of representative image data, representative audio data, title data, and attribute data of the set of further main data (2241).

**12.** A data recording device comprising:

record changing means which changes records in a write-once data recording medium (106) including (a) sets of main data (2201-2203) and (b) sets of index data (2204) each of which includes sets of index information (2212-2220) regarding the respective sets of main data, recorded thereon, wherein the sets of main data and the sets of index data are already-recorded data on the write-once recording medium, and changing records includes selection by a user of deletion and change of at least a part of the sets of main data;
index data generating means (101, 102) which, at the time of changing the records in the data recording medium (106), generates new index data (2242) reflecting the records changed, wherein whether or not the new index data (2242) includes the same index information as the set of index information included in the index data (2204) is determined in accordance with attributes of the set of index information, wherein the attributes comprise any of:

a) data amount of the index information,
b) hierarchical information of the index information,
c) priority of the index information, and
d) a time when the main data corresponding to the index information was reproduced; and

recording means (107, 109, 111, 113, 114, 117, 118, 101, 102) which records the generated new index data (2242) on the data recording medium (106),
the index data generating means (101, 102) causing the new index data (2242) to include:

index information (2238) of which changes, due to changes of at least a part of the sets of main data, are needed;
among the sets of index information (2212-2220) of which changes, due to changes of at least a part of the sets of main data, are not needed, sets of index information (2232, 2235, 2233, 2236, 2234, 2237, 2239) which have been determined should be included in the new index data (2242); and
reference information for referring to, among the sets of index information (2212-2220) of which changes, due to change of at least a part of the sets of main data, are not needed, index information (2220) included in the index data (2204) which has been determined should not be included in the new index data (2242).

**Patentansprüche**

**1.** Datenaufzeichnungsverfahren mittels einer Datenaufzeichnungsvorrichtung, wobei das Datenaufzeichnungsverfahren die Schritte enthält:

Ändern von Aufzeichnungen in einem einmal beschreibbaren Datenaufzeichnungsmedium (106), das darauf aufgezeichnete (a) Hauptdatensätze (2201, 2202, 2203) und (b) Indexdatensätze (2204), wovon jeder Indexin-

**24**

formationen (2212-2220) bezüglich der jeweiligen Hauptdatensätze aufweist, enthält, wobei die Hauptdatensätze und die Indexdatensätze bereits aufgezeichnete Daten auf dem einmal beschreibbaren Aufzeichnungsmedium sind, und das Ändern der Aufzeichnungen eine Auswahl des Löschens und Ändern mindestens eines Teils der Hauptdatensätze durch einen Anwender enthält;
Erzeugen von neuen Indexdaten (2242), die widerspiegeln, dass die Aufzeichnungen geändert wurden, Bestimmten, ob die neuen Indexdaten (2242) dieselben Indexinformationen wie der in den Indexdaten (2204) eingeschlossene Indexinformationssatz (2212-2220) gemäß den Attributen des Indexinformationssatzes (2212-2220) enthalten oder nicht, wobei die Attribute eines der Folgenden enthalten:

    a) Datenmenge der Indexinformationen,
    b) hierarchische Informationen der Indexinformationen,
    c) Priorität der Indexinformationen und
    d) eine Zeit, zu der die den Indexinformationen entsprechenden Hauptdaten erneut erzeugt wurden, und

Aufzeichnen der erzeugten neuen Indexdaten (2242) auf dem Datenaufzeichnungsmedium (106),
wobei die neuen Indexdaten (2242) enthalten;
Indexinformationen (2238), für die Änderungen bedingt durch die Änderungen mindestens eines Teils der Hauptdatensätze notwendig sind;
Indexinformationssätze (2232, 2235, 2233, 2236, 2234, 2237, 2239), für die unter den Indexinformationssätzen (2212-2220), für die Änderungen bedingt durch die Änderungen mindestens eines Teils der Hauptdatensätze nicht notwendig sind, bestimmt wurde, dass sie in den neuen Indexdaten (2242) enthalten sein sollten, und Referenzinformationen, um sich unter den Indexinformationssätzen (2212-2220), für die Änderungen bedingt durch Änderungen mindestens eines Teils der Hauptdaten nicht notwendig sind, auf die in den Indexdaten (2204) enthaltenen Indexinformationen (2220) zu beziehen, für die bestimmt wurde, dass sie nicht in den neuen Indexdaten (2242) enthalten werden sollten.

2. Datenaufzeichnungsverfahren nach Anspruch 1, wobei:

gemäß den hierarchischen Informationen der Indexdaten (2204) bestimmt wird, ob die neuen Indexdaten (2242) dieselben Daten wie der Indexdatensatz (2204) enthalten oder nicht.

3. Datenaufzeichnungsverfahren nach Anspruch 1, wobei:

gemäß der Priorität der Indexdaten (2204) bestimmt wird, ob die neuen Indexdaten (2242) dieselben Daten wie die Indexdaten (2204) enthalten oder nicht.

4. Datenaufzeichnungsverfahren nach Anspruch 1, wobei:

gemäß einer Zeit, zu der zu den Indexdaten (2204) gehörige Daten erneut erzeugt wurden, bestimmt wird, ob die neuen Indexdaten (2242) dieselben Daten wie der Indexdatensatz (2204) enthalten oder nicht.

5. Datenaufzeichnungsverfahren nach Anspruch 1, wobei:

die Attribute der Indexdaten (2204) auf dem Aufzeichnungsmedium (106) aufgezeichnet werden.

6. Datenaufzeichnungsverfahren nach Anspruch 1, wobei:

der Hauptdatensatz (2201-2203) und der Indexdatensatz (2204) als eine Datei verwaltet werden.

7. Datenaufzeichnungsverfahren nach Anspruch 6, wobei:

der Referenzinformationssatz Legeinformationen innerhalb einer Datei des verfügbaren Indexdatensatzes (2204) darstellt.

8. Datenaufzeichnungsverfahren nach Anspruch 6, wobei:

die Referenzinformationsdaten Informationen darstellen, die der Indexdatensatz (2204) ungültig machen.

9. Datenaufzeichnungsverfahren nach den Ansprüchen 1 bis 8, wobei:

   der Referenzinformationssatz sich dicht bei einer zusätzlichen Schreibendposition auf dem Aufzeichnungsmedium (106) befindet.

10. Datenaufzeichnungsverfahren nach den Ansprüchen 1 bis 9, wobei:

    Sätze von weiteren Hauptdaten (2241) auf dem Aufzeichnungsmedium aufgezeichnet werden und jedes der Indexdatensätze (2234, 2237, 2239) Informationen bezüglich des Satzes der weiteren Hauptdaten (2241) darstellt.

11. Datenaufzeichnungsverfahren nach Anspruch 10, wobei:

    die Informationen bezüglich des Satzes der weiteren Hauptdaten (2241) repräsentative Bilddaten und/oder repräsentative Audiodaten und/oder Titeldaten und/oderAttributdaten des Satzes der weiteren Hauptdaten (2241) sind.

12. Datenaufzeichnungsvorrichtung, die enthält:

    Aufzeichnungsänderungsmittel, die Aufzeichnungen in einem einmal beschreibbaren Datenaufzeichnungsmedium (106) ändern, das darauf aufgezeichnete (a) Hauptdatensätze (2201-2203) und (b) Indexdatensätze (2204), wovon jeder Indexinformationssätze (2212-2220) bezüglich der entsprechenden Hauptdatensätze aufweist, enthält, wobei die Hauptdatensätze und die Indexdatensätze bereits aufgezeichnete Daten auf dem einmal beschreibbaren Aufzeichnungsmedium sind, und das Ändern der Aufzeichnungen die Auswahl des Löschens und des Änderns mindestens eines Teils der Hauptdatensätze durch den Anwender enthält;
    Indexdatenerzeugungsmittel (101, 102), die zu der Zeit des Anderns der Aufzeichnungen in dem Datenaufzeichnungsmedium (106) neue Indexdaten (2242) erzeugen, die widerspiegeln, dass die Aufzeichnungen geändert wurden, wobei gemäß den Attributen des Indexinformationssatzes bestimmt wird, ob die neuen Indexdaten (2242) dieselben Indexinformationen wie der in den Indexdaten (2204) enthaltene Indexinformationssatz enthalten oder nicht, wobei die Attribute eines der Folgenden enthalten:

    a) Datenmenge der Indexinformationen,
    b) hierarchische Informationen der Indexinformationen,
    c) Priorität der Indexinformationen und
    d) eine Zeit, zu der die den Indexinformationen entsprechenden Hauptdaten erneut erzeugt wurden; und

    Aufzeichnungsmittel (107, 109, 111, 113, 114, 117, 118, 101, 102), die die erzeugten neuen Indexdaten (2242) auf das Datenaufzeichnungsmedium (106) aufzeichnen,
    Indexdatenerzeugungsmittel (101, 102), die bewirken, dass die neuen Indexdaten enthalten.
    Indexinformationen (2238), für die Änderungen bedingt durch Änderungen mindestens eines Teils der Hauptdatensätze notwendig sind;
    Indexinformationssätze (2232, 2235, 2233, 2236, 2234, 2237, 2239) unter den indexinformationssätzen (2212-2220), für die Änderungen bedingt durch Änderungen mindestens eines Teils der Hauptdatensätze nicht notwendig sind, für die bestimmt wurde, dass sie in den neuen Indexdaten (2242) enthalten sein sollten; und
    Referenzinformationen, um sich unter den Indexinformationssätzen (2212-2220), für die Änderungen bedingt durch eine Änderung mindestens eines Teils der Hauptdatensätze nicht notwendig sind, auf in den Indexdaten (2204) eingeschlossene Indexinformationen (2220) zu beziehen, für die bestimmt wurde, dass sie nicht in den neuen Indexdaten (2242) enthalten sein sollten.

## Revendications

1. Procédé d'enregistrement de données à l'aide d'un dispositif d'enregistrement de données, le procédé d'enregistrement de données comprenant les étapes consistant à :

   modifier des enregistrements dans un support d'enregistrement de données non réinscriptible (106) qui comprend (a) des ensembles de données principales (2201, 2202, 2203), et (b) des ensembles de données d'index (2204), chacun d'eux comprenant des ensembles d'informations d'index (2212-2220) se rapportant aux ensembles respectifs de données principales, stockées à l'intérieur, dans lequel les ensembles de données principales et les ensembles de données d'index sont des données déjà enregistrées sur le support d'enregistrement non réinscriptible, et la modification des enregistrements comprend la sélection par un utilisateur d'un effacement et d'une modification d'une partie au moins des ensembles de données principales ;

générer de nouvelles données d'index (2242) qui reflètent les enregistrements modifiés ;

déterminer si les nouvelles données d'index (2242) comprennent ou pas les mêmes informations d'index que l'ensemble d'informations d'index (2212-2220) incluses dans les données d'index (2204), selon des attributs de l'ensemble d'informations d'index (2212-2220), les attributs comprenant n'importe lequel des éléments suivants :

a) une quantité de données des informations d'index ;
b) des informations hiérarchiques des informations d'index ;
c) une priorité des informations d'index ; et
d) un moment où les données principales correspondant aux informations d'index ont été reproduites ; et

enregistrer les nouvelles données d'index générées (2242) sur le support d'enregistrement de données (106) ;
les nouvelles données d'index (2242) comprenant :

des informations d'index (2238) dont les modifications, en raison des modifications d'une partie au moins des ensembles de données principales, sont nécessaires ;
parmi les ensembles d'informations d'index (2212-2220) dont les modifications, en raison des modifications d'une partie au moins des ensembles de données principales, ne sont pas nécessaires, des ensembles d'informations d'index (2232, 2235, 2233, 2236, 2234, 2237, 2239) qui ont été déterminées comme devant être incluses dans les nouvelles données d'index (2242) ; et
des informations de référence pour se référer, parmi les ensembles d'information d'index (2212-2220) dont les modifications, en raison des modifications d'une partie au moins des données principales, ne sont pas nécessaires, à des informations d'index (2220) incluses dans les données d'index (2204) qui ont été déterminées comme ne devant pas être incluses dans les nouvelles données d'index (2242).

2. Procédé d'enregistrement de données selon la revendication 1, dans lequel :

le fait que les nouvelles données d'index (2242) comprennent ou pas les mêmes données que l'ensemble des données d'index (2204), est déterminé selon les informations hiérarchiques des données d'index (2204).

3. Procédé d'enregistrement de données selon la revendication 1, dans lequel :

le fait que les nouvelles données d'index (2242) comprennent ou pas les mêmes données que l'ensemble des données d'index (2204), est déterminé selon la priorité des données d'index (2204).

4. Procédé d'enregistrement de données selon la revendication 1, dans lequel :

le fait que les nouvelles données d'index (2242) comprennent ou pas les mêmes données que l'ensemble des données d'index (2204), est déterminé selon le moment où les données associées aux données d'index (2204) ont été reproduites.

5. Procédé d'enregistrement de données selon la revendication 1, dans lequel :

les attributs des données d'index (2204) sont enregistrés sur le support d'enregistrement (106).

6. Procédé d'enregistrement de données selon la revendication 1, dans lequel:

l'ensemble de données principales (2201-2203) et l'ensemble de données d'index (2204) sont gérés sous la forme d'un fichier.

7. Procédé d'enregistrement de données selon la revendication 6, dans lequel:

l'ensemble des informations de référence sont les informations de position de l'ensemble des données d'index (2204) disponibles, à l'intérieur du fichier.

**8.** Procédé d'enregistrement de données selon la revendication 6, dans lequel :

l'ensemble des données des informations de référence sont les informations qui annulent l'ensemble des données d'index (2204).

**9.** Procédé d'enregistrement de données selon l'une quelconque des revendications 1 à 8, dans lequel :

l'ensemble des informations de référence sont enregistrées à proximité d'une position de fin d'écriture supplémentaire sur le support d'enregistrement (106).

**10.** Procédé d'enregistrement de données selon l'une quelconque des revendications 1 à 9, dans lequel :

des ensembles d'autres données principales (2241) sont enregistrés sur le support d'enregistrement ; et chacun des ensembles de données d'index (2234, 2237, 2239) sont les informations qui se rapportent à l'ensemble des autres données principales (2241).

**11.** Procédé d'enregistrement de données selon la revendication 10, dans lequel :

les informations qui se rapportent à l'ensemble des autres données principales (2241) sont des données d'image représentatives et/ou des données audio représentatives et/ou des données de titre et/ou des données d'attribut de l'ensemble des autres données principales (2241).

**12.** Dispositif d'enregistrement de données comprenant:

des moyens de modifications d'enregistrement qui modifient des enregistrements dans un support d'enregistrement de données non réinscriptible (106) qui comprend (a) des ensembles de données principales (2201-2203), et (b) des ensembles de données d'index (2204), chacun d'eux comprenant des ensembles d'informations d'index (2212-2220) se rapportant aux ensembles respectifs de données principales, stockées à l'intérieur, dans lequel les ensembles de données principales et les ensembles de données d'index sont des données déjà enregistrées sur le support d'enregistrement non réinscriptible, et la modification des enregistrements comprend la sélection par un utilisateur d'un effacement et d'une modification d'une partie au moins des ensembles de données principales ;
des moyens de génération de données d'index (101, 102) qui, au moment de la modification des enregistrements dans le support d'enregistrement de données (106), génèrent de nouvelles données d'index (2242) qui reflètent les enregistrements modifiés, dans lequel le fait que les nouvelles données d'index (2242) comprennent ou pas les mêmes informations d'index que l'ensemble d'informations d'index inclus dans les données d'index (2204), est déterminé selon des attributs de l'ensemble des informations d'index, les attributs comprenant n'importe lequel des éléments suivants :

a) une quantité de données des informations d'index ;
b) des informations hiérarchiques des informations d'index ;
c) une priorité des informations d'index; et
d) un moment où les données principales correspondant aux informations d'index ont été reproduites ; et

des moyens d'enregistrement (107, 109, 111, 113, 114, 117, 118, 101, 102) qui enregistrent les nouvelles données d'index générées (2242) sur le support d'enregistrement de données (106) ;
les moyens de génération de données d'index (101, 102) permettant aux nouvelles données d'index (2242) de comprendre :

des informations d'index (2238) dont les modifications, en raison des modifications d'une partie au moins des ensembles de données principales, sont nécessaires ;
parmi les ensembles d'informations d'index (2212-2220) dont les modifications, en raison des modifications d'une partie au moins des ensembles de données principales, ne sont pas nécessaires, des ensembles d'informations d'index (2232, 2235, 2233, 2236, 2234, 2237, 2239) qui ont été déterminées comme devant être incluses dans les nouvelles données d'index (2242) ; et
des informations de référence pour se référer, parmi les ensembles d'information d'index (2212-2220) dont les modifications, en raison des modifications d'une partie au moins des ensembles de données principales, ne sont pas nécessaires, à des informations d'index (2220) incluses dans les données d'index (2204) qui ont été déterminées comme ne devant pas être incluses dans les nouvelles données d'index (2242).

# FIG. 1

# FIG. 2 (a)

# FIG. 2 (b)

# FIG. 2 (c)

AH: Atom Header

EP 1 486 979 B1

## FIG. 3

```
Movie atom {
        Atom size
        Type(='moov')
        Movie header atom
        Track atom (video track)
        Track atom (main audio track)
                    :
        User data atom
}
```

## FIG. 4

```
Track atom {
        Atom size
        Type(='trak')
        Track header  atom
        Edit atom
        Track reference atom
        Media atom
        User data atom
                    :
}
```

## FIG. 5

```
Track header atom {
        Atom size
        Type(='tkhd')
        Version
        Flags
        Creation time
        Modification time
        Track ID
        Reserved
        Duration
        Reserved
        Layer
        Alternate group
        Volume
        Reserved
        Matrix structure
        Track width
        Track height
}
```

FIG. 6

```
Media atom {
        Atom size
        Type(='mdia')
        Media header atom
        Handler reference atom
        Media information atom
        User data atom
                    :
}
```

## FIG. 7

```
Media information atom {
        Atom size
        Type(='minf')
        {Video or Sound or Base} media information header atom
        Handler reference atom
        Data information atom
        Sample table atom
}
```

EP 1 486 979 B1

FIG. 8

FILE 901

chunk#1

chunk#n

chunk#n

chunk offset

sample#j

sample#i

sample size

EP 1 486 979 B1

FIG. 9

```
Sample table atom {
        Atom size
        Type(='stbl')
        Sample description atom
        Time-to-sample atom
        Sync sample atom
        Sample-to-chunk atom
        Sample size atom
        Chunk offset atom
}
```

## FIG. 10

```
Edit atom {
        Atom size
        Type(='edts')
        Edit list atom
}


Edit list atom {
        Atom size
        Type(='elst')
        Versions
        Flags
        Number of entries(=N)
        for (i = 0; i < N; i++){
                Track duration
                Media time
                Media rate
        }
}
```

## FIG. 11 (a)

| Entry Number | Track duration D(i) | Media time T(i) | Media rate R(i) |
|---|---|---|---|
| #1 | 13000 | 20000 | 1 |
| #2 | 5000 | −1 | 1 |
| #3 | 10000 | 0 | 1 |

## FIG. 11 (b)

Sample

| #1 | #2 | #3 | #4 | #5 | ···· | #m | #m+1 | #m+2 | ···· | #n | #n+1 |

T(2)=0

T(1)=20000

TIME

## FIG. 11 (c)

D(1)=13000    D(2)=5000    D(3)=10000

REPRODUCTION IN REALITY

| #m+2 | ···· | #n | #n+1 | #n+2 | null | #1 | #2 | #3 | #4 | #5 |

TIME

EP 1 486 979 B1

# FIG. 12

```
User data atom {
        Atom size
        Type(='udta')
        for (i=0;i<N; i++){
                Atom size
                Type
                User data
        }
}
```

# FIG. 13

FILE

| Movie atom | Movie data atom#1 | Movie fragment atom#1 | ~ | Movie data atom#M | Movie fragment atom#M |
|---|---|---|---|---|---|

**Movie atom**

- Movie extents atom
  - Track extents atom#1
  - Track extents atom#2

**Movie fragment atom**

- Movie fragment header atom
- Track Fragment atom#1
  - Track fragment header atom
  - Track fragment run atom#1
  - ⟨
  - Track fragment run atom#N
- Track fragment atom#2

EP 1 486 979 B1

## FIG. 14

```
Movie extends atom {
        Atom size
        Type(='mvex')
        version
        flags
        for (i=0; i<n; i++){
                    Track extends atom
        }
}
```

## FIG. 15

```
Track extends atom {
        Atom size
        Type(='trex')
        version
        flags
        track-ID
        default-sample-description-index
        default-sample-duration
        default-sample-size
        default-sample_flags
}
```

## FIG. 16

```
Movie fragment atom {
        Atom size
        Type(='moof')
        version
        flags
        Movie fragment header atom
        for (i=0; i<n; i++){
                Track fragment atom
        }
}
```

## FIG. 17

```
Movie fragment header atom {
        Atom size
        Type(='mfhd')
        version
        flags
        sequence-number
}
```

## FIG. 18

```
Track fragment atom {
        Atom size
        Type(='traf')
        version
        flags
        Track fragment header atom
        for (i=0; i<n; i++){
                Track fragment run atom
        }
}
```

## FIG. 19

```
Track fragment header atom {
        Atom size
        Type(='tfhd')
        version
        flags
        track-ID
        base-data-offset
        sample-description-index
        default-sample-duration
        default-sample-size
        default-sample-flags
}
```

## FIG. 20

```
Track fragment run atom {
        Atom size
        Type(='trun')
        version
        flags
        sample-count(=N)
        data-offset
        first-sample-flags
        for (i=0; i<N; i++){
                sample-duration
                sample-size
                sample-flags
                sample-composition-time-offset
        }
}
```

## FIG. 21

| AV STREAM |
|---|

| Continuous Unit(CU)#1 | Continuous Unit(CU) #2 | Continuous Unit(CU) #3 | .... | Continuous Unit(CU) #L |
|---|---|---|---|---|

| Video Unit(VU)#1 | Video Unit(VU)#2 | .... | Video Unit(VU)#M |
|---|---|---|---|

EP 1 486 979 B1

EP 1 486 979 B1

# FIG. 22

AAU: Audio Access Unit
SH: Sequence Header

47

# FIG. 23

| Video Unit (VU) | | | | | | |
|---|---|---|---|---|---|---|

| AAU | .. | AAU | SH | GOP | .. | GOP |
|---|---|---|---|---|---|---|

| Sample | .. | Sample |
|---|---|---|

| Main Audio Chunk | Video Chunk |
|---|---|

AAU:   Audio Access Unit
GOP:   Group Of Pictures
SH:    Sequence Header

EP 1 486 979 B1

# FIG. 24

EP 1 486 979 B1

FIG. 25 (a)

FIG. 25 (b)

EP 1 486 979 B1

FIG. 26

FIG. 27

1740

| | Movie atom1791 | Movie data atom1792 |

Time →

| | | | | | | |
|---|---|---|---|---|---|---|
| Property track1793 | 1701 | 1702 | 1703 | 1704 | ·· | 1705 |
| Title track1794 | 1711 | 1712 | 1713 | 1714 | ·· | 1715 |
| Thumbnail track1795 | 1721 | 1722 | 1723 | 1724 | ·· | 1725 |
| Intro music track1796 | 1731 | 1732 | 1733 | 1734 | ·· | 1735 |

1741   1742   1743   1744   1745

EP 1 486 979 B1

# FIG. 28

```
Property Entry {
        version
        flags
        entry-number
        creation-time
        modification-time
        duration
        file-identifier
}
```

FIG. 29

EP 1 486 979 B1

| Bit | Flag Name | Value | Description |
|---|---|---|---|
| 0 | Status of Entry | 0 | available |
| | | 1 | invalid |
| 1:23 | reserved | | |

# FIG. 30

START

READ FILE SYSTEM MANAGEMENT INFORMATION

S2001 — PERFORM INDEX SCREEN DISPLAY PROCESS

S2002 — AV Index RECORDING TIMING?

NO → S2008 ANY INSTRUCTION? NO

YES

S2003 — RECORD AV Index

VARIOUS PROCESSES — S2009

S2004 — RECORD FILE AND DIRECTORY INFORMATION

PERFORM INDEX SCREEN DISPLAY UPDATE PROCESS — S2019

S2005 — POWER-OFF / EJECT?

NO

YES

S2006 — RECORD VAT

S2007 — RECORD Border out

END

# FIG. 31

VARIOUS PROCESSES

S2010
INSTRUCTION = RECORDING? — NO

YES

S2012
INSTRUCTION = ENTRY DELETION? — NO

YES

S2014
INSTRUCTION = CHANGE OF THUMBNAIL OR OTHERS? — NO

YES

S2011
RECORDING PROCESS

S2013
ENTRY DELETION PROCESS

S2015
THUMBNAIL OR OTHERS CHANGE PROCESS

S2016
OTHER PROCESS

END

EP 1 486 979 B1

## FIG. 32 (a)

📁 <root>

├── 📄 SHRP0001.MOV

├── 📄 SHRP0002.MOV

├── 📄 SHRP0003.MOV

└── 📄 AVIF0000.MOV

## FIG. 32 (b)

| | 2201 | | 2202 | | 2203 | | 2204 | 2205 | 2206 | |
|---|---|---|---|---|---|---|---|---|---|---|---|

| | AV file | | AV file | | AV file | | AV Index file | | ▨ | |

ALREADY-RECORDED
SECTIONS

| Movie atom | ATTRIBUTE INFORMATION | ATTRIBUTE INFORMATION | ATTRIBUTE INFORMATION | TITLE | TITLE | TITLE | REPRESENTATIVE IMAGE | REPRESENTATIVE IMAGE | REPRESENTATIVE IMAGE |
|---|---|---|---|---|---|---|---|---|---|
| 2211 | 2212 | 2213 | 2214 | 2215 | 2216 | 2217 | 2218 | 2219 | 2220 |

EP 1 486 979 B1

# FIG. 33

EP 1 486 979 B1

| LINE NUMBER | ATTRIBUTE INFORMATION | | | AV FILE NAME | REPRESENTATIVE IMAGE DATA RECORDING LOCATION | REPRESENTATIVE IMAGE DATA POINTER |
|---|---|---|---|---|---|---|
| | entry-number | status of entry | ... | | | |
| 0 | 1 | available | ... | SHRP0001.MOV | AVIF0000.MOV | P1 |
| 1 | 2 | available | ... | SHRP0002.MOV | AVIF0000.MOV | P2 |
| 2 | 3 | available | ... | SHRP0003.MOV | AVIF0000.MOV | P3 |

FIG. 34 (a)

↓ SECTOR BOUNDARY

2111　　　　　　　2112　　　　　　　2113

AV stream | Movie atom | SKIP | FE

ALREADY-RECORDED SECTION

2100　　　　　2101　　2102　2103　2104

FIG. 34 (b)

AV FILE

Movie atom | SKIP | AV stream

2101　　2102　2103　　2100

EP 1 486 979 B1

## FIG. 35

| LINE NUMBER | ATTRIBUTE INFORMATION | | | AV FILE NAME | REPRESENTATIVE IMAGE DATA RECORDING LOCATION | REPRESENTATIVE IMAGE DATA POINTER |
| --- | --- | --- | --- | --- | --- | --- |
| | entry-number | status of entry | ... | | | |
| 0 | 1 | available | ... | SHRP0001.MOV | AVIF0000.MOV | P1 |
| 1 | 2 | available | ... | SHRP0002.MOV | AVIF0000.MOV | P2 |
| 2 | 3 | available | ... | SHRP0003.MOV | AVIF0000.MOV | P3 |
| 3 | 4 | available | ... | SHRP0004.MOV | NULL | P4 |

## FIG. 36

| LINE NUMBER | ATTRIBUTE INFORMATION | | | AV FILE NAME | REPRESENTATIVE IMAGE DATA RECORDING LOCATION | REPRESENTATIVE IMAGE DATA POINTER |
| --- | --- | --- | --- | --- | --- | --- |
| | entry-number | status of entry | ... | | | |
| 0 | 1 | available | ... | SHRP0001.MOV | AVIF0000.MOV | P1 |
| 1 | 2 | available | ... | SHRP0002.MOV | AVIF0000.MOV | P2 |
| 2 | 3 | available | ... | SHRP0003.MOV | AVIF0000.MOV | P3 |
| 3 | 4 | available | ... | SHRP0004.MOV | NULL | P4 |
| 4 | 1 | invalid | ... | NULL | NULL | NULL |

EP 1 486 979 B1

FIG. 37

| LINE NUMBER | ATTRIBUTE INFORMATION | | | AV FILE NAME | REPRESENTATIVE IMAGE DATA RECORDING LOCATION | REPRESENTATIVE IMAGE DATA POINTER |
|---|---|---|---|---|---|---|
| | entry-number | status of entry | ... | | | |
| 0 | 1 | available | ... | SHRP0001.MOV | AVIF0000.MOV | P1 |
| 1 | 2 | available | ... | SHRP0002.MOV | AVIF0000.MOV | P2 |
| 2 | 3 | available | ... | SHRP0003.MOV | AVIF0000.MOV | P3 |
| 3 | 4 | available | ... | SHRP0004.MOV | NULL | P4 |
| 4 | 1 | invalid | ... | NULL | NULL | NULL |
| 5 | 2 | available | | NO CHANGE | NULL | P5 |

EP 1 486 979 B1

# FIG. 38

```
                    ┌──────────┐
                    │  START   │
                    └──────────┘
                         │
                         ▼
           NO       ╱─────────────╲
          ◄────────╱ SAME entry-   ╲
                   ╲  numbers?      ╱ ⟋ S2401
                    ╲─────────────╱
                         │ YES
                         ▼
                    ┌──────────┐
                    │  UNIFY   │ ⟋ S2402
                    └──────────┘
                         │
                         ▼
              ┌─────────────────────┐
              │  REMOVE ENTRY IN    │
              │  DELETED STATE      │ ⟋ S2403
              └─────────────────────┘
                         │
                         ▼
              ┌─────────────────────┐
              │ ESTABLISH sample table│ ⟋ S2404
              └─────────────────────┘
                         │
                         ▼
              ┌─────────────────────┐
              │  RECORD Movie atom   │ ⟋ S2405
              └─────────────────────┘
                         │
                         ▼
              ┌─────────────────────┐
              │  RECORD ATTRIBUTE   │
              │ INFORMATION, TITLE  │ ⟋ S2406
              │  CHARACTER STRING   │
              └─────────────────────┘
                         │
                         ▼
              ┌─────────────────────┐
              │     RECORD          │
              │ REPRESENTATIVE IMAGE│ ⟋ S2407
              │   AND AUDIO DATA    │
              └─────────────────────┘
                         │
                         ▼
                    ┌──────────┐
                    │   END    │
                    └──────────┘
```

FIG. 39

EP 1 486 979 B1

# FIG. 40

START

S2300 — OPEN THE LATEST AV Index FILE

S2301 — ACQUIRE Sample table

S2302 — ACQUIRE TITLE AND ATTRIBUTE

S2303 — SCHEDULING

S2304 — ANY AVAILABLE THUMBNAIL EXISTS?

NO

YES

S2305 — READ THUMBNAIL

S2306 — CLOSE FILE

S2307 — ACQUIRE NAME OF FILE TO BE OPENED NEXT

S2308 — FINISHED READING OF LAST FILE?

YES

NO

S2309 — OPEN FILE

END

## FIG. 41

```
Property Entry {
        version
        flags
        entry-number
        creation-time
        modification-time
        duration
        priority
        file-identifier
}
```

## FIG. 42

```
index link atom {
        Atom size
        Type
        previous
        next
}
```

# FIG. 43

```
        ┌──────────────┐
        │    START     │
        └──────────────┘
                │
                ▼
        ╔══════════════════════════════╗
  NO    ║  ANY ITEM HAVING NO CHANGE?  ║── S3101
    ◄───╚══════════════════════════════╝
    │           │ YES
    │           ▼
    │   ┌──────────────┐
    │   │    UNIFY     │── S3102
    │   └──────────────┘
    │           │
    │           └──────────────┐
    │                          │
    ▼                          │
┌──────────────────────┐
│ ESTABLISH Sample table│── S3103
└──────────────────────┘
            │
            ▼
┌──────────────────────┐
│  RECORD Movie atom   │── S3104
└──────────────────────┘
            │
            ▼
┌──────────────────────┐
│  RECORD ATTRIBUTE    │
│  INFORMATION, TITLE  │
│ CHARACTER STRING DATA,│
│    REPRESENTATIVE    │── S3105
│   IMAGE DATA, AND    │
│    REPRESENTATIVE    │
│     AUDIO DATA       │
└──────────────────────┘
            │
            ▼
      ┌──────────────┐
      │     END      │
      └──────────────┘
```

# FIG. 44

EP 1 486 979 B1

EP 1 486 979 B1

## FIG. 45 (a)

3301　3302　　3303　3307　　3304　3305

| | AV Index file | | | AV Index file | | | AV Index file | |

| Movie atom | ATTRIBUTE INFORMATION | ATTRIBUTE INFORMATION | REPRESENTATIVE IMAGE | REPRESENTATIVE IMAGE | | Movie atom | ATTRIBUTE INFORMATION | REPRESENTATIVE IMAGE |

3311　3312　3313　3314　3315　　3316　3317　3318

## FIG. 45 (b)

3301　3302　　3303　3307　　3304　3305　3306

| | AV Index file | | | AV Index file | | | AV Index file | | AV Index file | |

| Movie atom | ATTRIBUTE INFORMATION | ATTRIBUTE INFORMATION | ATTRIBUTE INFORMATION | REPRESENTATIVE IMAGE | REPRESENTATIVE IMAGE | REPRESENTATIVE IMAGE |

3321　3322　3323　3324　3325　3326　3327

# FIG. 46

```
              ┌──────────┐
              │  START   │
              └──────────┘
                   │
                   ▼
         ┌─────────────────┐
S3201    │  OPEN LATEST    │
         │  AV Index FILE  │
         └─────────────────┘
                   │
                   ▼ ◄──────────────────────┐
         ┌─────────────────┐                │
S3203    │ ACQUIRE Sample  │                │
         │     table       │                │
         └─────────────────┘                │
                   │                        │
                   ▼                        │
      NO    ◇─────────────────◇             │
   ◄────────ANY AVAILABE ENTRY  S3204       │
   │        EXISTS?                          │
   │              │ YES                      │
   │              ▼                          │
   │    ┌─────────────────┐                 │
   │S3205│  READ TITLE,   │                 │
   │    │  ATTRIBUTE,     │                 │
   │    │  AND THUMBNAIL  │─────────────────┘
   │    └─────────────────┘
   │
   ▼
         ┌─────────────────┐
S3206    │   CLOSE FILE    │
         └─────────────────┘
                   │
                   ▼
         ┌─────────────────┐
         │ ACQUIRE NAME OF │
S3207    │  FILE TO BE     │
         │  OPENED NEXT    │
         └─────────────────┘
                   │
                   ▼
   YES    ◇─────────────────◇
  ◄───────FINISHED READING    S3208
  │       OF LAST FILE?
  │              │ NO
  │              ▼
  │    ┌─────────────────┐
  │S3209│   OPEN FILE    │
  │    └─────────────────┘
  │              │
  │◄─────────────┘
  ▼
         ┌──────────┐
         │   END    │
         └──────────┘
```

## FIG. 47

| Bit | Flag Name | Value | Description |
|-----|-----------|-------|-------------|
| 0 | Status of Entry | 0 | available |
| | | 1 | invalid |
| 1 | Status of Thumbnail | 0 | available |
| | | 1 | invalid |
| 2 | Status of Title | 0 | available |
| | | 1 | invalid |
| 3 | Status of Intro music | 0 | available |
| | | 1 | invalid |
| 4:23 | reserved | | |

EP 1 486 979 B1

# FIG. 48

# FIG. 49

ALREADY-RECORDED
SECTIONS

4201 4202 4203 4204 4205 4206

| AV file | AV file | AV file | | | |

| Movie atom | ATTRIBUTE INFORMATION | ATTRIBUTE INFORMATION | ATTRIBUTE INFORMATION | TITLE | TITLE | TITLE | REPRESENTATIVE IMAGE | REPRESENTATIVE IMAGE | REPRESENTATIVE IMAGE | Movie fragment atom | |
| 4211 | 4212 | 4213 | 4214 | 4215 | 4216 | 4217 | 4218 | 4219 | 4220 | 4221 | 4222 |

EP 1 486 979 B1

# FIG. 50

```
                    ┌─────────────┐
                    │    START    │
                    └─────────────┘
                           │
          ┌────────────────┼──────────────────────────┐
          │                ▼                           │
          │         ╱╲                                 │
   NO     │       ╱    ╲                               │
  ◄───────┤     ╱ ANY ITEM  ╲                          │
          │   ╱   HAVING      ╲──────  S4301           │
          │     ╲ NO CHANGE? ╱                         │
          │       ╲        ╱                           │
          │         ╲    ╱                             │
          │           ╲╱                               │
          │            │ YES                           │
          │            ▼                               │
          │     ┌─────────────┐                        │
          │     │    UNIFY    │──────  S4302           │
          │     └─────────────┘                        │
          │            │                               │
          │            └───────────────────────────────┘
          │
          │     ┌──────────────────────┐
          └────►│ ESTABLISH Sample table│──────  S4303
                └──────────────────────┘
                           │
                           ▼
                ┌──────────────────────┐
                │    RECORD Movie       │──────  S4304
                │     data atom         │
                └──────────────────────┘
                           │
                           ▼
                ┌──────────────────────┐
                │    RECORD Movie       │──────  S4305
                │   fragment atom       │
                └──────────────────────┘
                           │
                           ▼
                    ┌─────────────┐
                    │     END     │
                    └─────────────┘
```

FIG. 51 (a) 4201    4202    4203    4204  4205  4206  4241  4242

| AV file | AV file | AV file | | | | AV file | |

4211

4222  4230  4231  4232  4233  4234    4235    4236    4237    4238  4239

| | | | ATTRIBUTE INFORMATION | ATTRIBUTE INFORMATION | ATTRIBUTE INFORMATION | TITLE | TITLE | REPRESENTATIVE IMAGE | REPRESENTATIVE IMAGE | Movie fragment atom | |

FIG. 51 (b)

AV Index FILE

4211    4222 4230    4239

EP 1 486 979 B1

# FIG. 52

START

S4401 — OPEN AV Index FILE

S4402 — READ Movie atom

S4403 — BOTTOM OF FILE? —NO→ Movie fragment? (S4405)

BOTTOM OF FILE? —YES→ DISPLAY INDEX SCREEN (S4404) → END

Movie fragment? —YES→ READ Movie fragment atom (S4406) → READ Movie data atom (S4407)

Movie fragment? —NO→ MOVE TO HEAD OF NEXT atom (S4408)

EP 1 486 979 B1

## FIG. 53 (a)

AV Index FILE

5101    5102

| Movie atom | atom header | | ATTRIBUTE INFORMATION | | |

5103

5104

| | CHANGE- REQUIRED PART | |

## FIG. 53 (b)

AV Index FILE

5111    5112    5113

| Movie atom | POST- CHANGE Atom header | | POST-CHANGE ATTRIBUTE INFORMATION | | |

5114

| | CHANGE RESULT | |

# FIG. 54

## FIG. 55 (a)

| 5101 | 5102 | | |
|------|------|---|---|
| Movie atom | atom header | | |

DATA ADDITION POINT
5301

## FIG. 55 (b)

| 5101 | 5122 | | | 5302 |
|------|------|---|---|------|
| Movie atom | POST-CHANGE Atom header | | | ADDITIONAL ENTRY DATA |

| | ADDITIONAL MANAGEMENT INFORMATION | |
|---|---|---|

5303

DATA ADDITION POINT
5301

# FIG. 56

5221  5222  5223  5224

R11   R12   R13

SECTOR

R14   R15

5311      5313

DATA ADDITION POINT
5301

| | ADDITIONAL MANAGEMENT INFORMATION | | |

5311      5303      5313   5314

ADDITIONAL
ENTRY DATA

5302

EP 1 486 979 B1

FIG. 57 (a)   AV Index FILE

5320

5314

R11    R14    R13    R15

FIG. 57 (b)

PARTIAL
AV Index FILE

5321

5313

5311   5303

R11

PARTIAL
AV Index FILE

5324

R13    R15

FIG. 58

5221  5222  5223  5224

R11  R21  R22

R23  R16

SECTOR

5311  5321  5322

DATA
ADDITION
POINT
5301

PADDING
INSERTABLE
POINT
5320

ADDITIONAL
MANAGEMENT
INFORMATION

5311  5303  5321  5323  5322

ADDITIONAL
ENTRY DATA

5302

EP 1 486 979 B1

# FIG. 59 (a)

Sample table atom

5401      5402

| Chunk offset atom | null atom |

⇨

| Chunk offset atom | null atom |

▲      ▲

5403      5404

5405               5406

# FIG. 59 (b)

Sample table atom

5411

| Chunk offset atom |

5412   5413      5414

EP 1 486 979 B1

# FIG. 60

DISK 305

INDEX FILE 300

| ENTRY | 1 | 2 | 3 |
|---|---|---|---|
| FILE NAMES | FILE 301 | FILE 302 | FILE 303 |
| REDUCED IMAGES | 311 | 312 | 313 |

CONTENTS FILE 301    CONTENTS FILE 302    CONTENTS FILE 303

CONTENTS SELECTION SCREEN 307

| 321 | 322 |
| 323 |

USER

MANAGEMENT
INFORMATION

EP 1 486 979 B1

**EP 1 486 979 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2001084705 A
- JP TOKUKAI200184705 B
- WO 02077865 A
- EP 1085515 A